# EUROPEAN PATENT SPECIFICATION

(11) **EP 3 943 322 B1**
(45) Date of publication and mention of the grant of the patent: **29.11.2023**
(21) Application number: 21203926.7
(22) Date of filing: 21.10.2021
(51) Int. Cl.: B60H 1/00, B60H 1/32

(54) **THERMAL MANAGEMENT SYSTEM, CONTROL METHOD THEREFOR, AND VEHICLE**
WÄRMEMANAGEMENTSYSTEM FÜR EIN FAHRZEUG UND STEUERVERFAHREN FÜR DESSEN BETRIEB
SYSTÈME DE GESTION THERMIQUE, SON PROCÉDÉ DE COMMANDE ET VÉHICULE

(30) Priority: 16.06.2021 CN 202110666208
(43) Date of publication of application: 26.01.2022
(73) Proprietor: GUANGZHOU XIAOPENG MOTORS TECHNOLOGY CO., LTD., Guangzhou 510000 (CN)
(72) Inventor: ZHANG, Dongbin, Guangzhou (CN)
(74) Representative: Yip, Matthew Wing Yu

(56) References cited:
- WO-A1-2014/143621
- CN-A- 112 389 155
- CN-A- 112 498 046
- CN-A- 113 246 689

## Description

### Field of Invention

The present invention relates to the field of vehicle technologies, and in particular, to a thermal management system, a control method therefor, and a vehicle.

### Background

In related technologies, in an environment of high humidity, when a vehicle uses a heat pump system to heat a battery or a passenger compartment for a long time, an outdoor heat exchanger tends to accumulate frost and ice, resulting in insufficient heating capacity. Therefore, how to effectively deice the outdoor heat exchanger has become a technical problem studied by technicians. CN 112389155 A discusses an integrated thermal management module for a vehicle. WO 2014/143621 A1 discloses a unitary heat pump air conditioner having a compressed vapor diversion loop.

### Summary of Invention

The present invention provides a thermal management system in accordance with claim 1, a control method therefor in accordance with claim 10, and a vehicle in accordance with claim 14. Preferred features are set out in the dependent claims.

A thermal management system according to an embodiment of the present invention is used for a vehicle, and includes a traction battery, a compressor, an outdoor heat exchanger, a gas-liquid separator, a heater core, a liquid heater and an integrated thermal management unit,
wherein the integrated thermal management unit is connected to the compressor, the outdoor heat exchanger, the gas-liquid separator, the heater core and the liquid heater, and the gas-liquid separator is connected to an inlet of the compressor, and the integrated thermal management unit includes:
   a flow channel plate having a plurality of flow channels formed therein;
   a pump assembly and a valve assembly integrated on the flow channel plate, wherein the pump assembly includes a battery water pump and a heating water pump, an inlet of the battery water pump is connected to the valve assembly through the flow channel, an outlet of the battery water pump is connected to an inlet of the traction battery through the flow channel, and an inlet of the heating water pump is connected to the valve assembly through the flow channel; and
   a water-cooling condenser and a battery cooler integrated on the flow channel plate, wherein
   a coolant input of the water-cooling condenser is connected to the compressor, a coolant output of the water-cooling condenser is connected to an inlet of the outdoor heat exchanger, an outlet of the heating water pump is connected to a cooling liquid input of the water-cooling condenser through the flow channel, the cooling liquid output of the water-cooling condenser is connected to an inlet of the liquid heater through the flow channel, an outlet of the liquid heater is connected to an inlet of the heater core, and an outlet of the heater core is connected to the valve assembly;
   a coolant input of the battery cooler is connected to an outlet of the outdoor heat exchanger, a coolant output of the battery cooler is connected to an inlet of the gas-liquid separator, a cooling liquid input of the battery cooler is connected to an outlet of the traction battery, and a cooling liquid output of the battery cooler is connected to the valve assembly; and
wherein the thermal management system has a first operating mode; in the first operating mode, the compressor and the battery water pump are started, the heating water pump and the liquid heater are also started, and the valve assembly is in a first preset state;
in the first preset state, the valve assembly connects the battery cooler with the battery water pump, and connects the outlet of the heater core with the inlet of the heating water pump, the battery water pump conveys a cooling liquid flowing through the traction battery to the battery cooler, the heating water pump conveys the cooling liquid to the liquid heater, and the liquid heater heats the cooling liquid to convey the coolant to the heater core; a coolant flows through the water-cooling condenser under the action of the compressor and then enters the outdoor heat exchanger for cooling to deice the outdoor heat exchanger, the cooled coolant enters the battery cooler and exchanges heat with the cooling liquid flowing through the battery cooler to absorb heat and evaporate, and the evaporated coolant flows into the gas-liquid separator from the coolant output of the battery cooler, wherein a temperature of the cooling liquid flowing through the water-cooling condenser is higher than a temperature of the coolant flowing through the water-cooling condenser.

The integrated thermal management unit further includes a mounting base and a first throttle, wherein the mounting base is integrally mounted on the water-cooling condenser, a first coolant interface is formed on the mounting base, the first coolant interface is connected with the coolant output of the water-cooling condenser, the first throttle is mounted on the mounting base and connected in series to the first coolant interface, the first coolant interface is connected to the inlet of the outdoor heat exchanger of the vehicle, and in the first operating mode, the first throttle is in a fully open state.

The thermal management system further includes an evaporator, wherein the integrated thermal management unit further includes a shutoff valve, the shutoff valve is mounted on the mounting base, a second coolant interface is further formed on the mounting base, the second coolant interface is connected to the coolant output of the water-cooling condenser and is connected in parallel to the first coolant interface, the shutoff valve is connected in series to the second coolant interface, the shutoff valve is configured to connect or disconnect the second coolant interface and the coolant output of the water-cooling condenser, the second coolant interface is connected to an inlet of the evaporator, an outlet of the evaporator is connected to the gas-liquid separator, and in the first operating mode, the shutoff valve is in a closed state.

A third coolant interface is further formed on the mounting base and communicates with the second coolant interface, a check valve is mounted at the third coolant interface, an external shutoff valve is arranged between the outlet of the outdoor heat exchanger and the gas-liquid separator, the third coolant interface is connected between the outlet of the outdoor heat exchanger and the external shutoff valve, and in the first operating mode, the external shutoff valve is in a closed state. In some implementations, the thermal management system further includes an electric drive component, a radiator and an evaporator, wherein the integrated thermal management unit further includes a water-water heat exchanger integrated on the flow channel plate, and the pump assembly further includes a motor water pump;
an inlet of the motor water pump is connected to the valve assembly through the flow channel, an outlet of the motor water pump is connected to an inlet of the electric drive component through the flow channel, the electric drive component is further connected to an inlet of the radiator, and an outlet of the radiator is connected to the valve assembly;
the battery cooler and the water-water heat exchanger are integrated, and the coolant output of the battery cooler is further connected to an outlet of the evaporator;
the cooling liquid input of the battery cooler is connected to the outlet of the traction battery and communicates with a first cooling liquid input and a first cooling liquid output of the water-water heat exchanger, the first cooling liquid output of the water-water heat exchanger is connected to the valve assembly through the flow channel, a second cooling liquid input of the water-water heat exchanger is connected to an outlet of the liquid heater through the flow channel, and a second cooling liquid output of the water-water heat exchanger is connected to the valve assembly through the flow channel;
a first port through to an eighth port are formed on the flow channel plate, and the valve assembly includes a first five-way valve and a second five-way valve;
a first port of the first five-way valve is connected to the eighth port through the flow channel, and the eighth port is connected to the outlet of the heater core;
a second port of the first five-way valve is connected with the inlet of the heating water pump through the flow channel;
a third port of the first five-way valve is connected with the first port through the flow channel, and the first port is connected to the outlet of the radiator;
a fourth port of the first five-way valve is connected to a fifth port of the second five-way valve through the flow channel;
a fifth port of the first five-way valve is connected to the second cooling liquid output of the water-water heat exchanger through the flow channel;
a first port of the second five-way valve is connected to the second port and the third port through the flow channel, the second port is connected to the inlet of the radiator, the third port is connected to the outlet of the electric drive component of the vehicle, and the second port is connected with the third port;
a second port of the second five-way valve is connected to the inlet of the motor water pump through the flow channel, the outlet of the motor water pump is connected with the fourth port through the flow channel, and the fourth port is connected to the inlet of the electric drive component;
a third port of the second five-way valve is connected to the first cooling liquid output of the water-water heat exchanger through the flow channel;
a fourth port of the second five-way valve is connected to the inlet of the battery water pump through the flow channel, the battery water pump is connected with the fifth port through the flow channel, and the fifth port is connected to the inlet of the traction battery;
the fifth port of the second five-way valve is connected to the fourth port of the first five-way valve, the second cooling liquid input of the water-water heat exchanger is connected to the sixth port and the seventh port, the sixth port is connected to the inlet of the heater core, the seventh port is connected to the outlet of the liquid heater, and the sixth port is connected with the seventh port; and
when the valve assembly is in the first preset state, the first port and the second port of the first five-way valve are connected with one another, and the third port and the fourth port of the second five-way valve are connected with one another.

In some implementations, the thermal management system further includes an electric drive component, a radiator and an evaporator, wherein the integrated thermal management unit further includes a water-water heat exchanger integrated on the flow channel plate, and the pump assembly further includes a motor water pump;
an inlet of the motor water pump is connected to the valve assembly through the flow channel, an outlet of the motor water pump is connected to an inlet of the electric drive component through the flow channel, the electric drive component is further connected to an inlet of the radiator, and an outlet of the radiator is connected to the valve assembly;
the battery cooler and the water-water heat exchanger are integrated, and the coolant output of the battery cooler is further connected to an outlet of the evaporator;
the cooling liquid input of the battery cooler is connected to the outlet of the traction battery and communicates with a first cooling liquid input and a first cooling liquid output of the water-water heat exchanger, the first cooling liquid output of the water-water heat exchanger is connected to the valve assembly through the flow channel, a second cooling liquid input of the water-water heat exchanger is connected to an outlet of the liquid heater through the flow channel, and a second cooling liquid output of the water-water heat exchanger is connected to the valve assembly through the flow channel;
a first port through to an eighth port are formed on the flow channel plate, and the valve assembly includes a first four-way valve, a second four-way valve, a first three-way valve and a second three-way valve;
a first port of the first four-way valve is connected to a third port of the first three-way valve, a first port of the first three-way valve is connected to the eighth port through the flow channel, and a second port of the first three-way valve is connected to the second cooling liquid output of the water-water heat exchanger through the flow channel;
a second port of the first four-way valve is connected with the inlet of the heating water pump through the flow channel;
a third port of the first four-way valve is connected with the first port through the flow channel, and the first port is connected to the outlet of the radiator;
a fourth port of the first four-way valve is connected with a second port of the second three-way valve through the flow channel;
a first port of the second three-way valve is connected to the second port and the third port through the flow channel, the second port is connected to the inlet of the radiator, the third port is connected to the outlet of the electric drive component, and the second port is connected with the third port;
a third port of the second three-way valve is connected with a first port of the second four-way valve,
a second port of the second four-way valve is connected to the inlet of the motor water pump through the flow channel, the outlet of the motor water pump is connected with the fourth port through the flow channel, and the fourth port is connected to the inlet of the electric drive component;
a third port of the second four-way valve is connected to the first cooling liquid output of the water-water heat exchanger through the flow channel;
a fourth port of the second four-way valve is connected to the inlet of the battery water pump through the flow channel, the battery water pump is connected with the fifth port through the flow channel, and the fifth port is connected to the inlet of the traction battery;
the second cooling liquid input of the water-water heat exchanger is connected to the sixth port and the seventh port, the sixth port is connected to the inlet of the heater core, the seventh port is connected to the outlet of the liquid heater, and the sixth port is connected with the seventh port; and
when the valve assembly is in the first preset state, the first port and the second port of the first four-way valve are connected with one another, the first port and the third port of the first three-way valve are connected with one another, and the third port and the fourth port of the second four-way valve are connected with one another.

The thermal management system further includes an electric drive component, a radiator and an evaporator, wherein the integrated thermal management unit further includes a water-water heat exchanger integrated on the flow channel plate, and the pump assembly further includes a motor water pump;
an inlet of the motor water pump is connected to the valve assembly through the flow channel, an outlet of the motor water pump is connected to an inlet of the electric drive component through the flow channel, the electric drive component is further connected to an inlet of the radiator, and an outlet of the radiator is connected to the valve assembly;
the battery cooler and the water-water heat exchanger are integrated, and the coolant output of the battery cooler is further connected to an outlet of the evaporator;
the cooling liquid input of the battery cooler is connected to the outlet of the traction battery and communicates with a first cooling liquid input and a first cooling liquid output of the water-water heat exchanger, the first cooling liquid output of the water-water heat exchanger is connected to the valve assembly through the flow channel, a second cooling liquid input of the water-water heat exchanger is connected to an outlet of the liquid heater through the flow channel, and a second cooling liquid output of the water-water heat exchanger is connected to the valve assembly through the flow channel;
a first port through to an eighth port are formed on the flow channel plate, and the valve assembly includes an eight-way valve;
a first port of the eight-way valve is connected to the eighth port through the flow channel, and the eighth port is connected to the outlet of the heater core;
a second port of the eight-way valve is connected with the inlet of the heating water pump through the flow channel;
a third port of the eight-way valve is connected with the first port through the flow channel, and the first port is connected to the outlet of the radiator;
a fourth port of the eight-way valve is connected to the second port and the third port through the flow channel, the second port is connected to the inlet of the radiator, the third port is connected to the outlet of the electric drive component, and the second port is connected with the third port;
a fifth port of the eight-way valve is connected with the inlet of the motor water pump through the flow channel, the outlet of the motor water pump is connected to the fourth port through the flow channel, and the fourth port is connected to the inlet of the electric drive component;
a sixth port of the eight-way valve is connected to the inlet of the battery water pump through the flow channel, the battery water pump is connected with the fifth port through the flow channel, and the fifth port is connected to the inlet of the traction battery;
a seventh port of the eight-way valve is connected to the first cooling liquid output of the water-water heat exchanger through the flow channel;
an eighth port of the eight-way valve is connected to the second cooling liquid output of the water-water heat exchanger through the flow channel, the second cooling liquid input of the water-water heat exchanger is connected to the sixth port and the seventh port, the sixth port is connected to the inlet of the heater core, the seventh port is connected to the outlet of the liquid heater, and the sixth port is connected with the seventh port; and
when the valve assembly is in the first preset state, the first port and the second port of the eight-way valve are connected with one another, and the sixth port and the seventh port of the eight-way valve are connected with one another.

The integrated thermal management unit further includes a second throttle and a temperature sensor, both the second throttle and the temperature sensor are integrated on the battery cooler, the second throttle is located at the coolant input of the battery cooler, the temperature sensor is located at the coolant output of the battery cooler, and in the first operating mode, the second throttle is in a throttled state.

The thermal management system further has a second operating mode; in the second operating mode, the compressor and the battery water pump are shut down, the heating water pump and the liquid heater operate, the valve assembly is in a second preset state, the heating water pump conveys the cooling liquid to the liquid heater, and the liquid heater heats the cooling liquid to convey the cooling liquid to the heater core to heat the passenger compartment.

A control method according to an embodiment of the present invention is used for the thermal management system of the above-mentioned implementation. The control method for the thermal management system includes:
determining whether the outdoor heat exchanger is frozen; and
when the outdoor heat exchanger is frozen, controlling the compressor, the battery water pump, the heating water pump and the liquid heater to start and causing the valve assembly to be in the first preset state to cause the thermal management system to enter the first operating mode, so as to deice the outdoor heat exchanger.

The thermal management system further includes an electric drive component, a radiator and an evaporator, wherein the integrated thermal management unit further includes a water-water heat exchanger integrated on the flow channel plate, and the pump assembly further includes a motor water pump;
an inlet of the motor water pump is connected to the valve assembly through the flow channel, an outlet of the motor water pump is connected to an inlet of the electric drive component through the flow channel, the electric drive component is further connected to an inlet of the radiator, and an outlet of the radiator is connected to the valve assembly;
the battery cooler and the water-water heat exchanger are integrated, and the coolant output of the battery cooler is further connected to an outlet of the evaporator;
the cooling liquid input of the battery cooler is connected to the outlet of the traction battery and communicates with a first cooling liquid input and a first cooling liquid output of the water-water heat exchanger, the first cooling liquid output of the water-water heat exchanger is connected to the valve assembly through the flow channel, a second cooling liquid input of the water-water heat exchanger is connected to an outlet of the liquid heater through the flow channel, and a second cooling liquid output of the water-water heat exchanger is connected to the valve assembly through the flow channel;
a first port through to an eighth port are formed on the flow channel plate, and the valve assembly includes a first five-way valve and a second five-way valve;
a first port of the first five-way valve is connected to the eighth port through the flow channel, and the eighth port is connected to the outlet of the heater core;
a second port of the first five-way valve is connected with the inlet of the heating water pump through the flow channel;
a third port of the first five-way valve is connected with the first port through the flow channel, and the first port is connected to the outlet of the radiator;
a fourth port of the first five-way valve is connected to a fifth port of the second five-way valve through the flow channel;
a fifth port of the first five-way valve is connected to the second cooling liquid output of the water-water heat exchanger through the flow channel;
a first port of the second five-way valve is connected to the second port and the third port through the flow channel, the second port is connected to the inlet of the radiator, the third port is connected to the outlet of the electric drive component of the vehicle, and the second port is connected with the third port;
a second port of the second five-way valve is connected to the inlet of the motor water pump through the flow channel, the outlet of the motor water pump is connected with the fourth port through the flow channel, and the fourth port is connected to the inlet of the electric drive component;
a third port of the second five-way valve is connected to the first cooling liquid output of the water-water heat exchanger through the flow channel;
a fourth port of the second five-way valve is connected to the inlet of the battery water pump through the flow channel, the battery water pump is connected with the fifth port through the flow channel, and the fifth port is connected to the inlet of the traction battery;
the fifth port of the second five-way valve is connected to the fourth port of the first five-way valve, the second cooling liquid input of the water-water heat exchanger is connected to the sixth port and the seventh port, the sixth port is connected to the inlet of the heater core, the seventh port is connected to the outlet of the liquid heater, and the sixth port is connected with the seventh port; and
the controlling the valve assembly to be in the first preset state includes:
   controlling the first port and the second port of the first five-way valve to are connected with one another, and controlling the third port and the fourth port of the second five-way valve to are connected with one another.

The thermal management system further includes an electric drive component, a radiator and an evaporator, wherein the integrated thermal management unit further includes a water-water heat exchanger integrated on the flow channel plate, and the pump assembly further includes a motor water pump;
an inlet of the motor water pump is connected to the valve assembly through the flow channel, an outlet of the motor water pump is connected to an inlet of the electric drive component through the flow channel, the electric drive component is further connected to an inlet of the radiator, and an outlet of the radiator is connected to the valve assembly;
the battery cooler and the water-water heat exchanger are integrated, and the coolant output of the battery cooler is further connected to an outlet of the evaporator;
the cooling liquid input of the battery cooler is connected to the outlet of the traction battery and communicates with a first cooling liquid input and a first cooling liquid output of the water-water heat exchanger, the first cooling liquid output of the water-water heat exchanger is connected to the valve assembly through the flow channel, a second cooling liquid input of the water-water heat exchanger is connected to an outlet of the liquid heater through the flow channel, and a second cooling liquid output of the water-water heat exchanger is connected to the valve assembly through the flow channel;
a first port through to an eighth port are formed on the flow channel plate, and the valve assembly includes a first four-way valve, a second four-way valve, a first three-way valve and a second three-way valve;
a first port of the first four-way valve is connected to a third port of the first three-way valve, a first port of the first three-way valve is connected to the eighth port through the flow channel, and a second port of the first three-way valve is connected to the second cooling liquid output of the water-water heat exchanger through the flow channel;
a second port of the first four-way valve is connected with the inlet of the heating water pump through the flow channel;
a third port of the first four-way valve is connected with the first port through the flow channel, and the first port is connected to the outlet of the radiator;
a fourth port of the first four-way valve is connected with a second port of the second three-way valve through the flow channel;
a first port of the second three-way valve is connected to the second port and the third port through the flow channel, the second port is connected to the inlet of the radiator, the third port is connected to the outlet of the electric drive component, and the second port is connected with the third port;
a third port of the second three-way valve is connected with a first port of the second four-way valve,
a second port of the second four-way valve is connected to the inlet of the motor water pump through the flow channel, the outlet of the motor water pump is connected with the fourth port through the flow channel, and the fourth port is connected to the inlet of the electric drive component;
a third port of the second four-way valve is connected to the first cooling liquid output of the water-water heat exchanger through the flow channel;
a fourth port of the second four-way valve is connected to the inlet of the battery water pump through the flow channel, the battery water pump is connected with the fifth port through the flow channel, and the fifth port is connected to the inlet of the traction battery;
the second cooling liquid input of the water-water heat exchanger is connected to the sixth port and the seventh port, the sixth port is connected to the inlet of the heater core, the seventh port is connected to the outlet of the liquid heater, and the sixth port is connected with the seventh port; and
the controlling the valve assembly to be in the first preset state includes:
   controlling the first port and the second port of the first four-way valve to are connected with one another, controlling the first port and the third port of the first three-way valve to are connected with one another, and controlling the third port and the fourth port of the second four-way valve to are connected with one another.

The thermal management system further includes an electric drive component, a radiator and an evaporator, wherein the integrated thermal management unit further includes a water-water heat exchanger integrated on the flow channel plate, and the pump assembly further includes a motor water pump;
an inlet of the motor water pump is connected to the valve assembly through the flow channel, an outlet of the motor water pump is connected to an inlet of the electric drive component through the flow channel, the electric drive component is further connected to an inlet of the radiator, and an outlet of the radiator is connected to the valve assembly;
the battery cooler and the water-water heat exchanger are integrated, and the coolant output of the battery cooler is further connected to an outlet of the evaporator;
the cooling liquid input of the battery cooler is connected to the outlet of the traction battery and communicates with a first cooling liquid input and a first cooling liquid output of the water-water heat exchanger, the first cooling liquid output of the water-water heat exchanger is connected to the valve assembly through the flow channel, a second cooling liquid input of the water-water heat exchanger is connected to an outlet of the liquid heater through the flow channel, and a second cooling liquid output of the water-water heat exchanger is connected to the valve assembly through the flow channel;
a first port through to an eighth port are formed on the flow channel plate, and the valve assembly includes an eight-way valve;
a first port of the eight-way valve is connected to the eighth port through the flow channel, and the eighth port is connected to the outlet of the heater core;
a second port of the eight-way valve is connected with the inlet of the heating water pump through the flow channel;
a third port of the eight-way valve is connected with the first port through the flow channel, and the first port is connected to the outlet of the radiator;
a fourth port of the eight-way valve is connected to the second port and the third port through the flow channel, the second port is connected to the inlet of the radiator, the third port is connected to the outlet of the electric drive component, and the second port is connected with the third port;
a fifth port of the eight-way valve is connected with the inlet of the motor water pump through the flow channel, the outlet of the motor water pump is connected to the fourth port through the flow channel, and the fourth port is connected to the inlet of the electric drive component;
a sixth port of the eight-way valve is connected to the inlet of the battery water pump through the flow channel, the battery water pump is connected with the fifth port through the flow channel, and the fifth port is connected to the inlet of the traction battery;
a seventh port of the eight-way valve is connected to the first cooling liquid output of the water-water heat exchanger through the flow channel;
an eighth port of the eight-way valve is connected to the second cooling liquid output of the water-water heat exchanger through the flow channel, the second cooling liquid input of the water-water heat exchanger is connected to the sixth port and the seventh port, the sixth port is connected to the inlet of the heater core, the seventh port is connected to the outlet of the liquid heater, and the sixth port is connected with the seventh port; and
the controlling the valve assembly to be in the first preset state includes:
   controlling the first port and the second port of the eight-way valve to are connected with one another, and controlling the sixth port and the seventh port of the eight-way valve to are connected with one another.

A vehicle according to an embodiment of the present invention includes a vehicle body and the thermal management system of the above-mentioned implementation, wherein the thermal management system is installed on the vehicle body.

In the thermal management system, the control method therefor, and the vehicle according to the implementations of the present invention, the thermal management system has a first operating mode; in the first operating mode, the compressor and the battery water pump are started, the heating water pump and the liquid heater are also started, and the valve assembly is in a first preset state; in the first preset state, the valve assembly connects the battery cooler with the battery water pump, and connects the outlet of the heater core with the inlet of the heating water pump, the battery water pump conveys a cooling liquid flowing through the traction battery to the battery cooler, the heating water pump conveys the cooling liquid to the liquid heater, and the liquid heater heats the cooling liquid to convey the cooling liquid to the heater core; a coolant flows through the water-cooling condenser under the action of the compressor and then enters the outdoor heat exchanger for cooling to deice the outdoor heat exchanger, the cooled coolant enters the battery cooler and exchanges heat with the cooling liquid flowing through the battery cooler to absorb heat and evaporate, and the evaporated coolant flows into the gas-liquid separator from the coolant output of the battery cooler, wherein a temperature of the cooling liquid flowing through the water-cooling condenser is higher than a temperature of the coolant flowing through the water-cooling condenser. As such, the high-temperature and high-pressure coolant flowing out of the compressor is used to efficiently deice the outdoor heat exchanger, and the waste heat generated by the traction battery can be carried by the cooling liquid to the battery cooler to evaporate the coolant flowing through the battery cooler, so as to realize the function of deicing the outdoor heat exchanger by using the heat of the traction battery. In addition, the pump assembly, the valve assembly, the water-cooling condenser, the water-water heat exchanger, the battery cooler and other elements are integrated on the flow channel plate, which saves layout space and routing pipelines, and reduces costs.

Additional advantages of the implementations of the present invention will be partly given in the following description, and part thereof will become apparent from the following description, or be understood through the practice of the implementations of the present invention.

### Brief Description of Drawings

The above-mentioned aspects and advantages of the present invention will become apparent and easy to understand from the description of the implementations in conjunction with the following accompanying drawings, in which:
FIG 1 is a schematic structural diagram of a vehicle according to an implementation of the present invention;
FIG. 2 is a schematic 3D structural diagram of an integrated thermal management unit according to an implementation of the present invention;
FIG. 3 is a schematic diagram of a principle of a thermal management system in a first operating mode according to an implementation of the present invention;
FIG 4 is a schematic 3D exploded view of an integrated thermal management unit according to an implementation of the present invention;
FIG. 5 is a schematic planar structural diagram of an integrated thermal management unit according to an implementation of the present invention;
FIG. 6 is another schematic planar structural diagram of an integrated thermal management unit according to an implementation of the present invention;
FIG. 7 is another schematic 3D structural diagram of an integrated thermal management unit according to an implementation of the present invention;
FIG. 8 is a schematic structural diagram of a flow channel plate of an integrated thermal management unit according to an implementation of the present invention;
FIG. 9 is a schematic planar diagram of a partial structure of an integrated thermal management unit according to an implementation of the present invention;
FIG. 10 is a schematic 3D diagram of a partial structure of an integrated thermal management unit according to an implementation of the present invention;
FIG. 11 is a schematic exploded view of a partial structure of an integrated thermal management unit according to an implementation of the present invention;
FIG. 12 is another schematic diagram of a principle of a thermal management system in the first operating mode according to an implementation of the present invention;
FIG. 13 is still another schematic diagram of a principle of a thermal management system in the first operating mode according to an implementation of the present invention;
FIG. 14 is a schematic diagram of a principle of a thermal management system in a second operating mode according to an implementation of the present invention;
FIG. 15 is another schematic diagram of a principle of a thermal management system in the second operating mode according to an implementation of the present invention;
FIG. 16 is still another schematic diagram of a principle of a thermal management system in the second operating mode according to an implementation of the present invention; and
FIG. 17 is a schematic flowchart of a control method for a thermal management system according to an implementation of the present invention.

### Reference signs of components:

- 100: integrated thermal management unit,
- 101: flow channel plate,
- 102: upper plate,
- 103: lower plate,
- 104: flow channel groove,
- 105: fixing connectors,
- 106: pump assembly,
- 107: heating water pump,
- 108: battery water pump,
- 109: motor water pump,
- 110: valve assembly,
- 111: water-cooling condenser,
- 112: water-water heat exchanger,
- 113: battery cooler,
- 114: water tank,
- 115: mounting base,
- 116: first coolant interface,
- 117: second coolant interface,
- 118: third coolant interface,
- 119: first throttle,
- 120: second throttle,
- 121: shutoff valve,
- 122: check valve,
- 123: pressure-temperature sensor,
- 124: temperature sensor,
- 125: electrical control connection element,
- 126: connector,
- 127: wire,
- 136: first five-way valve,
- 137: second five-way valve,
- 138: first four-way valve,
- 139: second four-way valve,
- 140: first three-way valve,
- 141: second three-way valve,
- 142: eight-way valve,
- 200: thermal management system,
- 201: compressor,
- 202: outdoor heat exchanger,
- 203: radiator,
- 204: electric drive component,
- 205: traction battery,
- 206: evaporator,
- 207: heater core,
- 208: liquid heater,
- 209: gas-liquid separator,
- 210: third throttle,
- 211: external shutoff valve,
- 300: vehicle, and
- 301: vehicle body.

### Detailed Description

The embodiments of the present invention will now be described in detail, examples of which are illustrated in the accompanying drawings. Same or similar reference numerals indicate same or similar elements or elements having same or similar functions throughout. The embodiments described with reference to the drawings below are illustrative only and are not to be construed as limiting the present invention.

In the description of the embodiments of the present invention, terms "first", "second" and the like are used for illustration purposes only, and are not to be construed as indicating or implying relative importance or implying the number of technical features following these terms. Accordingly, a feature following a term like "first" or "second" may comprise one or more of such features either explicitly or implicitly. In the description of the embodiments of the present invention, unless specifically indicated, the term "a plurality of' or "multiple" means two or more.

In the description of the embodiments of the present invention, it is noted that, unless specifically specified and indicated, terms "mount," "communicate," "connect" and variations thereof are to be construed broadly as indicating, for example, a fixed connection, a removable connection, or an integral connection; a direct connection, an indirect connection through an intermediate medium; interconnection between related elements, or interaction between related elements. It will be apparent to those of ordinary skills in the art that specific meanings of the above terms in the embodiments of the present invention are to be construed depending on specific situations.

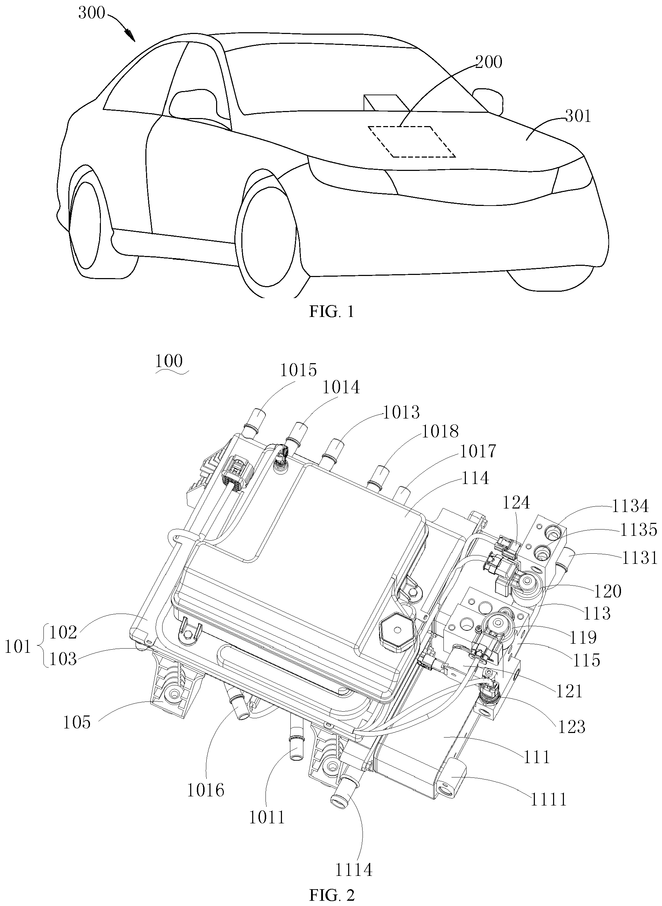

Referring to FIG. 1, in an embodiment of the present invention, a vehicle 300 comprises a vehicle body 301 and a thermal management system 200 according to an embodiment of the present invention. The thermal management system 200 is mounted on the vehicle body 301. Specifically, the vehicle 300 may be, for example, a hybrid vehicle or an electric vehicle.

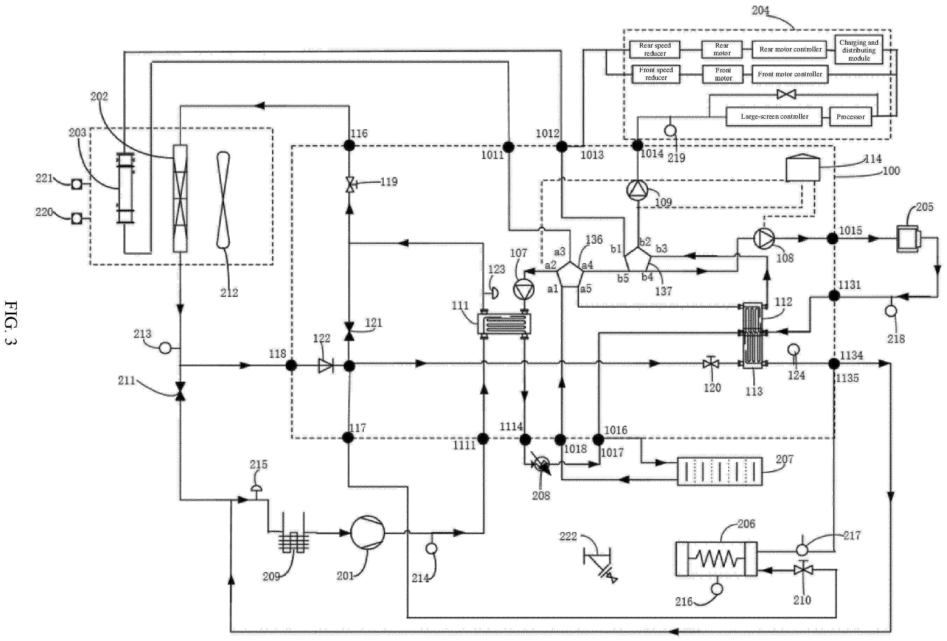

Referring to FIGS. 2 and 3, the thermal management system 200 comprises: a compressor 201, an outdoor heat exchanger 202, a radiator 203, an electric drive component 204, a traction battery 205, an evaporator 206, a heater core 207, a liquid heater 208, a gas-liquid separator 209 and an integrated thermal management unit 100 of the present invention. The compressor 201 is configured to compress and deliver coolant, the gas-liquid separator 209 is connected to an inlet of the compressor 201, the outdoor heat exchanger 202 is configured to allow coolant to flow in and to exchange heat with the air outside the vehicle 300, the evaporator 206 is configured to allow coolant to flow in and to cool the passenger compartment of the vehicle 300, the heater core 207 is configured to warm the passenger compartment of the vehicle 300 by air conditioning, and the liquid heater 208 is configured to heat a cooling liquid.

The radiator 203 is configured to cool a cooling liquid passing therethrough. The electric drive component 204 may comprise a drive motor, a speed reducer, a charging and power distribution module, and a vehicle controller of the vehicle 300. The drive motor may be plural in number.

For example, the drive motor may comprise, such as, a front motor and a rear motor. The speed reducer may comprise a front speed reducer and a rear speed reducer. The vehicle controller may comprise electric control elements such as a processor, a screen controller, a front motor controller and a rear motor controller, and a self-driving controller. The drive motor is connected to the traction battery 205 to drive the vehicle 300 by electrical energy. The various elements in the electric drive component 204 are connected through a cooling liquid pipeline. The cooling liquid in the cooling liquid pipeline may be provided to heat or cool the electric drive component 204.

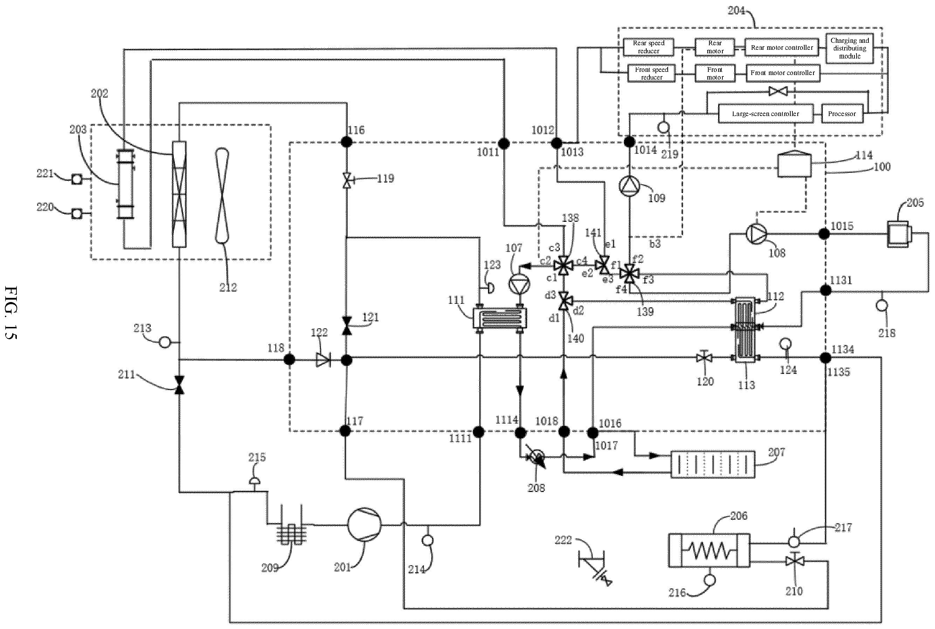

In addition, referring to FIG. 15, in an implementation of the present invention, the outdoor heat exchanger 202 and the radiator 203 may jointly form a front-end heat dissipation module of the vehicle 300, and the thermal management system 200 may further include an electronic fan 212. The electronic fan 212 may correspond to the outdoor heat exchanger 202 and the radiator 203, the electronic fan 212 is configured to form an air flow flowing through the outdoor heat exchanger 202 and the radiator 203 to make the air fully exchange heat with the coolant in the outdoor heat exchanger 202 and the cooling liquid in the radiator 203.

In the implementation of the present invention, the heater core 207 and the evaporator 206 may jointly form an air conditioning module of the vehicle 300. The heater core 207 may be configured to heat the passenger compartment, and the evaporator 206 may be configured to refrigerate the passenger compartment. The heater core 207 and the evaporator 206 may also correspond to the electronic fan to implement hot air and cold air, and may share one fan or use two separate fans, which is not specifically limited herein.

Referring to FIG. 15, the front-end heat dissipation module of the vehicle 300 which the outdoor heat exchanger 202 and the radiator 203 jointly form may be further provided with an air quality sensor 221 and an external temperature sensor 220, which are configured to detect the air quality and the temperature outside the passenger compartment respectively. Moreover, an outlet temperature sensor 213 of the outdoor heat exchanger is arranged at an outlet of the outdoor heat exchanger 202 to acquire the temperature at the outlet of the outdoor heat exchanger 202, and a compressor exhaust temperature sensor 214 is further arranged at an outlet of the compressor 201 and configured to detect the temperature at the outlet of the compressor 201. A low-pressure pressure sensor 215 is further arranged at an inlet of the gas-liquid separator 209 or inlets of both the gas-liquid separator 209 and the compressor 201, and configured to detect the pressure of the coolant returning to the gas-liquid separator 209 and the compressor 201. A surface temperature sensor 216 is further arranged on a surface of the evaporator 206 and configured to detect the surface temperature of the evaporator 206. A first water temperature sensor 218 is further arranged at an outlet of the traction battery 205, and configured to detect the temperature of the cooling liquid flowing out of the traction battery 205 to feed back the temperature of the traction battery 205. A second water temperature sensor 219 is further arranged at an inlet of the electric drive component 204, and configured to detect the temperature of the cooling liquid flowing out of the electric drive component 204. In addition, the thermal management system 200 may further include a house sensor 222, and the house sensor 222 is configured to detect the humidity of the passenger compartment in the vehicle and the temperature of vehicle window glass.

Referring to FIG. 2 to FIG. 8 together, the integrated thermal management unit 100 according to implementations of the present invention includes a flow channel plate 101, a pump assembly 106, a valve assembly 110, a water-cooling condenser 111, a water-water heat exchanger 112 and a battery cooler 113.

A plurality of flow channels are formed in the flow channel plate 101, and the pump assembly 106 and the valve assembly 110 are integrated on the flow channel plate 101. The pump assembly 106 includes a heating water pump 107, a battery water pump 108 and a motor water pump 109. Inlets of the heating water pump 107, the battery water pump 108 and the motor water pump 109 are also integrated on the flow channel plate 101 through the valve assembly 110, the water-cooling condenser 111, the water-water heat exchanger 112 and the battery cooler 113.

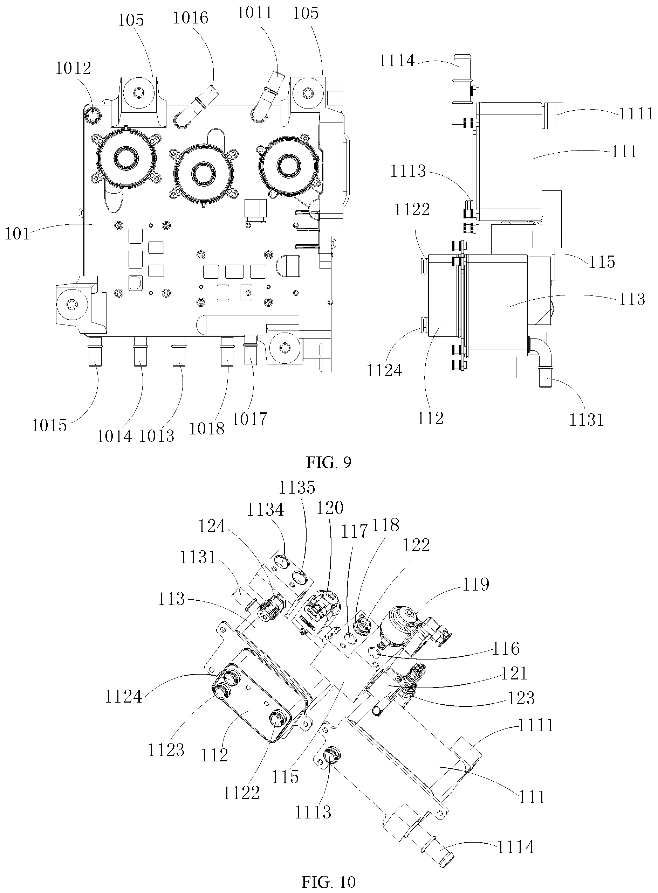

Referring to FIG. 9 to FIG. 11, the water-cooling condenser 111 includes a cooling liquid input 1113 and a cooling liquid output 1114 that are connected with one another, the cooling liquid input 1113 of the water-cooling condenser 111 is connected to an outlet of the heating water pump 107 through the flow channel in the flow channel plate 101, and the cooling liquid output 1114 of the water-cooling condenser 111 is configured to be connected to an inlet of the liquid heater 208. The water-cooling condenser 111 further includes a coolant input 1111 and a coolant output 1112 that are connected with one another, the coolant input 1111 of the water-cooling condenser 111 is configured to be connected to the outlet of the compressor 201, and the coolant output 1112 of the water-cooling condenser 111 is configured to be connected to an inlet of the outdoor heat exchanger 202.

The battery cooler 113 includes a coolant input 1133 and a coolant output, the coolant input 1133 of the battery cooler 113 is configured to be connected to the outlet of the outdoor heat exchanger 202, and the coolant output of the battery cooler 113 is configured to be connected to the inlet of the gas-liquid separator 209 and an outlet of the evaporator 206. Specifically, the coolant output of the battery cooler 113 may include a first coolant output 1134 and a second coolant output 1135. The first coolant output 1134 of the battery cooler 113 is configured to be connected to the inlet of the gas-liquid separator 209 of the vehicle 300, and the second coolant output 1135 of the battery cooler 113 is configured to be connected to the outlet of the evaporator 206.

The battery cooler 113 further includes a cooling liquid input 1131 and a cooling liquid output 1132. The water-water heat exchanger 112 includes a first cooling liquid input 1121 and a first cooling liquid output 1122 that are connected with one another, and a second cooling liquid input 1123 and a second cooling liquid output 1124 that are connected with one another.

The cooling liquid input 1131 of the battery cooler 113 is connected with the first cooling liquid input 1121 and the first cooling liquid output 1122 of the water-water heat exchanger 112, the first cooling liquid output 1122 of the water-water heat exchanger 112 is connected to the valve assembly 110 through the flow channel in the flow channel plate 101, the cooling liquid input 1131 of the battery cooler 113 is configured to be connected to the outlet of the traction battery 205, and an outlet of the battery water pump 108 is configured to be connected to an inlet of the traction battery 205.

The second cooling liquid input 1123 of the water-water heat exchanger 112 is configured to be connected to an outlet of the liquid heater 208 and an inlet of the heater core 207 through the flow channels in the flow channel plate 101, the second cooling liquid output 1124 of the water-water heat exchanger 112 is connected to the valve assembly 110 through the flow channel, the valve assembly 110 is further configured to be connected to the electric drive component 204 and the radiator 203 of the vehicle 300, and the valve assembly 110 is configured to control a flow direction of the cooling liquid in the integrated thermal management unit 100.

With the popularization of new energy vehicles, requirements for vehicle thermal management are getting higher and higher, and more and more parts are used. If the parts are arranged as loose parts, the parts take up and waste a space of a front cabin, and need to be connected through a plurality of pipelines and fixed by a plurality of supports, resulting in a relatively high cost.

In the integrated thermal management unit 100, the thermal management system 200, and the vehicle 300 according to the implementations of the present invention, the pump assembly 106, the valve assembly 110, the water-cooling condenser 111, the water-water heat exchanger 112, the battery cooler 113 and other elements of the vehicle 300 are integrated on the flow channel plate 101, and all components are deployed on the flow channel plate 101 in a centralized manner, which saves layout space and routing pipelines, and reduces costs. In addition, the pump assembly 106, the valve assembly 110, the water-cooling condenser 111, the water-water heat exchanger 112, the battery cooler 113 and other elements are connected with one another through the flow channels provided in the flow channel plate 101, which can save external pipelines; and at the same time, a relatively short routing communication prevents a pressure loss caused by an excessively long route of the coolant and the cooling liquid in a circulation process, and improves refrigeration and heating effects.

Specifically, in the implementations of the present invention, multiple modes can be implemented by controlling methods of connecting each valve port of the valve assembly 110, such as implementing functions of air-conditioning refrigeration of the vehicle 300, forced cooling of the traction battery, air-conditioning heating, heating of the traction battery, natural heat dissipation of the electric drive component, thermal insulation for a battery by using heat of the electric drive component, dehumidification of the passenger compartment, heating of the passenger compartment by using the heat of the electric drive component, and a deicing mode.

Referring to FIG. 2 to FIG. 5, in the implementations of the present invention, the integrated thermal management unit 100 further includes a water tank 114. The water tank 114 is integrated on the flow channel plate 101, the water tank 114 is arranged at the top of the flow channel plate 101, the pump assembly 106 and the valve assembly 110 are integrated at the bottom of the flow channel plate 101, and the battery cooler 113, the water-water heat exchanger 112 and the water-cooling condenser 111 are integrated on a side of the flow channel plate 101.

In this way, spaces of the top, bottom and sides of the flow channel plate 101 can be fully utilized to integrate the water tank 114, the pump assembly 106, the valve assembly 110, the battery cooler 113 and other elements, which further saves a layout space and improves the degree of integration.

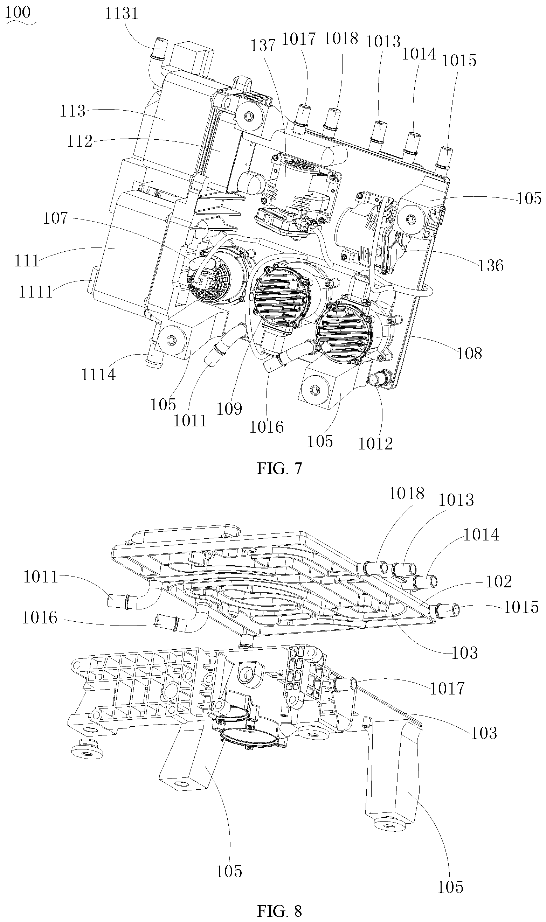

Specifically, referring to FIG. 8, in the implementation of the present invention, the flow channel plate 101 includes an upper plate 102 and a lower plate 103, a plurality of flow channel grooves 104 are formed in the upper plate 102, and the upper plate 102 and the lower plate 103 are in seal fit to close the flow channel grooves 104 to form a plurality of flow channels. The lower plate 103 may be used as a body bearing structure. The pump assembly 106 and the valve assembly 110 are integrated at the bottom of the lower plate 103 of the flow channel plate 101. The lower plate 103 is provided with several openings, and the heating water pump 107, the battery water pump 108, the motor water pump 109 and each valve port of the valve assembly 110 can be connected with the flow channels of the flow channel plate 101 through the openings in the lower plate 103. The battery cooler 113, the water-water heat exchanger 112 and the water-cooling condenser 111 are integrated on a side of the lower plate 103. The water tank 114 may be arranged at the top of the upper plate 102. The upper plate 102 may be provided with openings that are connected with the heating water pump 107, the battery water pump 108 and the motor water pump 109. The heating water pump 107, the battery water pump 108 and the motor water pump 109 are connected with the water tank 114 through the flow channels and the openings of the upper plate 102. The pump assembly 106 and the valve assembly 110 are arranged at the bottom of the flow channel plate 101, and the water-cooling condenser 111, the water-water heat exchanger 112 and the battery cooler 113 are arranged on a side of the flow channel plate 101.

Certainly, it can be understood that in other implementations, a plurality of flow channel grooves 104 may be formed in the lower plate 103 or flow channel grooves 104 are formed in the lower plate 103 and the upper plate 102, which is not specifically limited herein.

In such an implementation, the water tank 114 is configured to store a cooling liquid, such as cooling water. One or more water tanks 114 may be provided, each pump corresponds to one water tank 114, or a plurality of pumps correspond to one water tank 114, or a plurality of water tanks 114 correspond to one pump, which is not specifically limited herein. A connection port is provided at the top of the flow channel plate 101. The water tank 114 is mounted on the flow channel plate 101, connected with the flow channel in the flow channel plate 101 through the connection port and connected with the heating water pump 107, the battery water pump 108 and the motor water pump 109 through the flow channels, so that the heating water pump 107, the battery water pump 108 and the motor water pump 109 can all extract the cooling liquid from the water tank 114 and pump the cooling liquid to other parts of the integrated thermal management unit 100. The water tank 114 may be an expansion water tank 114.

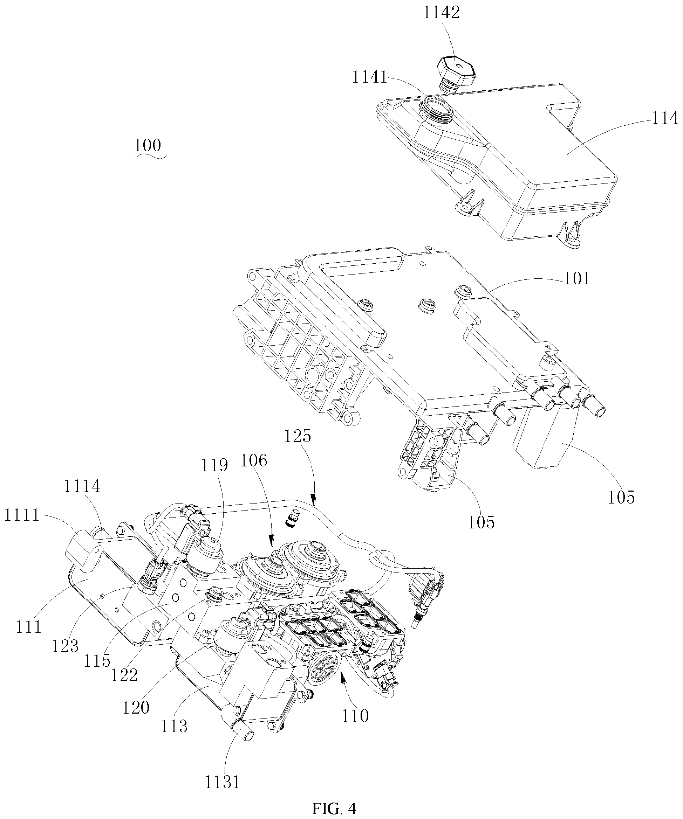

In addition, referring to FIG. 4, a water injection port 1141 is formed on the water tank 114, and the water injection port 1141 is sealed by a water injection cover 1142. A user can unscrew the water injection cover 1142 to fill the water tank 114 with water through the water injection port 1141.

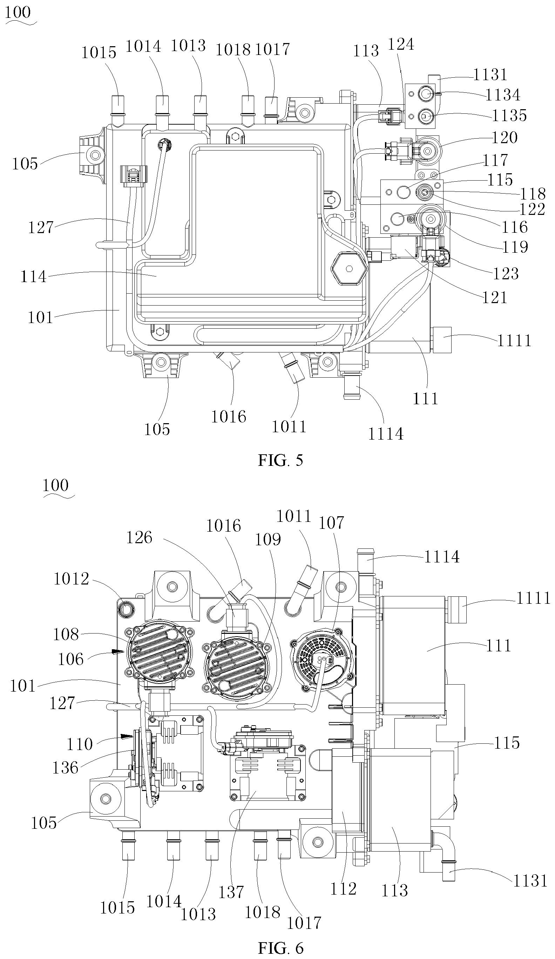

Referring to FIG. 2 and FIG. 4, in the implementations of the present invention, a plurality of fixing connectors 105 are formed on the lower plate 103 of the flow channel plate 101, the fixing connectors 105 are convexly arranged on the lower plate 103 of the flow channel plate 101, and the fixing connectors 105 are configured to connect the vehicle body 301 of the vehicle 300 to integrally install the entire integrated thermal management unit 100 on the vehicle body 301 to avoid separately installing multiple parts on the vehicle, thereby simplifying an installation process and saving an installation space. For example, as shown in FIG. 5, four fixing connectors 105 may be provided, and are located at four corners of the flow channel plate 101 respectively. Certainly, in other implementations, there may be less than 4 or more than 4 fixing connectors 105, such as 3 or 5 fixing connectors 105. Preferably, in implementations of the present invention, to improve the stability of installation, there may be no less than 3 fixing connectors 105.

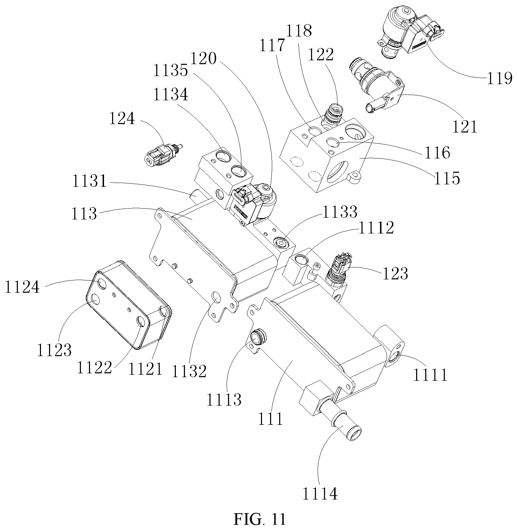

Referring to FIG. 10 and FIG. 11, in implementations of the present invention, the battery cooler 113 and the water-water heat exchanger 112 are integrated, the cooling liquid output 1132 of the battery cooler 113 matches the first cooling liquid input 1121 of the water-water heat exchanger 112, and the battery cooler 113 reuses a cooling liquid flow pipeline with the water-water heat exchanger 112. That is, the battery cooler 113 and the water-water heat exchanger 112 are integrally formed, and the cooling liquid circulation pipeline of the battery cooler 113 and one cooling liquid circulation pipeline of the water-water heat exchanger 112 are reused. In this way, the arrangement of the battery cooler 113 and the water-water heat exchanger 112 can improve the degree of integration without the need for connection through an external connection pipeline. This reduces costs and shortens a routing length of the cooling liquid to avoid pressure and heat losses.

Referring to FIG. 2 to FIG. 7 and FIG. 9 to FIG. 11, in implementations of the present invention, the integrated thermal management unit 100 further includes a mounting base 115, and the mounting base 115 is integrally mounted on the water-cooling condenser 111 and the battery cooler 113. The mounting base 115 forms an inlet, a first coolant interface 116, a second coolant interface 117, a third coolant interface 118 and an outlet. A channel is formed in the mounting base 115 to allow the inlet, the first coolant interface 116, the second coolant interface 117, the third coolant interface 118 and the outlet to are connected with one another. The inlet matches and is connected with the coolant output 1112 of the water-cooling condenser 111, the first coolant interface 116 and the second coolant interface 117 are connected in parallel to the inlet, and the third coolant interface 118 is connected with the outlet and the second coolant interface 117; that is, the first coolant interface 116 is connected to the coolant output 1112 of the water-cooling condenser 111, and the second coolant interface 117 is connected to the coolant output 1112 of the water-cooling condenser 111 and is connected in parallel to the first coolant interface 116. The first coolant interface 116 is configured to be connected to the inlet of the outdoor heat exchanger 202 of the vehicle 300, the second coolant interface 117 is configured to be connected to an inlet of the evaporator 206 of the vehicle 300, one end of the third coolant interface 118 matches and is connected to the coolant input 1133 of the battery cooler 113, and the other end is configured to be connected to the outlet of the outdoor heat exchanger 202.

The integrated thermal management unit 100 further includes a first throttle 119, a shutoff valve 121 and a check valve 122. The first throttle 119 is mounted on the mounting base 115 and connected in series to the first coolant interface 116. The first throttle 119 may be a coolant throttling element such as an electronic expansion valve, and is configured to adjust the flow of the coolant entering the outdoor heat exchanger 202 and throttle the coolant before the coolant enters the outdoor heat exchanger 202. In this way, the first throttle 119 can also be integrated on the flow channel plate 101 through the mounting base 115, which further saves an installation space and improves the degree of integration. In addition, the water-cooling condenser 111 is indirectly connected to the outdoor heat exchanger 202 through the mounting base 115. In this way, when the first throttle 119 needs to be replaced, a user does not need to touch the water-cooling condenser 111, and only needs to directly remove the mounting base 115 or directly remove the first throttle 119 from the mounting base 115, thus improving convenience and safety of operation.

The shutoff valve 121 is also installed on the mounting base 115. The shutoff valve 121 is connected in series between an inlet of the mounting base 115 and the second coolant interface 117. The shut-off 121 is configured to connect or disconnect the second coolant interface 117 and the coolant output 1112 of the water-cooling condenser 111, and the second coolant interface 117 is configured to be connected to the inlet of the evaporator 206 of the vehicle 300. In this way, on the one hand, the integrated installation of the shutoff valve 121 on the mounting base 115 can further save the installation space and improve the degree of integration. On the other hand, through the cooperation of the first throttle 119 and the shutoff valve 121, it can be controlled whether the coolant flows through the outdoor heat exchanger 202 or the evaporator 206 first to achieve refrigeration and heating functions.

In addition, referring to FIG. 11, the third coolant interface 118 on the mounting base 115 is connected with the coolant input 1133 and the second coolant interface 117 of the battery cooler 113, the check valve 122 is installed at the third coolant interface 118, the first coolant output 1134 of the battery cooler 113 is configured to be connected to the gas-liquid separator 209 of the vehicle 300, the gas-liquid separator 209 is connected to the compressor 201, and the second coolant output 1135 of the battery cooler 113 is configured to be connected to the outlet of the evaporator 206.

In this way, on the one hand, the arrangement of the check valve 122 can make the coolant flow from the third coolant interface 118 to the integrated thermal management unit 100 only in one direction and the coolant cannot flow back from the third coolant interface 118. On the other hand, the check valve 122 is also integrally installed on the mounting base 115 to further save the installation space and improve the degree of integration.

Further, in the implementation of the present invention, the integrated thermal management unit 100 further includes a second throttle 120 and a temperature sensor 124, and the second throttle 120 and the temperature sensor 124 are integrated on the battery cooler 113. The second throttle 120 is located at the coolant input 1133 of the battery cooler 113, and the temperature sensor 124 is located at the coolant output (including a first coolant output 1134 and a second coolant output 1135) of the battery cooler 113, and the second throttle 120 may also be a coolant throttling element such as an electronic expansion valve. In this way, the second throttle 120 can be used to adjust the flow of the coolant entering the battery cooler 113 and to throttle the coolant before the coolant enters the battery cooler 113. In addition, the temperature of the coolant flowing out of the battery cooler 113 can also be monitored by the temperature sensor 124. Moreover, integrating the second throttle 120 and the temperature sensor 124 on the battery cooler 113 can further improve the degree of integration, save the installation space, and can also omit external connection pipelines to reduce costs.

Referring to 3, in the implementation of the present invention, the outlet of the outdoor heat exchanger 202 is further connected to the gas-liquid separator 209, and an external shutoff valve 211 is arranged between the outlet of the outdoor heat exchanger 202 and the gas-liquid separator 209. One end of the third coolant interface 118 is configured to be connected between the outlet of the outdoor heat exchanger 202 and the external shutoff valve 211, so that the external shutoff valve 211 and the second throttle 120 can control whether the coolant flowing out of the outdoor heat exchanger 202 flows through the battery cooler 113 and the evaporator 206 or directly flows back into the gas-liquid separator 209. In addition, in the implementation of the present invention, a third throttle 210 is further arranged at the inlet of the evaporator 206. The third throttle 210 may also be a coolant throttling element such as an electronic expansion valve. The third throttle 210 is configured to adjust the flow of the coolant entering the evaporator 206 and to throttle the coolant before the coolant enters the evaporator 206. It should be noted that in the present invention, the throttle may have three states: a fully open state, a throttled state and a closed state. In the fully open state, all the coolant can be allowed to pass directly. In the throttled state, the throttle throttles the coolant. In the closed state, the throttle does not allow the coolant to pass.

Further, in such an implementation, the integrated thermal management unit 100 further includes a pressure-temperature sensor 123, and the pressure-temperature sensor 123 is installed at the coolant output 1112 of the water-cooling condenser 111.

In this way, the pressure-temperature sensor 123 is also directly installed on the water-cooling condenser 111, which further improves the degree of integration. Specifically, the pressure-temperature sensor 123 is configured to monitor the pressure and temperature of the coolant at the coolant output 1112 of the water-cooling condenser 111, and the pressure-temperature sensor 123 may be a high pressure, pressure and temperature integrated sensor.

Referring to FIG. 4 and FIG. 6, further, the integrated thermal management unit 100 further includes an electrical control connection element 125. The electrical control connection element 125 may include several connectors 126 and several wires 127. The connectors 126 may be configured to connect the heating water pump 107, the battery water pump 108, the motor water pump 109, the valve assembly 110, the first throttle 119, the second throttle 120, the shutoff valve 121, the pressure-temperature sensor 123 and the temperature sensor 124, and all the connectors 126 are connected by the wires 127. In this way, the electrical elements (such as the pump assembly and the valve assembly) in the integrated thermal management unit 100 can be directly connected to a vehicle control unit, a processor and other control elements of the vehicle 300 through the electrical control connection element 125 as a whole to control the integrated thermal management unit 100 without using multiple ports to connect different electrically-controlled elements respectively, which improves the degree of integration.

Referring to FIG. 2 to FIG. 7, FIG. 3 is a schematic diagram of a principle of an integrated thermal management unit 100 and a thermal management system 200 according to an implementation of the present invention, and FIG. 2 and FIG. 4 to FIG. 7 are schematic structural diagrams of the integrated thermal management unit 100 according to an implementation of the present invention.

In the illustrated implementation, a first port 1011, a second port 1012, a third port 1013, a fourth port 1014, a fifth port 1015, a sixth port 1016, a seventh port 1017 and an eighth port 1018 are formed on the flow channel plate 101, and the valve assembly 110 may include a first five-way valve 136 and a second five-way valve 137.

Referring to FIG. 2, a first port a1 of the first five-way valve 136 is connected to the eighth port 1018 through the flow channel, and the eighth port 1018 is configured to be connected to an outlet of the heater core 207; a second port a2 of the first five-way valve 136 is connected with the heating water pump 107 through the flow channel; a third port a3 of the first five-way valve 136 is connected to the first port 1011 through the flow channel, and the first port 1011 is configured to be connected to an outlet of the radiator 203; a fourth port a4 of the first five-way valve 136 is connected to a fifth port b5 of the second five-way valve 137 through the flow channel; a fifth port a5 of the first five-way valve 136 is connected to the second cooling liquid output 1124 of the water-water heat exchanger 112 through the flow channel; a first port b 1 of the second five-way valve 137 is connected to the second port 1012 and the third port 1013 through the flow channels, the second port 1012 is configured to be connected to an inlet of the radiator 203, the third port 1013 is configured to be connected to an outlet of the electric drive component 204, and the third port 1013 is connected with the second port 1012; a second port b2 of the second five-way valve 137 is connected to an inlet of the motor water pump 109 through the flow channel, the motor water pump 109 is connected to the fourth port 1014 through the flow channel, and the fourth port 1014 is configured to be connected to the inlet of the electric drive component 204; a third port b3 of the second five-way valve 137 is connected to the first cooling liquid output 1122 of the water-water heat exchanger 112 through the flow channel; a fourth port b4 of the second five-way valve 137 is connected to an inlet of the battery water pump 108 through the flow channel, the battery water pump 108 is connected to the fifth port 1015 through the flow channel, and the fifth port 1015 is configured to be connected to the inlet of the traction battery 205; a fifth port b5 of the second five-way valve 137 is connected to a fourth port a4 of the first five-way valve 136; the second cooling liquid input 1123 of the water-water heat exchanger 112 is connected to the sixth port 1016 and the seventh port 1017 through the flow channels. The sixth port 1016 is connected to the inlet of the heater core 207, the seventh port 1017 is configured to be connected to the outlet of the liquid heater 208, and the seventh port 1017 is connected with the sixth port 1016.

In this way, a flow path of the cooling liquid can be changed through a relationship of communication between the ports of the two five-way valves to implement different operating modes.

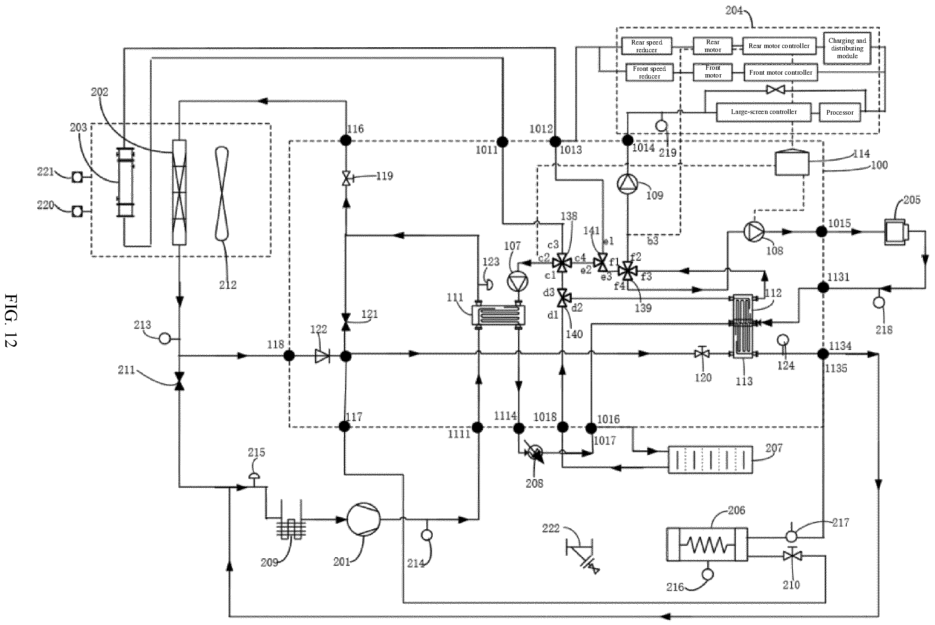

It can be understood that, referring to FIG. 12, in other implementations, the first five-way valve 136 may alternatively be replaced with a first four-way valve 138 and a first three-way valve 140, and the second five-way valve 137 may be replaced with a second four-way valve 139 and a second three-way valve 141. Referring to FIG. 12, in such an implementation, a first port c1 of the first four-way valve 138 is connected to a third port d3 of the first three-way valve 140, a first port d1 of the first three-way valve 140 is connected to the eighth port 1018 through the flow channel, and a second port d2 of the first three-way valve 140 is connected to the second cooling liquid output 1124 of the water-water heat exchanger 112 through the flow channel; a second port c2 of the first four-way valve 138 is connected to the heating water pump 107 through the flow channel; a third port c3 of the first four-way valve 138 is connected with the first port 1011 through the flow channel, and the first port 1011 is configured to be connected to the outlet of the radiator 203; a fourth port c4 of the first four-way valve 138 is connected with a second port e2 of the second three-way valve 141 through the flow channel; a first port e1 of the second three-way valve 141 is connected to the second port 1012 and the third port 1013 through the flow channel, the second port 1012 is configured to be connected to the inlet of the radiator 203, and the third port 1013 is configured to be connected to the outlet of the electric drive component 204; a third port e3 of the second three-way valve 141 is connected to a first port f1 of the second four-way valve 139, a second port f2 of the second four-way valve 139 is connected to the inlet of the motor water pump 109 through the flow channel, the outlet of the motor water pump 109 is connected with the fourth port 1014 through the flow channel, and the fourth port 1014 is configured to be connected to the inlet of the electric drive component 204; a third port f3 of the second four-way valve 139 is connected to the first cooling liquid output 1122 of the water-water heat exchanger 112 through the flow channel; a fourth port f4 of the second four-way valve 139 is connected to the inlet of the battery water pump 108 through the flow channel, the battery water pump 108 is connected with the fifth port 1015 through the flow channel, and the fifth port 1015 is configured to be connected to the inlet of the traction battery 205; the second cooling liquid input 1123 of the water-water heat exchanger 112 is connected to the sixth port 1016 and the seventh port 1017, the sixth port 1016 is connected to the inlet of the heater core 207, and the seventh port 1017 is configured to be connected to the outlet of the liquid heater 208.

In such an implementation, it is equivalent to splitting the five-way valve into one four-way valve and one three-way valve. One port of the four-way valve is connected with one port of the three-way valve. The four-way valve and the three-way valve as a whole also only have five ports connected to external elements.

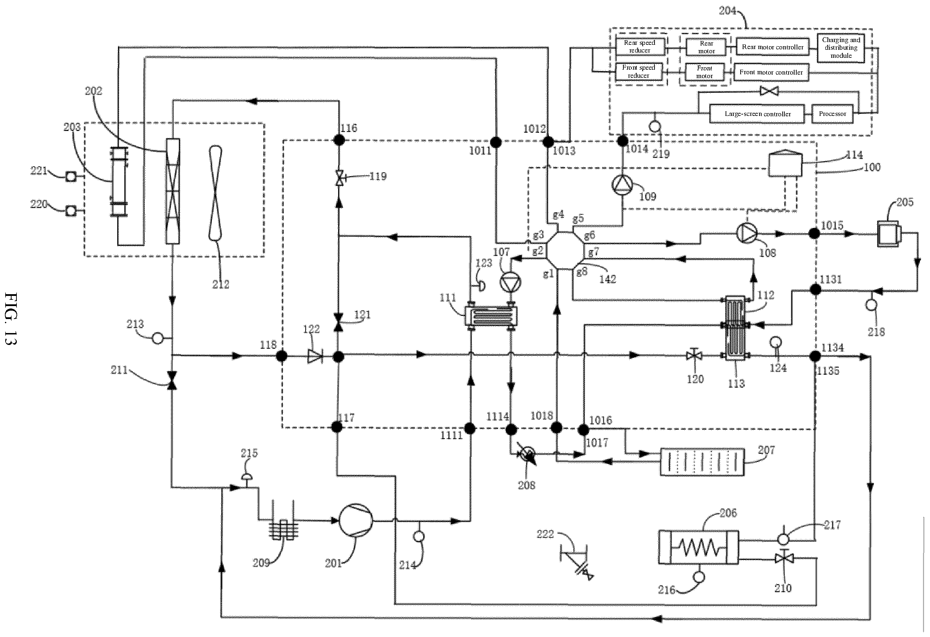

In addition, it can also be understood that, referring to FIG. 13, in other implementations, an eight-way valve may also be used to replace the first five-way valve 136 and the second five-way valve 137 described above. Specifically, referring to FIG. 13, in such an implementation, a first port g1 of the eight-way valve 142 is connected to the eighth port 1018 through the flow channel, and the eighth port 1018 is connected to the outlet of the heater core 207; a second port g2 of the eight-way valve 142 is connected with the heating water pump 107 through the flow channel; a third port g3 of the eight-way valve 142 is connected with the first port 1011 through the flow channel, and the first port 1011 is connected to the outlet of the radiator 203; a fourth port g4 of the eight-way valve 142 is connected to the second port 1012 and the third port 1013 through the flow channels, the second port 1012 is connected to the inlet of the radiator 203, and the third port 1013 is connected to the outlet of the electric drive component 204; a fifth port g5 of the eight-way valve 142 is connected with the inlet of the motor water pump 109 through the flow channel, the motor water pump 109 is connected to the fourth port 1014 through the flow channel, and the fourth port 1014 is connected to the inlet of the electric drive component 204; a sixth port g6 of the eight-way valve 142 is connected to the inlet of the battery water pump 108 through the flow channel, the battery water pump 108 is connected with the fifth port 1015 through the flow channel, and the fifth port 1015 is connected to the inlet of the traction battery 205; a seventh port g7 of the eight-way valve 142 is connected to the first cooling liquid output 1122 of the water-water heat exchanger 112 through the flow channel; an eighth port g8 of the eight-way valve 142 is connected to the second cooling liquid output 1124 of the water-water heat exchanger 112 through the flow channel, the second cooling liquid input 1123 of the water-water heat exchanger 112 is connected to the sixth port 1016 and the seventh port 1017, the sixth port 1016 is connected to the inlet of the heater core 207, and the seventh port 1017 is connected to the outlet of the liquid heater 208.

In such an implementation, it is equivalent to integrating two five-way valves to form one eight-way valve. Two ports between the two five-way valves are connected to one another, and there are only 8 ports of the valve that are connected with external elements as a whole, which may be equivalent to one eight-way valve.

It can be understood that, in related technologies, in the case of a high environment humidity, when a vehicle uses the thermal management system to heat the traction battery for a long time or heats a passenger compartment for a long time, an outdoor heat exchanger is easily defrosted and frozen, resulting in an insufficient heating capacity.

Referring to FIG. 3, in the implementation of the present invention, the thermal management system 200 has a first operating mode, the compressor 201 and the battery water pump 108 are started, the heating water pump 107 and the liquid heater 208 are also started, and the valve assembly 110 is in a first preset state. In the first preset state, the valve assembly 110 is connected with the battery cooler 113 and the battery water pump 108. Specifically, when the valve assembly 110 includes a first five-way valve 136 and a second five-way valve 137, the first preset state of the valve assembly 110 may be as follows: a first port a1 and a second port a2 of the first five-way valve 136 are connected with one another, and a third port b3 and a fourth port b4 of the second five-way valve 137 are connected with one another.

More specifically, referring to FIG. 3, in the first operating mode, the first throttle 119 is in a fully open state, the second throttle 120 is in a throttled state, and the third throttle 210 is in a closed state. The check valve 122 is in an open state, and the shutoff valve 121 and the external shutoff valve 211 are both in a closed state.

In the first operating mode, the battery water pump 108 conveys a cooling liquid flowing through the traction battery 205 to the battery cooler 113, the heating water pump 107 conveys the cooling liquid to the liquid heater 208, and the liquid heater 208 heats the cooling liquid to convey the coolant to the heater core 207; a coolant flows through the water-cooling condenser 111 under the action of the compressor 201 and then enters the outdoor heat exchanger 202 for cooling to deice the outdoor heat exchanger 202, the cooled coolant enters the battery cooler 113 and exchanges heat with the cooling liquid flowing through the battery cooler 113 to absorb heat and evaporate, and the evaporated coolant flows into the gas-liquid separator 209 from the coolant output of the battery cooler 113. As such, the high-temperature and high-pressure coolant flowing out of the compressor 201 is used to efficiently deice the outdoor heat exchanger 202, and the waste heat generated by the traction battery 205 can be carried by the cooling liquid to the battery cooler 113 to evaporate the coolant flowing through the battery cooler 113, so as to realize the function of deicing the outdoor heat exchanger 202 by using the heat of the traction battery 205.

It should be noted that in the first operating mode, the cooling liquid in the water-cooling condenser 111 may not flow or the temperature of the cooling liquid flowing through the water-cooling condenser 111 is higher than the temperature of the coolant, so that the coolant substantially does not exchange heat with the outside when flowing through the water-cooling condenser 111, thus ensuring that the coolant flowing into the outdoor heat exchanger 202 is a high-temperature and high-pressure gaseous coolant. The liquid coolant is evaporated by the heat generated by the traction battery 205 of the battery cooler 113 when the coolant flows into the battery cooler 113. In this way, waste heat of the traction battery 205 is utilized, i.e., the outdoor heat exchanger 202 is deiced by using the waste heat of the traction battery 205.

Certainly, it can also be understood that under such circumstances, if the waste heat generated by the traction battery 205 is insufficient, the pressure and temperature of the coolant can be increased by increasing the power of the compressor 201 at the same rotation speed to avoid cooling all the coolant in the outdoor heat exchanger 202. Under such circumstances, all the coolant flowing into the outdoor heat exchanger 202 is not condensed when the outdoor heat exchanger 202 is deiced. That is, the coolant flowing out of the outdoor heat exchanger 202 is a gas-liquid two-phase coolant, and in this case, the coolant is still in a state of high temperature and high pressure. The coolant flowing out of the outdoor heat exchanger 202 absorbs the heat of the heat generated by the traction battery 205 in the battery cooler 113 to further evaporate so as to utilize the waste heat of the traction battery 205.

It can be understood that in such an implementation, further referring to FIG. 3, the heating water pump 107 conveys the cooling liquid to the water-cooling condenser 111, the cooling liquid flows into the liquid heater 208 from the cooling liquid output 1114 of the water-cooling condenser 111. The liquid heater 208 can heat the cooling liquid, and then the cooling liquid sequentially flows through the seventh port 1017 and the sixth port 1016 of the flow channel plate 101, finally flows into the heater core 207 to heat the passenger compartment, then flows into the first port a1 of the first five-way valve 136 from the eighth port 1018, and finally flows into the heating water pump 107 from the second port a2 of the first five-way valve 136 for a next cycle. The temperature of the cooling liquid flowing through the water-cooling condenser 111 is higher than that of the coolant flowing through the water-cooling condenser 111. It can be understood that because the liquid heater 208 heats the coolant to a temperature higher than that of the coolant, and a situation that the coolant condenses in the water-cooling condenser 111, thereby reducing the deicing effect can be prevented. In this way, while the cooling liquid under the circuit heats the air in the passenger compartment, a situation can be further prevented that the cooling liquid exchanges heat with the coolant when flowing through the water-cooling condenser 111, so that the heat of the coolant is insufficient, resulting in a poor deicing effect.

In addition, the battery water pump 108 conveys the cooling liquid to the traction battery 205. The cooling liquid cools the traction battery 205 and flows into the battery cooler 113 from the cooling liquid input 1131 of the battery cooler 113. The cooling liquid can use the heat generated by the traction battery 205 to evaporate the coolant flowing through the battery cooler 113, and then the cooling liquid flows through the first cooling liquid input 1121 and the first cooling liquid output 1122 of the water-water heat exchanger 112 and then enters the third port b3 of the second five-way valve 137, and finally flows into the battery water pump 108 from the fourth port b4 of the second five-way valve 137 for the next cycle. In this way, the cooling liquid under this circuit can not only cool the traction battery 205, but also use the heat generated by the traction battery 205 to evaporate the coolant flowing through the battery cooler 113.

At the same time, the compressor 201 outputs the coolant after being started. In this case, the output coolant is a high-temperature and high-pressure liquid. The coolant passes through the coolant input 1111 of the water-cooling condenser 111 and then flows to the water-cooling condenser 111. In the water-cooling condenser 111, the coolant substantially does not exchange heat with the cooling liquid in the water-cooling condenser 111. Then the coolant flows through the first throttle 119 and flows into the outdoor heat exchanger 202 from the first coolant interface 116 of the mounting base 115, and the outdoor heat exchanger 202 receives the high-temperature and high-pressure gaseous coolant discharged from the compressor 201. The coolant is cooled in the outdoor heat exchanger 202 and the heat emitted by the coolant can melt frost attached to the outdoor heat exchanger 202, and the cooled coolant flows through the third coolant interface 118, the check valve 122 and the second throttle 120 in sequence, and then enters the battery cooler 113 from the coolant input 1133 of the battery cooler 113. The coolant is evaporated by the cooling liquid flowing through the battery cooler 113. It can be understood that in this case, the coolant flowing out of the battery cooler 113 is a gaseous coolant, and the coolant flows from the first coolant output 1134 of the battery cooler 113 into the gas-liquid separator 209, and finally flows into the compressor 201 for the next cycle. Directions of arrows in FIG. 3 indicate flow directions of the cooling liquid and the coolant. In this way, the heat generated by the traction battery 205 can be used to evaporate the coolant, and the coolant can effectively deice the outdoor heat exchanger 202. That is, the heat generated by the traction battery 205 can be used to efficiently deice the outdoor heat exchanger 202 to utilize waste heat of the traction battery 205.

Referring to FIG. 12, in the implementation shown in FIG. 12, a four-way valve and a three-way valve may be used to separately replace one five-way valve. In this case, the first preset state of the valve assembly 110 is as follows: the first port c1 and the second port c2 of the first four-way valve 138 are connected with one another, the first port d1 and the third port d3 of the first three-way valve 140 are connected with one another, and the third port f3 and the fourth port f4 of the second four-way valve 139 are connected with one another. In this case, the flow directions of the coolant and the cooling liquid are similar to the flow directions of the coolant and the cooling liquid when the first five-way valve 136 and the second five-way valve 137 are used, and will not be repeated herein. For details, references may be made to FIG. 12, and the directions of the arrows in FIG. 12 indicate the flow directions of the coolant and the cooling liquid.

In addition, referring to FIG. 13, in the implementation shown in FIG. 13, it is also possible to use the eight-way valve 142 to replace the first five-way valve 136 and the second five-way valve 137. In this case, the first preset state of the valve assembly 110 is as follows: the first port g1 and the second port g2 of the eight-way valve 142 are connected with one another, and the sixth port g6 and the seventh port g7 of the eight-way valve are connected with one another. In this case, the flow directions of the coolant and the cooling liquid are similar to the flow directions of the coolant and the cooling liquid when the first five-way valve 136 and the second five-way valve 137 are used, and will not be repeated herein. For details, references may be made to FIG. 13, and the directions of the arrows in FIG. 13 indicate the flow directions of the coolant and the cooling liquid.

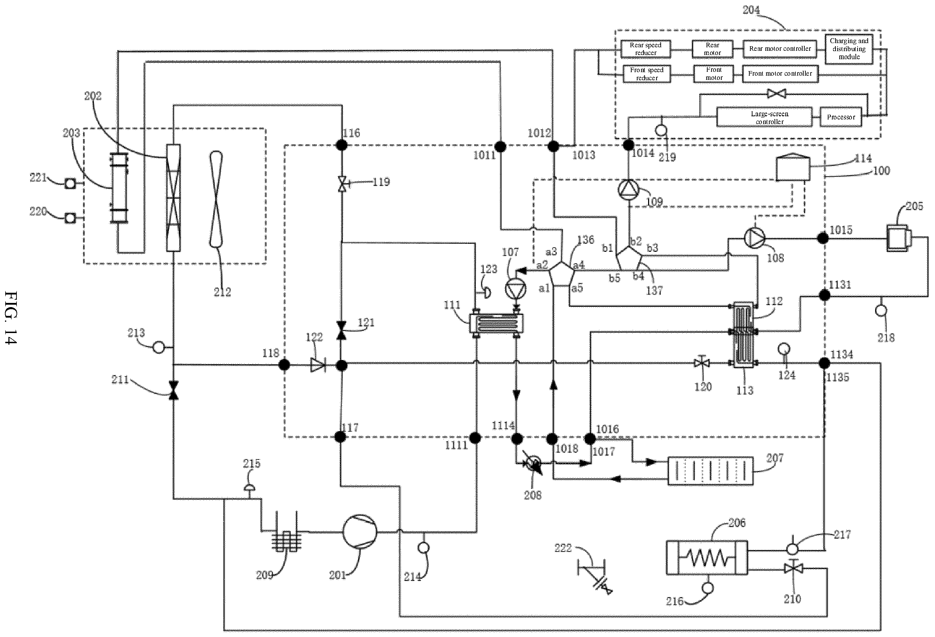

Referring to FIG. 14, in the implementation of the present invention, the thermal management system 200 further has a second operating mode. Specifically, a relationship of communication between the valve ports in the valve assembly 110 and the state of the pump assembly 106 can be controlled to let the thermal management system 200 enter and stay in a second operating mode, and in the second operating mode, the passenger compartment can be heated.

Referring to FIG. 14, in the second operating mode, the valve assembly 110 is in the second preset state to connect the inlet of the heating water pump 107 with the outlet of the heater core 207, the compressor 201 is shut down, and the first throttle 119 is in a closed state. In this case, the external shutoff valve 211, the shutoff valve 121, the second throttle 120, the check valve 122 and the third throttle 210 are all in a closed state. When the valve assembly 110 includes a first five-way valve 136 and a second five-way valve 137, the first preset state of the valve assembly 110 is as follows: a first port a1 and a second port a2 of the first five-way valve 136 are connected with one another.

In the second operating mode, the compressor 201 does not operate, the coolant does not circulate, and the heating water pump 107 is started; the heating water pump 107 conveys the cooling liquid to the water-cooling condenser 111, the cooling liquid flows into the liquid heater 208 from the cooling liquid output 1114 of the water-cooling condenser 111. The liquid heater 208 can heat the cooling liquid, and then the cooling liquid sequentially flows through the seventh port 1017 and the sixth port 1016 of the flow channel plate 101, finally flows into the heater core 207 to heat the passenger compartment, then flows into the first port a1 of the first five-way valve 136 from the eighth port 1018, and finally flows into the heating water pump 107 from the second port a2 of the first five-way valve 136 for a next cycle. In this way, when the temperature in the passenger compartment is relatively low, the thermal management system 200 can be controlled to enter the second operating mode to heat the air in the passenger compartment. The arrow in FIG. 14 indicates the flow direction of the cooling liquid.

Referring to FIG. 15, in the implementation shown in FIG. 15, a four-way valve and a three-way valve may alternatively be used to separately replace one five-way valve. In this case, the first preset state of the valve assembly 110 is as follows: the first port c1 and the second port c2 of the first four-way valve 138 are connected with one another, and the first port d1 and the third port d3 of the first three-way valve 140 are connected with one another to cause the thermal management system 200 to enter the first operating mode. In this case, the flow direction of the cooling liquid is similar to the flow direction of the cooling liquid when the first five-way valve 136 and the second five-way valve 137 are used, and will not be repeated herein. For details, references may be made to FIG. 15, and the direction of the arrow in FIG. 15 indicates the flow direction of the cooling liquid.

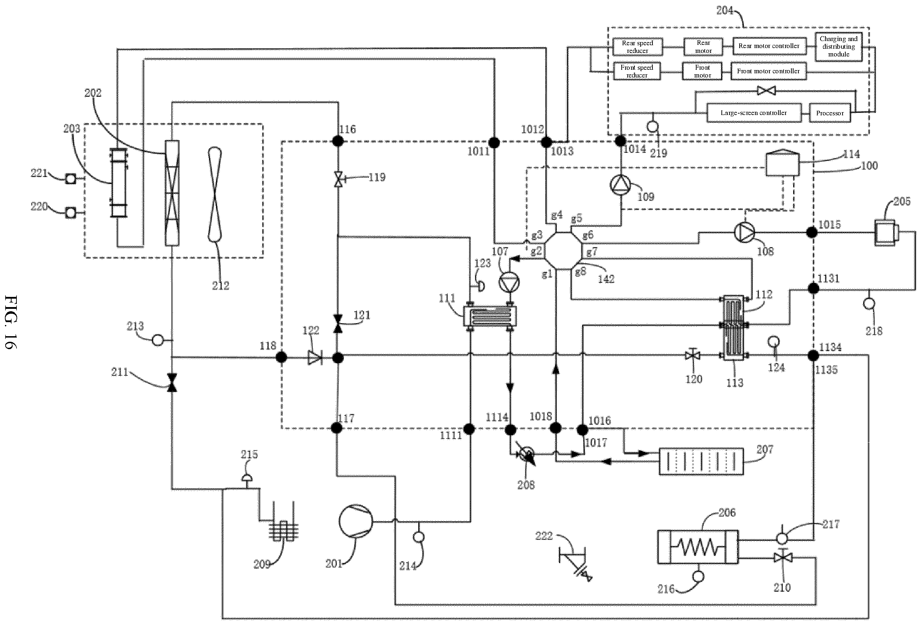

In addition, referring to FIG. 16, in the implementation shown in FIG. 16, it is also possible to use the eight-way valve 142 to replace the first five-way valve 136 and the second five-way valve 137. In this case, the first preset state of the valve assembly 110 is as follows: the first port g1 and the second port g2 of the eight-way valve 142 are connected with one another to cause the thermal management system 200 to enter the first operating mode. In this case, the flow direction of the cooling liquid is similar to the flow direction of the cooling liquid when the first five-way valve 136 and the second five-way valve 137 are used, and will not be repeated herein. For details, references may be made to FIG. 16, and the direction of the arrow in FIG. 16 indicates the flow direction of the cooling liquid.

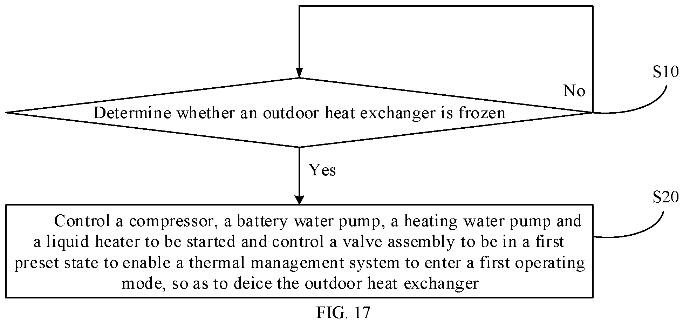

Referring to FIG. 17, an implementation of the present invention further provides a control method for a thermal management system 200, which is used for the thermal management system 200 according to the implementation of the present invention. The control method for the thermal management system 200 includes the following steps.

S 10: Determine whether the outdoor heat exchanger 202 is frozen.

S20: When the outdoor heat exchanger 202 is frozen, control the compressor 201, the battery water pump 108, the heating water pump 107 and the liquid heater 208 to be started and control the valve assembly 110 to be in the first preset state to cause the thermal management system 200 to enter the first operating mode, so as to deice the outdoor heat exchanger 202.

Steps S10 and S20 may be implemented by the onboard controller of the vehicle 300 (for example, a processor unit such as a vehicle control unit).

Specifically, in step S10, an icing situation of the outdoor heat exchanger 202 can be monitored by acquiring the temperature of the outdoor heat exchanger 202, and the low-pressure pressure sensor 215 arranged at the outlet of the outdoor heat exchanger 202 can detect the pressure inside the outdoor heat exchanger 202. When the pressure value of the outdoor heat exchanger 202 is lower than a preset pressure value, it can be determined that the outdoor heat exchanger 202 is in a frozen state. The preset pressure value may be set by a user or may be preset before the vehicle 300 leaves the factory.

In step S20, when it is determined that the outdoor heat exchanger 202 is frozen, the compressor 201, the battery water pump 108, the heating water pump 107 and the liquid heater 208 are controlled to be started and the valve assembly 110 is controlled to be in the first preset state to cause the thermal management system 200 to enter the first operating mode. The compressor 201 is started to output the high-temperature and high-pressure liquid coolant, and the coolant is utilized to deice the outdoor heat exchanger 202. In the first operating mode, the state of each device in the thermal management system 200, the flow direction of the coolant and the flow direction of the cooling liquid have been described in detail above. For details, references may be made to the above-mentioned description of the first operating mode, which will not be repeated herein.

When the valve assembly 110 includes the first five-way valve 136 and the second five-way valve 137, the step of controlling the valve assembly 110 to be in the first preset state may include:
controlling the first port a1 and the second port a2 of the first five-way valve 136 to are connected with one another, and controlling the third port b3 and the fourth port b4 of the second five-way valve 137 to are connected with one another.

The above-mentioned steps may be implemented by an onboard controller of the vehicle 300 (for example, a processor unit such as a vehicle control unit), which controls the first port a1 and the second port a2 of the first five-way valve 136 to are connected with one another, and controls the third port b3 and the fourth port b4 of the second five-way valve 137 to are connected with one another to cause the thermal management system 200 to enter the first operating mode.

In the first operating mode, the state of each device in the thermal management system 200, the flow direction of the coolant and the flow direction of the cooling liquid have been described in detail above. For details, references may be made to the above-mentioned description of the first operating mode, which will not be repeated herein.

When the valve assembly 110 includes the first four-way valve 138, the second four-way valve 139, the first three-way valve 140 and the second three-way valve 141, the step of controlling the valve assembly 110 to be in the first preset state includes:
controlling the first port c1 and the second port c2 of the first four-way valve 138 to are connected with one another, controlling the first port d1 and the third port d3 of the first three-way valve 140 to are connected with one another, and controlling the third port f3 and the fourth port f4 of the second four-way valve 139 to are connected with one another.

The above-mentioned steps may be implemented by an onboard controller of the vehicle 300 (for example, a processor unit such as a vehicle control unit), which controls the first port c1 and the second port c2 of the first four-way valve 138 to are connected with one another, controls the first port d1 and the third port d3 of the first three-way valve 140 to are connected with one another, and controls the third port f3 and the fourth port f4 of the second four-way valve 139 to are connected with one another to cause the thermal management system 200 to enter the first operating mode.

In the first operating mode, the state of each device in the thermal management system 200, the flow direction of the coolant and the flow direction of the cooling liquid have been described in detail above. For details, references may be made to the above-mentioned description of the first operating mode, which will not be repeated herein.

When the valve assembly 110 includes the eight-way valve 142, the step of controlling the valve assembly 110 to be in the first preset state includes:
controlling the first port g1 and the second port g2 of the eight-way valve 142 to are connected with one another, and controlling the sixth port g6 and the seventh port g7 of the eight-way valve to are connected with one another.

The above-mentioned steps may be implemented by an onboard controller of the vehicle 300 (for example, a processor unit such as a vehicle control unit), which controls the first port g1 and the second port g2 of the eight-way valve 142 to are connected with one another, and controls the sixth port g6 and the seventh port g7 of the eight-way valve to are connected with one another to cause the thermal management system 200 to enter the first operating mode.

In the first operating mode, the state of each device in the thermal management system 200, the flow direction of the coolant and the flow direction of the cooling liquid have been described in detail above. For details, references may be made to the above-mentioned description of the first operating mode, which will not be repeated herein.

In addition, it should be noted that the above is just an exemplary description of several modes that can be implemented by the integrated thermal management unit 100 and the thermal management system 200 in the present invention. It can be understood that the overall integrated thermal management unit 100 of the present invention may also control the valve assembly 110, the compressor 201, the pump assembly 106, and various throttles, as well as the shutoff valve 121 and the external shutoff valve 211 to be in different states to implement other modes besides the above-mentioned several modes, such as implementing separate air-conditioning refrigeration and air-conditioning heating, heating of the traction battery, natural heat dissipation of the electric drive component, thermal insulation for a battery by using heat of the electric drive component and self-heating dissipation of the traction battery. These will not be introduced one by one in the present invention.

In conclusion, the thermal management system 200 according to the implementations of the present invention is used for a vehicle 300. The thermal management system 200 includes a traction battery 205, a compressor 201, an outdoor heat exchanger 202, a gas-liquid separator 209, a heater core 207, a liquid heater 208 and an integrated thermal management unit 100. The integrated thermal management unit 100 is connected to the traction battery 205, the compressor 201, the outdoor heat exchanger 202, the gas-liquid separator 209, the heater core 207 and the liquid heater 208. The gas-liquid separator 209 is connected to an inlet of the compressor 201. The integrated thermal management unit 100 includes a flow channel plate 101, a pump assembly 106, a valve assembly 110, a water-cooling condenser 111 and a battery cooler 113.

A plurality of flow channels are formed in the flow channel plate 101. The pump assembly 106 includes a battery water pump 108 and a heating water pump 107, wherein an inlet of the battery water pump 108 is connected to the valve assembly 110 through the flow channel, an outlet of the battery water pump 108 is connected to an inlet of the traction battery 205 through the flow channel, and an inlet of the heating water pump 107 is connected to the valve assembly 110 through the flow channel.

The water-cooling condenser 111 and the battery cooler 113 are integrated on the flow channel plate 101. A coolant input 1111 of the water-cooling condenser 111 is connected to the compressor 201, a coolant output 1112 of the water-cooling condenser 111 is connected to an inlet of the outdoor heat exchanger 202, an outlet of the heating water pump 107 is connected to a cooling liquid input 1113 of the water-cooling condenser 111 through the flow channel, a cooling liquid output 1114 of the water-cooling condenser 111 is connected to an inlet of the liquid heater 208 through the flow channel, an outlet of the liquid heater 208 is connected to an inlet of the heater core 207, and an outlet of the heater core 207 is connected to the valve assembly 110.

A coolant input 1133 of the battery cooler 113 is connected to an outlet of the outdoor heat exchanger 202, a coolant output of the battery cooler 113 is connected to an inlet of the gas-liquid separator 209, a cooling liquid input 1131 of the battery cooler 113 is connected to an outlet of the traction battery 205, and a cooling liquid output 1132 of the battery cooler 113 is connected to the valve assembly 110.

The thermal management system 200 has a first operating mode; in the first operating mode, the compressor 201 and the battery water pump 108 are started, the heating water pump 107 and the liquid heater 208 are also started, and the valve assembly 110 is in a first preset state. In the first preset state, the valve assembly 110 connects the battery cooler 113 with the battery water pump 108, and connects the outlet of the heater core 207 with the inlet of the heating water pump 107. The battery water pump 108 conveys a cooling liquid flowing through the traction battery 205 to the battery cooler 113, the heating water pump 107 conveys the cooling liquid to the liquid heater 208, and the liquid heater 208 heats the cooling liquid to convey the cooling liquid to the heater core 207; a coolant flows through the water-cooling condenser 111 under the action of the compressor 201 and then enters the outdoor heat exchanger 202 for cooling to deice the outdoor heat exchanger 202, the cooled coolant enters the battery cooler 113 and exchanges heat with the cooling liquid flowing through the battery cooler 113 to absorb heat and evaporate, and the evaporated coolant flows into the gas-liquid separator 209 from the coolant output of the battery cooler. The temperature of the cooling liquid flowing through the water-cooling condenser 111 is higher than that of the coolant flowing through the water-cooling condenser 111.

As such, the high-temperature and high-pressure coolant flowing out of the compressor 201 is used to efficiently deice the outdoor heat exchanger 202, and the waste heat generated by the traction battery 205 can be carried by the cooling liquid to the battery cooler 113 to evaporate the coolant flowing through the battery cooler 113, so as to realize the function of deicing the outdoor heat exchanger 202 by using the heat of the traction battery 205. In addition, the pump assembly 106, the valve assembly 110, the water-cooling condenser 111, the water-water heat exchanger 112, the battery cooler 113 and other elements are integrated on the flow channel plate 101, which saves layout space and routing pipelines, and reduces costs.

## Claims

1. A thermal management system (200) for a vehicle (300), comprising a traction battery (205), a compressor (201), an outdoor heat exchanger (202), a gas-liquid separator (209), a heater core (207), a liquid heater (208) and an integrated thermal management unit (100),
wherein the integrated thermal management unit is connected to the compressor (201), the outdoor heat exchanger (202), the gas-liquid separator (209), the heater core (207) and the liquid heater (208), and the gas-liquid separator is connected to an inlet of the compressor, and the integrated thermal management unit comprises:
a flow channel plate (101) having a plurality of flow channels formed therein;
a pump assembly (106) and a valve assembly (110) both integrated on the flow channel plate, wherein the pump assembly comprises a battery water pump (108) and a heating water pump (107), an inlet of the battery water pump is connected to the valve assembly through the flow channel, an outlet of the battery water pump is connected to an inlet of the traction battery through the flow channel, and an inlet of the heating water pump is connected to the valve assembly through the flow channel; and
a water-cooling condenser (111) and a battery cooler (113) both integrated on the flow channel plate,
wherein a coolant input (1111) of the water-cooling condenser (111) is connected to the compressor, a coolant output (1112) of the water-cooling condenser is connected to an inlet of the outdoor heat exchanger (202), an outlet of the heating water pump (107) is connected to a cooling liquid input (1113) of the water-cooling condenser through the flow channel, a cooling liquid output (1114) of the water-cooling condenser is connected to an inlet of the liquid heater (208) through the flow channel, an outlet of the liquid heater is connected to an inlet of the heater core (207), and an outlet of the heater core is connected to the valve assembly (110), and
wherein a coolant input (1133) of the battery cooler (113) is connected to an outlet of the outdoor heat exchanger (202), the coolant output (1134) of the battery cooler is connected to an inlet of the gas-liquid separator (209), the cooling liquid input (1131) of the battery cooler is connected to an outlet of the traction battery (205), and the cooling liquid output (1132) of the battery cooler is connected to the valve assembly; and
wherein the thermal management system has a first operating mode, in which the compressor (201), the battery water pump (108), the heating water pump (107) and the liquid heater (208) are started, and the valve assembly (110) is in a first preset state;
wherein in the first preset state, the valve assembly (110) connects the battery cooler (113) and the battery water pump (108), and connects the outlet of the heater core (207) and the inlet of the heating water pump (107), the battery water pump conveys a cooling liquid flowing through the traction battery (205) to the battery cooler (113), the heating water pump conveys the cooling liquid to the liquid heater (208), and the liquid heater heats the cooling liquid to convey the cooling liquid to the heater core, a coolant is driven by the compressor (201) to flow through the water-cooling condenser (111) into the outdoor heat exchanger (202), where the coolant is cooled to deice the outdoor heat exchanger, the cooled coolant enters the battery cooler and exchanges heat with the cooling liquid flowing through the battery cooler to absorb heat and evaporate, and the evaporated coolant flows into the gas-liquid separator (209) from the coolant output of the battery cooler, wherein a temperature of the cooling liquid flowing through the water-cooling condenser is higher than a temperature of the coolant flowing through the water-cooling condenser.

2. The thermal management system (200) according to claim 1, wherein the integrated thermal management unit (100) further comprises a mounting base (115) and a first throttle (119), the mounting base is integrally mounted on the water-cooling condenser (111), a first coolant interface (116) is formed on the mounting base, the first coolant interface is connected with the coolant output (1112) of the water-cooling condenser, the first throttle is mounted on the mounting base and connected in series to the first coolant interface, the first coolant interface is connected to the inlet of the outdoor heat exchanger (202) of the vehicle, and in the first operating mode, the first throttle is in a fully open state.

3. The thermal management system (200) according to claim 2, further comprising an evaporator (206), wherein the integrated thermal management unit (100) further comprises a shutoff valve (121), the shutoff valve is mounted on the mounting base (115), a second coolant interface (117) is further formed on the mounting base, the second coolant interface is connected to the coolant output (1112) of the water-cooling condenser (111) and is connected in parallel to the first coolant interface (116), the shutoff valve is connected in series to the second coolant interface, the shutoff valve is configured to connect or disconnect the second coolant interface and the coolant output of the water-cooling condenser, the second coolant interface is connected to an inlet of the evaporator (206), an outlet of the evaporator is connected to the gas-liquid separator (209), and in the first operating mode, the shutoff valve is in a closed state.

4. The thermal management system (200) according to claim 3, wherein a third coolant interface (118) is further formed on the mounting base (115) and is connected with the second coolant interface (117), a check valve (122) is mounted at the third coolant interface, an external shutoff valve (211) is arranged between the outlet of the outdoor heat exchanger (202) and the gas-liquid separator (209), the third coolant interface is connected between the outlet of the outdoor heat exchanger and the external shutoff valve, and in the first operating mode, the external shutoff valve is in a closed state.

5. The thermal management system (200) according to claim 1, further comprising an electric drive component (204), a radiator (203) and an evaporator (206), wherein:
the integrated thermal management unit (100) further comprises a water-water heat exchanger (112) integrated on the flow channel plate (101), and the pump assembly further comprises a motor water pump (109);
an inlet of the motor water pump (109) is connected to the valve assembly (110) through the flow channel, an outlet of the motor water pump is connected to an inlet of the electric drive component (204) through the flow channel, the electric drive component is further connected to an inlet of the radiator (203), and an outlet of the radiator is connected to the valve assembly;
the battery cooler (113) and the water-water heat exchanger (112) are integrated, and the coolant output (1134) of the battery cooler is further connected to an outlet of the evaporator (206);
the cooling liquid input (1131) of the battery cooler (113) is connected to the outlet of the traction battery (205) and communicates with a first cooling liquid input (1121) and a first cooling liquid output (1122) of the water-water heat exchanger (112), the first cooling liquid output of the water-water heat exchanger is connected to the valve assembly (110) through the flow channel, a second cooling liquid input (1123) of the water-water heat exchanger is connected to an outlet of the liquid heater (208) through the flow channel, and a second cooling liquid output (1124) of the water-water heat exchanger is connected to the valve assembly through the flow channel;
a first port through to an eighth port (1011-1018) are formed on the flow channel plate (101), and the valve assembly (110) comprises a first five-way valve (136) and a second five-way valve (137);
a first port (a1) of the first five-way valve is connected to the eighth port (1018) through the flow channel, and the eighth port is connected to the outlet of the heater core (207);
a second port (a2) of the first five-way valve is connected with the inlet of the heating water pump (107) through the flow channel;
a third (a3) port of the first five-way valve is connected with the first port (1011) through the flow channel, and the first port is connected to the outlet of the radiator (203);
a fourth port (a4) of the first five-way valve is connected to a fifth port (b5) of the second five-way valve through the flow channel;
a fifth port (a5) of the first five-way valve is connected to the second cooling liquid output (1124) of the water-water heat exchanger (112) through the flow channel;
a first port (b1) of the second five-way valve is connected to the second port (1012) and the third port (1013) through the flow channel, the second port is connected to the inlet of the radiator (203), the third port is connected to the outlet of the electric drive component (204) of the vehicle, and the second port is connected with the third port;
a second port (b2) of the second five-way valve is connected to the inlet of the motor water pump (109) through the flow channel, the outlet of the motor water pump is connected with the fourth port (1014) through the flow channel, and the fourth port is connected to the inlet of the electric drive component (204);
a third port (b3) of the second five-way valve is connected to the first cooling liquid output (1122) of the water-water heat exchanger (112) through the flow channel;
a fourth port (b4) of the second five-way valve is connected to the inlet of the battery water pump (108) through the flow channel, the battery water pump is connected with the fifth port (1015) through the flow channel, and the fifth port is connected to the inlet of the traction battery (205);
the fifth port (b5) of the second five-way valve is connected to the fourth port (a4) of the first five-way valve, the second cooling liquid input (1123) of the water-water heat exchanger (112) is connected to the sixth port (1016) and the seventh port (1017), the sixth port is connected to the inlet of the heater core (207), the seventh port is connected to the outlet of the liquid heater (208), and the sixth port is connected with the seventh port; and
when the valve assembly (110) is in the first preset state, the first port (a1) and the second port (a2) of the first five-way valve are connected with one another, and the third port (b3) and the fourth port (b4) of the second five-way valve are connected with one another.

6. The thermal management system (200) according to claim 1, further comprising an electric drive component (204), a radiator (203) and an evaporator (206), wherein:
the integrated thermal management unit (100) further comprises a water-water heat exchanger (112) integrated on the flow channel plate (101), and the pump assembly further comprises a motor water pump (109);
an inlet of the motor water pump (109) is connected to the valve assembly (110) through the flow channel, an outlet of the motor water pump is connected to an inlet of the electric drive component (204) through the flow channel, the electric drive component is further connected to an inlet of the radiator (203), and an outlet of the radiator is connected to the valve assembly;
the battery cooler (113) and the water-water heat exchanger (112) are integrated, and the coolant output (1134) of the battery cooler is further connected to an outlet of the evaporator (206);
the cooling liquid input (1131) of the battery cooler (113) is connected to the outlet of the traction battery (205) and communicates with a first cooling liquid input (1121) and a first cooling liquid output (1122) of the water-water heat exchanger (112), the first cooling liquid output of the water-water heat exchanger is connected to the valve assembly (110) through the flow channel, a second cooling liquid input (1123) of the water-water heat exchanger is connected to an outlet of the liquid heater (208) through the flow channel, and a second cooling liquid output (1124) of the water-water heat exchanger is connected to the valve assembly through the flow channel;
a first port through to an eighth port (1011-1018) are formed on the flow channel plate (101), and the valve assembly (110) comprises a first four-way valve (138), a second four-way valve (139), a first three-way valve (140) and a second three-way valve (141);
a first port (c1) of the first four-way valve is connected to a third port (d3) of the first three-way valve, a first port (d1) of the first three-way valve is connected to the eighth port (1018) through the flow channel, and a second port (d2) of the first three-way valve is connected to the second cooling liquid output (1124) of the water-water heat exchanger (112) through the flow channel;
a second port (c2) of the first four-way valve is connected with the inlet of the heating water pump (107) through the flow channel;
a third port (c3) of the first four-way valve is connected with the first port (1011) through the flow channel, and the first port is connected to the outlet of the radiator (203);
a fourth port (c4) of the first four-way valve is connected with a second port (e2) of the second three-way valve through the flow channel;
a first port (e1) of the second three-way valve is connected to the second port (1012) and the third port (1013) through the flow channel, the second port is connected to the inlet of the radiator (203), the third port is connected to the outlet of the electric drive component (204), and the second port is connected with the third port;
a third port (e3) of the second three-way valve is connected with a first port (f1) of the second four-way valve,
a second port (f2) of the second four-way valve is connected to the inlet of the motor water pump (109) through the flow channel, the outlet of the motor water pump is connected with the fourth port (1014) through the flow channel, and the fourth port is connected to the inlet of the electric drive component (204);
a third port (f3) of the second four-way valve is connected to the first cooling liquid output (1122) of the water-water heat exchanger (112) through the flow channel;
a fourth port (f4) of the second four-way valve is connected to the inlet of the battery water pump (108) through the flow channel, the battery water pump is connected with the fifth port (1015) through the flow channel, and the fifth port is connected to the inlet of the traction battery (205);
the second cooling liquid input (1123) of the water-water heat exchanger (112) is connected to the sixth port (1016) and the seventh port (1017), the sixth port is connected to the inlet of the heater core (207), the seventh port is connected to the outlet of the liquid heater (208), and the sixth port is connected with the seventh port; and
when the valve assembly (110) is in the first preset state, the first port (c1) and the second port (c2) of the first four-way valve are connected with one another, the first port (d1) and the third port (d3) of the first three-way valve are connected with one another, and the third port (f3) and the fourth port (f4) of the second four-way valve are connected with one another.

7. The thermal management system (200) according to claim 1, further comprising an electric drive component (204), a radiator (203) and an evaporator (206), wherein:
the integrated thermal management unit (100) further comprises a water-water heat exchanger (112) integrated on the flow channel plate (101), and the pump assembly further comprises a motor water pump (109);
an inlet of the motor water pump (109) is connected to the valve assembly (110) through the flow channel, an outlet of the motor water pump is connected to an inlet of the electric drive component (204) through the flow channel, the electric drive component is further connected to an inlet of the radiator (203), and an outlet of the radiator is connected to the valve assembly;
the battery cooler (113) and the water-water heat exchanger (112) are integrated, and the coolant output (1134) of the battery cooler is further connected to an outlet of the evaporator (206);
the cooling liquid input (1131) of the battery cooler (113) is connected to the outlet of the traction battery (205) and communicates with a first cooling liquid input (1121) and a first cooling liquid output (1122) of the water-water heat exchanger (112), the first cooling liquid output of the water-water heat exchanger is connected to the valve assembly (110) through the flow channel, a second cooling liquid input (1123) of the water-water heat exchanger is connected to an outlet of the liquid heater (208) through the flow channel, and a second cooling liquid output (1124) of the water-water heat exchanger is connected to the valve assembly through the flow channel;
a first port through to an eighth port (1011-1018) are formed on the flow channel plate (101), and the valve assembly (110) comprises an eight-way valve (142);
a first port (g1) of the eight-way valve is connected to the eighth port (1018) through the flow channel, and the eighth port is connected to the outlet of the heater core (207);
a second port (g2) of the eight-way valve is connected with the inlet of the heating water pump (107) through the flow channel;
a third port (g3) of the eight-way valve is connected with the first port (1011) through the flow channel, and the first port is connected to the outlet of the radiator (203);
a fourth port (g4) of the eight-way valve is connected to the second port (1012) and the third port (1013) through the flow channel, the second port is connected to the inlet of the radiator (203), the third port is connected to the outlet of the electric drive component (204), and the second port is connected with the third port;
a fifth port (g5) of the eight-way valve is connected with the inlet of the motor water pump (109) through the flow channel, the outlet of the motor water pump is connected to the fourth port (1014) through the flow channel, and the fourth port is connected to the inlet of the electric drive component (204);
a sixth port (g6) of the eight-way valve is connected to the inlet of the battery water pump (108) through the flow channel, the battery water pump is connected with the fifth port (1015) through the flow channel, and the fifth port is connected to the inlet of the traction battery (205);
a seventh port (g7) of the eight-way valve is connected to the first cooling liquid output (1122) of the water-water heat exchanger (112) through the flow channel;
an eighth port (g8) of the eight-way valve is connected to the second cooling liquid output (1124) of the water-water heat exchanger (112) through the flow channel, the second cooling liquid input (1123) of the water-water heat exchanger is connected to the sixth port (1016) and the seventh port (1017), the sixth port is connected to the inlet of the heater core (207), the seventh port is connected to the outlet of the liquid heater (208), and the sixth port is connected with the seventh port; and
when the valve assembly (110) is in the first preset state, the first port (g1) and the second port (g2) of the eight-way valve are connected with one another, and the sixth port (g6) and the seventh port (g7) of the eight-way valve are connected with one another.

8. The thermal management system (200) according to claim 1, wherein the integrated thermal management unit (100) further comprises a second throttle (120) and a temperature sensor (124), both the second throttle and the temperature sensor are integrated on the battery cooler (113), the second throttle is located at the coolant input (1133) of the battery cooler, the temperature sensor is located at the coolant output (1134, 1135) of the battery cooler, and in the first operating mode, the second throttle is in a throttled state.

9. The thermal management system (200) according to claim 1, wherein the thermal management system further has a second operating mode; in the second operating mode, the compressor (201) and the battery water pump (108) are shut down, the heating water pump (107) and the liquid heater (208) operate, the valve assembly (110) is in a second preset state, the heating water pump conveys the cooling liquid to the liquid heater, and the liquid heater heats the cooling liquid to convey the cooling liquid to the heater core (207) to heat a passenger compartment of the vehicle (300).

10. A control method for the thermal management system (200) according to claim 1, wherein
the control method for the thermal management system comprises:
determining (S10) whether the outdoor heat exchanger (202) is frozen; and
when the outdoor heat exchanger is frozen, controlling (S20) the compressor (201), the battery water pump (108), the heating water pump (107) and the liquid heater (208) to start and causing the valve assembly (110) to be in the first preset state, to cause the thermal management system (200) to enter the first operating mode, so as to deice the outdoor heat exchanger (202).

11. The control method for the thermal management system (200) according to claim 10, wherein the thermal management system further comprises an electric drive component (204), a radiator (203) and an evaporator (206), wherein:
the integrated thermal management unit (100) further comprises a water-water heat exchanger (112) integrated on the flow channel plate (101), and the pump assembly further comprises a motor water pump (109);
an inlet of the motor water pump (109) is connected to the valve assembly (110) through the flow channel, an outlet of the motor water pump is connected to an inlet of the electric drive component (204) through the flow channel, the electric drive component is further connected to an inlet of the radiator (203), and an outlet of the radiator is connected to the valve assembly;
the battery cooler (113) and the water-water heat exchanger (112) are integrated, and the coolant output (1134) of the battery cooler is further connected to an outlet of the evaporator (206);
the cooling liquid input (1131) of the battery cooler (113) is connected to the outlet of the traction battery (205) and communicates with a first cooling liquid input (1121) and a first cooling liquid output (1122) of the water-water heat exchanger (112), the first cooling liquid output of the water-water heat exchanger is connected to the valve assembly (110) through the flow channel, a second cooling liquid input (1123) of the water-water heat exchanger is connected to an outlet of the liquid heater (208) through the flow channel, and a second cooling liquid output (1124) of the water-water heat exchanger is connected to the valve assembly through the flow channel;
a first port through to an eighth port (1011-1018) are formed on the flow channel plate (101), and the valve assembly (110) comprises a first five-way valve (136) and a second five-way valve (137);
a first port (a1) of the first five-way valve is connected to the eighth port (1018) through the flow channel, and the eighth port is connected to the outlet of the heater core (207);
a second port (a2) of the first five-way valve is connected with the inlet of the heating water pump (107) through the flow channel;
a third port (a3) of the first five-way valve is connected with the first port (1011) through the flow channel, and the first port is connected to the outlet of the radiator (203);
a fourth port (a4) of the first five-way valve is connected to a fifth port (b5) of the second five-way valve through the flow channel;
a fifth port (a5) of the first five-way valve is connected to the second cooling liquid output (1124) of the water-water heat exchanger (112) through the flow channel;
a first port (b1) of the second five-way valve is connected to the second port (1012) and the third port (1013) through the flow channel, the second port is connected to the inlet of the radiator (203), the third port is connected to the outlet of the electric drive component (204) of the vehicle, and the second port is connected with the third port;
a second port (b2) of the second five-way valve is connected to the inlet of the motor water pump (109) through the flow channel, the outlet of the motor water pump is connected with the fourth port (1014) through the flow channel, and the fourth port is connected to the inlet of the electric drive component (204);
a third port (b3) of the second five-way valve is connected to the first cooling liquid output (1122) of the water-water heat exchanger (112) through the flow channel;
a fourth port (b4) of the second five-way valve is connected to the inlet of the battery water pump (108) through the flow channel, the battery water pump is connected with the fifth port (1015) through the flow channel, and the fifth port is connected to the inlet of the traction battery (205);
the fifth port (b5) of the second five-way valve is connected to the fourth port (a4) of the first five-way valve, the second cooling liquid input (1123) of the water-water heat exchanger (112) is connected to the sixth port (1016) and the seventh port (1017), the sixth port is connected to the inlet of the heater core (207), the seventh port is connected to the outlet of the liquid heater (208), and the sixth port is connected with the seventh port; and
the controlling the valve assembly (110) to be in the first preset state comprises:
controlling the first port (a1) and the second port (a2) of the first five-way valve to be connected with one another, and controlling the third port (b3) and the fourth port (b4) of the second five-way valve to be connected with one another.

12. The control method for the thermal management system (200) according to claim 10, wherein the thermal management system further comprises an electric drive component (204), a radiator (203) and an evaporator (206), wherein:
the integrated thermal management unit (100) further comprises a water-water heat exchanger (112) integrated on the flow channel plate (101), and the pump assembly further comprises a motor water pump (109);
an inlet of the motor water pump (109) is connected to the valve assembly (110) through the flow channel, an outlet of the motor water pump is connected to an inlet of the electric drive component (204) through the flow channel, the electric drive component is further connected to an inlet of the radiator (203), and an outlet of the radiator is connected to the valve assembly;
the battery cooler (113) and the water-water heat exchanger (112) are integrated, and the coolant output (1134) of the battery cooler is further connected to an outlet of the evaporator (206);
the cooling liquid input (1131) of the battery cooler (113) is connected to the outlet of the traction battery (205) and communicates with a first cooling liquid input (1121) and a first cooling liquid output (1122) of the water-water heat exchanger (112), the first cooling liquid output of the water-water heat exchanger is connected to the valve assembly (110) through the flow channel, a second cooling liquid input (1123) of the water-water heat exchanger is connected to an outlet of the liquid heater (208) through the flow channel, and a second cooling liquid output (1124) of the water-water heat exchanger is connected to the valve assembly through the flow channel;
a first port through to an eighth port (1011-1018) are formed on the flow channel plate (101), and the valve assembly (110) comprises a first four-way valve (138), a second four-way valve (139), a first three-way valve (140) and a second three-way valve (141);
a first port (c1) of the first four-way valve is connected to a third port (d3) of the first three-way valve, a first port (d1) of the first three-way valve is connected to the eighth port (1018) through the flow channel, and a second port (d2) of the first three-way valve is connected to the second cooling liquid output (1124) of the water-water heat exchanger (112) through the flow channel;
a second port (c2) of the first four-way valve is connected with the inlet of the heating water pump (107) through the flow channel;
a third port (c3) of the first four-way valve is connected with the first port (1011) through the flow channel, and the first port is connected to the outlet of the radiator (203);
a fourth port (c4) of the first four-way valve is connected with a second port (e2) of the second three-way valve through the flow channel;
a first port (e1) of the second three-way valve is connected to the second port (1012) and the third port (1013) through the flow channel, the second port is connected to the inlet of the radiator (203), the third port is connected to the outlet of the electric drive component (204), and the second port is connected with the third port;
a third port (e3) of the second three-way valve is connected with a first port (f1) of the second four-way valve,
a second port (f2) of the second four-way valve is connected to the inlet of the motor water pump (109) through the flow channel, the outlet of the motor water pump is connected with the fourth port (1014) through the flow channel, and the fourth port is connected to the inlet of the electric drive component (204);
a third port (f3) of the second four-way valve is connected to the first cooling liquid output (1122) of the water-water heat exchanger (112) through the flow channel;
a fourth port (f3) of the second four-way valve is connected to the inlet of the battery water pump (108) through the flow channel, the battery water pump is connected with the fifth port (1015) through the flow channel, and the fifth port is connected to the inlet of the traction battery (205);
the second cooling liquid input (1123) of the water-water heat exchanger (112) is connected to the sixth port (1016) and the seventh port (1017), the sixth port is connected to the inlet of the heater core (207), the seventh port is connected to the outlet of the liquid heater (208), and the sixth port is connected with the seventh port; and
the controlling the valve assembly (110) to be in the first preset state comprises:
controlling the first port (c1) and the second port (c2) of the first four-way valve to be connected with one another, controlling the first port (d1) and the third port (d3) of the first three-way valve to be connected with one another, and controlling the third port (f3) and the fourth port (f4) of the second four-way valve to be connected with one another.

13. The control method for the thermal management system (200) according to claim 10, wherein the thermal management system further comprises an electric drive component (204), a radiator (203) and an evaporator (206), wherein:
the integrated thermal management unit (100) further comprises a water-water heat exchanger (112) integrated on the flow channel plate (101), and the pump assembly further comprises a motor water pump (109);
an inlet of the motor water pump (109) is connected to the valve assembly (110) through the flow channel, an outlet of the motor water pump is connected to an inlet of the electric drive component (204) through the flow channel, the electric drive component is further connected to an inlet of the radiator (203), and an outlet of the radiator is connected to the valve assembly;
the battery cooler (113) and the water-water heat exchanger (112) are integrated, and the coolant output (1134) of the battery cooler is further connected to an outlet of the evaporator (206);
the cooling liquid input (1131) of the battery cooler (113) is connected to the outlet of the traction battery (205) and communicates with a first cooling liquid input (1121) and a first cooling liquid output (1122) of the water-water heat exchanger (112), the first cooling liquid output of the water-water heat exchanger is connected to the valve assembly (110) through the flow channel, a second cooling liquid input (1123) of the water-water heat exchanger is connected to an outlet of the liquid heater (208) through the flow channel, and a second cooling liquid output (1124) of the water-water heat exchanger is connected to the valve assembly through the flow channel;
a first port through to an eighth port (1011-1018) are formed on the flow channel plate (101), and the valve assembly (110) comprises an eight-way valve;
a first port (g1) of the eight-way valve is connected to the eighth port (1018) through the flow channel, and the eighth port is connected to the outlet of the heater core (207);
a second port (g2) of the eight-way valve is connected with the inlet of the heating water pump (1077) through the flow channel;
a third port (g3) of the eight-way valve is connected with the first port (1011) through the flow channel, and the first port is connected to the outlet of the radiator (203);
a fourth port (g4) of the eight-way valve is connected to the second port (1012) and the third port (1013) through the flow channel, the second port is connected to the inlet of the radiator (203), the third port is connected to the outlet of the electric drive component (204), and the second port is connected with the third port;
a fifth port (g5) of the eight-way valve is connected with the inlet of the motor water pump (109) through the flow channel, the outlet of the motor water pump is connected to the fourth port (1014) through the flow channel, and the fourth port is connected to the inlet of the electric drive component (204);
a sixth port (g6) of the eight-way valve is connected to the inlet of the battery water pump (108) through the flow channel, the battery water pump is connected with the fifth port (1015) through the flow channel, and the fifth port is connected to the inlet of the traction battery (205);
a seventh port (g7) of the eight-way valve is connected to the first cooling liquid output (1122) of the water-water heat exchanger (112) through the flow channel;
an eighth port (g8) of the eight-way valve is connected to the second cooling liquid output (1124) of the water-water heat exchanger (112) through the flow channel, the second cooling liquid input (1123) of the water-water heat exchanger is connected to the sixth port (1016) and the seventh port (1017), the sixth port is connected to the inlet of the heater core (207), the seventh port is connected to the outlet of the liquid heater (208), and the sixth port is connected with the seventh port; and
the controlling the valve assembly (110) to be in the first preset state comprises:
controlling the first port (g1) and the second port (g2) of the eight-way valve to be connected with one another, and controlling the sixth port (g6) and the seventh port (g7) of the eight-way valve to be connected with one another.

14. A vehicle (300), comprising:
a vehicle body (301); and
the thermal management system (200) according to any one of claims 1 to 9, wherein the thermal management system is mounted on the vehicle body (301).

## Patentansprüche

1. Thermomanagementsystem (200) für ein Fahrzeug (300), umfassend eine Traktionsbatterie (205), einen Verdichter (201), einen Außenwärmetauscher (202), einen Gas-Flüssigkeits-Abscheider (209), einen Heizkörper (207), eine Flüssigkeitsheizung (208) und eine integrierte Thermomanagementeinheit (100),
wobei die integrierte Thermomanagementeinheit mit dem Verdichter (201), dem Außenwärmetauscher (202), dem Gas-Flüssigkeits-Abscheider (209), dem Heizkörper (207) und der Flüssigkeitsheizung (208) verbunden ist und der Gas-Flüssigkeits-Abscheider mit einem Einlass des Verdichters verbunden ist und die integrierte Thermomanagementeinheit Folgendes umfasst:
eine Strömungskanalplatte (101), die eine Vielzahl von darin gebildeten Strömungskanälen aufweist;
eine Pumpenanordnung (106) und eine Ventilanordnung (110), die beide auf der Strömungskanalplatte integriert sind, wobei die Pumpenanordnung eine Batteriewasserpumpe (108) und eine Heizwasserpumpe (107) umfasst, ein Einlass der Batteriewasserpumpe über den Strömungskanal mit der Ventilanordnung verbunden ist, ein Auslass der Batteriewasserpumpe über den Strömungskanal mit einem Einlass der Traktionsbatterie verbunden ist und ein Einlass der Heizwasserpumpe über den Strömungskanal mit der Ventilanordnung verbunden ist; und
einen Wasserkühlungsverflüssiger (111) und eine Batteriekühlvorrichtung (113), die beide auf der Strömungskanalplatte integriert sind,
wobei ein Kühlmitteleingang (1111) des Wasserkühlungsverflüssigers (111) mit dem Verdichter verbunden ist, ein Kühlmittelausgang (1112) des Wasserkühlungsverflüssigers mit einem Einlass des Außenwärmetauschers (202) verbunden ist, ein Auslass der Heizwasserpumpe (107) über den Strömungskanal mit einem Kühlflüssigkeitseingang (1113) des Wasserkühlungsverflüssigers verbunden ist, ein Kühlflüssigkeitsausgang (1114) des Wasserkühlungsverflüssigers über den Strömungskanal mit einem Einlass der Flüssigkeitsheizung (208) verbunden ist, ein Auslass der Flüssigkeitsheizung mit einem Einlass des Heizkörpers (207) verbunden ist und ein Auslass des Heizkörpers mit der Ventilanordnung (110) verbunden ist und
wobei ein Kühlmitteleingang (1133) der Batteriekühlvorrichtung (113) mit einem Auslass des Außenwärmetauschers (202) verbunden ist, der Kühlmittelausgang (1134) der Batteriekühlvorrichtung mit einem Einlass des Gas-Flüssigkeits-Abscheiders (209) verbunden ist, der Kühlflüssigkeitseingang (1131) der Batteriekühlvorrichtung mit einem Auslass der Traktionsbatterie (205) verbunden ist und der Kühlflüssigkeitsausgang (1132) der Batteriekühlvorrichtung mit der Ventilanordnung verbunden ist; und
wobei das Thermomanagementsystem einen ersten Betriebsmodus aufweist, in dem der Verdichter (201), die Batteriewasserpumpe (108), die Heizwasserpumpe (107) und die Flüssigkeitsheizung (208) eingeschaltet sind und sich die Ventilanordnung (110) in einem ersten voreingestellten Zustand befindet;
wobei in dem ersten voreingestellten Zustand die Ventilanordnung (110) die Batteriekühlvorrichtung (113) und die Batteriewasserpumpe (108) verbindet und den Auslass des Heizkörpers (207) und den Einlass der Heizwasserpumpe (107) verbindet, die Batteriewasserpumpe eine durch die Traktionsbatterie (205) strömende Kühlflüssigkeit zu der Batteriekühlvorrichtung (113) fördert, die Heizwasserpumpe die Kühlflüssigkeit zu der Flüssigkeitsheizung (208) fördert und die Flüssigkeitsheizung die Kühlflüssigkeit erwärmt, um die Kühlflüssigkeit zu dem Heizkörper zu fördern, ein Kühlmittel von dem Verdichter (201) angetrieben wird, um durch den Wasserkühlungsverflüssiger (111) in den Außenwärmetauscher (202) zu strömen, wo das Kühlmittel abgekühlt wird, um den Außenwärmetauscher enteisen, das abgekühlte Kühlmittel in die Batteriekühlvorrichtung eintritt und mit der durch die Batteriekühlvorrichtung strömenden Kühlflüssigkeit Wärme austauscht, um Wärme zu absorbieren und zu verdampfen, und das verdampfte Kühlmittel von dem Kühlmittelausgang der Batteriekühlvorrichtung in den Gas-Flüssigkeits-Abscheider (209) strömt, wobei eine Temperatur der durch den Wasserkühlungsverflüssiger strömenden Kühlflüssigkeit höher als eine Temperatur des durch den Wasserkühlungsverflüssiger strömenden Kühlmittels ist.

2. Thermomanagementsystem (200) nach Anspruch 1, wobei die integrierte Thermomanagementeinheit (100) ferner eine Montagebasis (115) und eine erste Drossel (119) umfasst, die Montagebasis integriert an dem Wasserkühlungsverflüssiger (111) angebracht ist, eine erste Kühlmittelschnittstelle (116) auf der Montagebasis gebildet ist, die erste Kühlmittelschnittstelle mit dem Kühlmittelausgang (1112) des Wasserkühlungsverflüssigers verbunden ist, die erste Drossel auf der Montagebasis angebracht ist und in Reihenschaltung mit der ersten Kühlmittelschnittstelle verbunden ist, die erste Kühlmittelschnittstelle mit dem Einlass des Außenwärmetauschers (202) des Fahrzeugs verbunden ist und sich in dem ersten Betriebsmodus die erste Drossel in einem vollständig geöffneten Zustand befindet.

3. Thermomanagementsystem (200) nach Anspruch 2, ferner umfassend einen Verdampfer (206), wobei die integrierte Thermomanagementeinheit (100) ferner ein Absperrventil (121) umfasst, das Absperrventil auf der Montagebasis (115) angebracht ist, eine zweite Kühlmittelschnittstelle (117) ferner auf der Montagebasis gebildet ist, die zweite Kühlmittelschnittstelle mit dem Kühlmittelausgang (1112) des Wasserkühlungsverflüssigers (111) verbunden ist und in Parallelschaltung mit der ersten Kühlmittelschnittstelle (116) verbunden ist, das Absperrventil in Reihenschaltung mit der zweiten Kühlmittelschnittstelle verbunden ist, das Absperrventil dazu konfiguriert ist, die zweite Kühlmittelschnittstelle und den Kühlmittelausgang des Wasserkühlungsverflüssigers zu verbinden oder zu trennen, die zweite Kühlmittelschnittstelle mit einem Einlass des Verdampfers (206) verbunden ist, ein Auslass des Verdampfers mit dem Gas-Flüssigkeits-Abscheider (209) verbunden ist und in dem ersten Betriebsmodus sich das Absperrventil in einem geschlossenen Zustand befindet.

4. Thermomanagementsystem (200) nach Anspruch 3, wobei eine dritte Kühlmittelschnittstelle (118) ferner auf der Montagebasis (115) gebildet ist und mit der zweiten Kühlmittelschnittstelle (117) verbunden ist, ein Rückschlagventil (122) an der dritten Kühlmittelschnittstelle angebracht ist, ein externes Absperrventil (211) zwischen dem Auslass des Außenwärmetauschers (202) und dem Gas-Flüssigkeits-Abscheider (209) angeordnet ist, die dritte Kühlmittelschnittstelle zwischen dem Auslass des Außenwärmetauschers und dem externen Absperrventil verbunden ist und sich in dem ersten Betriebsmodus das externe Absperrventil in einem geschlossenen Zustand befindet.

5. Thermomanagementsystem (200) nach Anspruch 1, ferner umfassend eine Elektroantriebskomponente (204), einen Kühler (203) und einen Verdampfer (206), wobei:
die integrierte Thermomanagementeinheit (100) ferner einen auf der Strömungskanalplatte (101) integrierten Wasser-Wasser-Wärmetauscher (112) umfasst und die Pumpenanordnung ferner eine Motorwasserpumpe (109) umfasst;
ein Einlass der Motorwasserpumpe (109) über den Strömungskanal mit der Ventilanordnung (110) verbunden ist, ein Auslass der Motorwasserpumpe über den Strömungskanal mit einem Einlass der Elektroantriebskomponente (204) verbunden ist, die Elektroantriebskomponente ferner mit einem Einlass des Kühlers (203) verbunden ist und ein Auslass des Kühlers mit der Ventilanordnung verbunden ist;
die Batteriekühlvorrichtung (113) und der Wasser-Wasser-Wärmetauscher (112) integriert sind und der Kühlmittelausgang (1134) der Batteriekühlvorrichtung ferner mit einem Auslass des Verdampfers (206) verbunden ist;
der Kühlflüssigkeitseingang (1131) der Batteriekühlvorrichtung (113) mit dem Auslass der Traktionsbatterie (205) verbunden ist und mit einem ersten Kühlflüssigkeitseingang (1121) und einem ersten Kühlflüssigkeitsausgang (1122) des Wasser-Wasser-Wärmetauschers (112) kommuniziert, der erste Kühlflüssigkeitsausgang des Wasser-Wasser-Wärmetauschers über den Strömungskanal mit der Ventilanordnung (110) verbunden ist, ein zweiter Kühlflüssigkeitseingang (1123) des Wasser-Wasser-Wärmetauschers über den Strömungskanal mit einem Auslass der Flüssigkeitsheizung (208) verbunden ist und ein zweiter Kühlflüssigkeitsausgang (1124) des Wasser-Wasser-Wärmetauschers über den Strömungskanal mit der Ventilanordnung verbunden ist;
ein erster Anschluss bis zu einem achten Anschluss (1011-1018) auf der Strömungskanalplatte (101) gebildet sind und die Ventilanordnung (110) ein erstes Fünfwegeventil (136) und ein zweites Fünfwegeventil (137) umfasst;
ein erster Anschluss (a1) des ersten Fünfwegeventils über den Strömungskanal mit dem achten Anschluss (1018) verbunden ist und der achte Anschluss mit dem Auslass des Heizkörpers (207) verbunden ist;
ein zweiter Anschluss (a2) des ersten Fünfwegeventils über den Strömungskanal mit dem Einlass der Heizwasserpumpe (107) verbunden ist;
ein dritter Anschluss (a3) des ersten Fünfwegeventils über den Strömungskanal mit dem ersten Anschluss (1011) verbunden ist und der erste Anschluss mit dem Auslass des Kühlers (203) verbunden ist;
ein vierter Anschluss (a4) des ersten Fünfwegeventils über den Strömungskanal mit einem fünften Anschluss (b5) des zweiten Fünfwegeventils verbunden ist;
ein fünfter Anschluss (a5) des ersten Fünfwegeventils über den Strömungskanal mit dem zweiten Kühlflüssigkeitsausgang (1124) des Wasser-Wasser-Wärmetauschers (112) verbunden ist;
ein erster Anschluss (b 1) des zweiten Fünfwegeventils über den Strömungskanal mit dem zweiten Anschluss (1012) und dem dritten Anschluss (1013) verbunden ist, der zweite Anschluss mit dem Einlass des Kühlers (203) verbunden ist, der dritte Anschluss mit dem Auslass der Elektroantriebskomponente (204) des Fahrzeugs verbunden ist und der zweite Anschluss mit dem dritten Anschluss verbunden ist;
ein zweiter Anschluss (b2) des zweiten Fünfwegeventils über den Strömungskanal mit dem Einlass der Motorwasserpumpe (109) verbunden ist, der Auslass der Motorwasserpumpe über den Strömungskanal mit dem vierten Anschluss (1014) verbunden ist und der vierte Anschluss mit dem Einlass der Elektroantriebskomponente (204) verbunden ist;
ein dritter Anschluss (b3) des zweiten Fünfwegeventils über den Strömungskanal mit dem ersten Kühlflüssigkeitsausgang (1122) des Wasser-Wasser-Wärmetauschers (112) verbunden ist;
ein vierter Anschluss (b4) des zweiten Fünfwegeventils über den Strömungskanal mit dem Einlass der Batteriewasserpumpe (108) verbunden ist, die Batteriewasserpumpe über den Strömungskanal mit dem fünften Anschluss (1015) verbunden ist und der fünfte Anschluss mit dem Einlass der Traktionsbatterie (205) verbunden ist;
der fünfte Anschluss (b5) des zweiten Fünfwegeventils mit dem vierten Anschluss (a4) des ersten Fünfwegeventils verbunden ist, der zweite Kühlflüssigkeitseingang (1123) des Wasser-Wasser-Wärmetauschers (112) mit dem sechsten Anschluss (1016) und dem siebten Anschluss (1017) verbunden ist, der sechste Anschluss mit dem Einlass des Heizkörpers (207) verbunden ist, der siebte Anschluss mit dem Auslass der Flüssigkeitsheizung (208) verbunden ist und der sechste Anschluss mit dem siebten Anschluss verbunden ist; und
wenn sich die Ventilanordnung (110) in dem ersten voreingestellten Zustand befindet, der erste Anschluss (a1) und der zweite Anschluss (a2) des ersten Fünfwegeventils miteinander verbunden sind und der dritte Anschluss (b3) und der vierte Anschluss (b4) des zweiten Fünfwegeventils miteinander verbunden sind.

6. Thermomanagementsystem (200) nach Anspruch 1, ferner umfassend eine Elektroantriebskomponente (204), einen Kühler (203) und einen Verdampfer (206), wobei:
die integrierte Thermomanagementeinheit (100) ferner einen auf der Strömungskanalplatte (101) integrierten Wasser-Wasser-Wärmetauscher (112) umfasst und die Pumpenanordnung ferner eine Motorwasserpumpe (109) umfasst;
ein Einlass der Motorwasserpumpe (109) über den Strömungskanal mit der Ventilanordnung (110) verbunden ist, ein Auslass der Motorwasserpumpe über den Strömungskanal mit einem Einlass der Elektroantriebskomponente (204) verbunden ist, die Elektroantriebskomponente ferner mit einem Einlass des Kühlers (203) verbunden ist und ein Auslass des Kühlers mit der Ventilanordnung verbunden ist;
die Batteriekühlvorrichtung (113) und der Wasser-Wasser-Wärmetauscher (112) integriert sind und der Kühlmittelausgang (1134) der Batteriekühlvorrichtung ferner mit einem Auslass des Verdampfers (206) verbunden ist;
der Kühlflüssigkeitseingang (1131) der Batteriekühlvorrichtung (113) mit dem Auslass der Traktionsbatterie (205) verbunden ist und mit einem ersten Kühlflüssigkeitseingang (1121) und einem ersten Kühlflüssigkeitsausgang (1122) des Wasser-Wasser-Wärmetauschers (112) kommuniziert, der erste Kühlflüssigkeitsausgang des Wasser-Wasser-Wärmetauschers über den Strömungskanal mit der Ventilanordnung (110) verbunden ist, ein zweiter Kühlflüssigkeitseingang (1123) des Wasser-Wasser-Wärmetauschers über den Strömungskanal mit einem Auslass der Flüssigkeitsheizung (208) verbunden ist und ein zweiter Kühlflüssigkeitsausgang (1124) des Wasser-Wasser-Wärmetauschers über den Strömungskanal mit der Ventilanordnung verbunden ist;
ein erster Anschluss bis zu einem achten Anschluss (1011-1018) auf der Strömungskanalplatte (101) gebildet sind und die Ventilanordnung (110) ein erstes Vierwegeventil (138), ein zweites Vierwegeventil (139), ein erstes Dreiwegeventil (140) und ein zweites Dreiwegeventil (141) umfasst;
ein erster Anschluss (c1) des ersten Vierwegeventils mit einem dritten Anschluss (d3) des ersten Dreiwegeventils verbunden ist, ein erster Anschluss (d1) des ersten Dreiwegeventils über den Strömungskanal mit dem achten Anschluss (1018) verbunden ist und ein zweiter Anschluss (d2) des ersten Dreiwegeventils über den Strömungskanal mit dem zweiten Kühlflüssigkeitsausgang (1124) des Wasser-Wasser-Wärmetauschers (112) verbunden ist;
ein zweiter Anschluss (c2) des ersten Vierwegeventils über den Strömungskanal mit dem Einlass der Heizwasserpumpe (107) verbunden ist;
ein dritter Anschluss (c3) des ersten Vierwegeventils über den Strömungskanal mit dem ersten Anschluss (1011) verbunden ist und der erste Anschluss mit dem Auslass des Kühlers (203) verbunden ist;
ein vierter Anschluss (c4) des ersten Vierwegeventils über den Strömungskanal mit einem zweiten Anschluss (e2) des zweiten Dreiwegeventils verbunden ist;
ein erster Anschluss (e1) des zweiten Dreiwegeventils über den Strömungskanal mit dem zweiten Anschluss (1012) und dem dritten Anschluss (1013) verbunden ist, der zweite Anschluss mit dem Einlass des Kühlers (203) verbunden ist, der dritte Anschluss mit dem Auslass der Elektroantriebskomponente (204) verbunden ist und der zweite Anschluss mit dem dritten Anschluss verbunden ist;
ein dritter Anschluss (e3) des zweiten Dreiwegeventils mit einem ersten Anschluss (f1) des zweiten Vierwegeventils verbunden ist;
ein zweiter Anschluss (f2) des zweiten Vierwegeventils über den Strömungskanal mit dem Einlass der Motorwasserpumpe (109) verbunden ist, der Auslass der Motorwasserpumpe über den Strömungskanal mit dem vierten Anschluss (1014) verbunden ist und der vierte Anschluss mit dem Einlass der Elektroantriebskomponente (204) verbunden ist;
ein dritter Anschluss (f3) des zweiten Vierwegeventils über den Strömungskanal mit dem ersten Kühlflüssigkeitsausgang (1122) des Wasser-Wasser-Wärmetauschers (112) verbunden ist;
ein vierter Anschluss (f4) des zweiten Vierwegeventils über den Strömungskanal mit dem Einlass der Batteriewasserpumpe (108) verbunden ist, die Batteriewasserpumpe über den Strömungskanal mit dem fünften Anschluss (1015) verbunden ist und der fünfte Anschluss mit dem Einlass der Traktionsbatterie (205) verbunden ist;
der zweite Kühlflüssigkeitseingang (1123) des Wasser-Wasser-Wärmetauschers (112) mit dem sechsten Anschluss (1016) und dem siebten Anschluss (1017) verbunden ist, der sechste Anschluss mit dem Einlass des Heizkörpers (207) verbunden ist, der siebte Anschluss mit dem Auslass der Flüssigkeitsheizung (208) verbunden ist und der sechste Anschluss mit dem siebten Anschluss verbunden ist; und
wenn sich die Ventilanordnung (110) in dem ersten voreingestellten Zustand befindet, der erste Anschluss (c1) und der zweite Anschluss (c2) des ersten Vierwegeventils miteinander verbunden sind, der erste Anschluss (d1) und der dritte Anschluss (d3) des ersten Dreiwegeventils miteinander verbunden sind, und der dritte Anschluss (f3) und der vierte Anschluss (f4) des zweiten Vierwegeventils miteinander verbunden sind.

7. Thermomanagementsystem (200) nach Anspruch 1, ferner umfassend eine Elektroantriebskomponente (204), einen Kühler (203) und einen Verdampfer (206), wobei:
die integrierte Thermomanagementeinheit (100) ferner einen auf der Strömungskanalplatte (101) integrierten Wasser-Wasser-Wärmetauscher (112) umfasst und die Pumpenanordnung ferner eine Motorwasserpumpe (109) umfasst;
ein Einlass der Motorwasserpumpe (109) über den Strömungskanal mit der Ventilanordnung (110) verbunden ist, ein Auslass der Motorwasserpumpe über den Strömungskanal mit einem Einlass der Elektroantriebskomponente (204) verbunden ist, die Elektroantriebskomponente ferner mit einem Einlass des Kühlers (203) verbunden ist und ein Auslass des Kühlers mit der Ventilanordnung verbunden ist;
die Batteriekühlvorrichtung (113) und der Wasser-Wasser-Wärmetauscher (112) integriert sind und der Kühlmittelausgang (1134) der Batteriekühlvorrichtung ferner mit einem Auslass des Verdampfers (206) verbunden ist;
der Kühlflüssigkeitseingang (1131) der Batteriekühlvorrichtung (113) mit dem Auslass der Traktionsbatterie (205) verbunden ist und mit einem ersten Kühlflüssigkeitseingang (1121) und einem ersten Kühlflüssigkeitsausgang (1122) des Wasser-Wasser-Wärmetauschers (112) kommuniziert, der erste Kühlflüssigkeitsausgang des Wasser-Wasser-Wärmetauschers über den Strömungskanal mit der Ventilanordnung (110) verbunden ist, ein zweiter Kühlflüssigkeitseingang (1123) des Wasser-Wasser-Wärmetauschers über den Strömungskanal mit einem Auslass der Flüssigkeitsheizung (208) verbunden ist und ein zweiter Kühlflüssigkeitsausgang (1124) des Wasser-Wasser-Wärmetauschers über den Strömungskanal mit der Ventilanordnung verbunden ist;
ein erster Anschluss bis zu einem achten Anschluss (1011-1018) auf der Strömungskanalplatte (101) gebildet sind und die Ventilanordnung (110) ein Achtwegeventil (142) umfasst;
ein erster Anschluss (g1) des Achtwegeventils über den Strömungskanal mit dem achten Anschluss (1018) verbunden ist und der achte Anschluss mit dem Auslass des Heizkörpers (207) verbunden ist;
ein zweiter Anschluss (g2) des Achtwegeventils über den Strömungskanal mit dem Einlass der Heizwasserpumpe (107) verbunden ist;
ein dritter Anschluss (g3) des Achtwegeventils über den Strömungskanal mit dem ersten Anschluss (1011) verbunden ist und der erste Anschluss mit dem Auslass des Kühlers (203) verbunden ist;
ein vierter Anschluss (g4) des Achtwegeventils über den Strömungskanal mit dem zweiten Anschluss (1012) und dem dritten Anschluss (1013) verbunden ist, der zweite Anschluss mit dem Einlass des Kühlers (203) verbunden ist, der dritte Anschluss mit dem Auslass der Elektroantriebskomponente (204) verbunden ist und der zweite Anschluss mit dem dritten Anschluss verbunden ist;
ein fünfter Anschluss (g5) des Achtwegeventils über den Strömungskanal mit dem Einlass der Motorwasserpumpe (109) verbunden ist, der Auslass der Motorwasserpumpe über den Strömungskanal mit dem vierten Anschluss (1014) verbunden ist und der vierte Anschluss mit dem Einlass der Elektroantriebskomponente (204) verbunden ist;
ein sechster Anschluss (g6) des Achtwegeventils über den Strömungskanal mit dem Einlass der Batteriewasserpumpe (108) verbunden ist, die Batteriewasserpumpe über den Strömungskanal mit dem fünften Anschluss (1015) verbunden ist und der fünfte Anschluss mit dem Einlass der Traktionsbatterie (205) verbunden ist;
ein siebter Anschluss (g7) des Achtwegeventils über den Strömungskanal mit dem ersten Kühlflüssigkeitsausgang (1122) des Wasser-Wasser-Wärmetauschers (112) verbunden ist;
ein achter Anschluss (g8) des Achtwegeventils über den Strömungskanal mit dem zweiten Kühlflüssigkeitsausgang (1124) des Wasser-Wasser-Wärmetauschers (112) verbunden ist, der zweite Kühlflüssigkeitseingang (1123) des Wasser-Wasser-Wärmetauschers mit dem sechsten Anschluss (1016) und dem siebten Anschluss (1017) verbunden ist, der sechste Anschluss mit dem Einlass des Heizkörpers (207) verbunden ist, der siebte Anschluss mit dem Auslass der Flüssigkeitsheizung (208) verbunden ist und der sechste Anschluss mit dem siebten Anschluss verbunden ist; und
wenn sich die Ventilanordnung (110) in dem ersten voreingestellten Zustand befindet, der erste Anschluss (g1) und der zweite Anschluss (g2) des Achtwegeventils miteinander verbunden sind und der sechste Anschluss (g6) und der siebte Anschluss (g7) des Achtwegeventils miteinander verbunden sind.

8. Thermomanagementsystem (200) nach Anspruch 1, wobei die integrierte Thermomanagementeinheit (100) ferner eine zweite Drossel (120) und einen Temperatursensor (124) umfasst, sowohl die zweite Drossel als auch der Temperatursensor an der Batteriekühlvorrichtung (113) integriert sind, sich die zweite Drossel an dem Kühlmitteleingang (1133) der Batteriekühlvorrichtung befindet, sich der Temperatursensor an dem Kühlmittelausgang (1134, 1135) der Batteriekühlvorrichtung befindet und sich in dem ersten Betriebsmodus die zweite Drossel in einem gedrosselten Zustand befindet.

9. Thermomanagementsystem (200) nach Anspruch 1, wobei das Thermomanagementsystem ferner einen zweiten Betriebsmodus aufweist; in dem zweiten Betriebsmodus der Verdichter (201) und die Batteriewasserpumpe (108) ausgeschaltet sind, die Heizwasserpumpe (107) und die Flüssigkeitsheizung (208) laufen, sich die Ventilanordnung (110) in einem zweiten voreingestellten Zustand befindet, die Heizwasserpumpe die Kühlflüssigkeit zu der Flüssigkeitsheizung fördert und die Flüssigkeitsheizung die Kühlflüssigkeit erwärmt, um die Kühlflüssigkeit zu dem Heizkörper (207) zu fördern, um einen Fahrgastraum des Fahrzeugs (300) zu erwärmen.

10. Steuerverfahren für das Thermomanagementsystem (200) nach Anspruch 1, wobei
das Steuerverfahren für das Thermomanagementsystem Folgendes umfasst:
Bestimmen (S10), ob der Außenwärmetauscher (202) eingefroren ist; und
wenn der Außenwärmetauscher eingefroren ist, Steuern (S20) des Verdichters (201), der Batteriewasserpumpe (108), der Heizwasserpumpe (107) und der Flüssigkeitsheizung (208) dazu, einzuschalten und Bewirken, dass sich die Ventilanordnung (110) in dem ersten voreingestellten Zustand befindet, um zu bewirken, dass das Thermomanagementsystem (200) in den ersten Betriebsmodus wechselt, um den Außenwärmetauscher (202) zu enteisen.

11. Steuerverfahren für das Thermomanagementsystem (200) nach Anspruch 10, wobei das Thermomanagementsystem ferner eine Elektroantriebskomponente (204), einen Kühler (203) und einen Verdampfer (206) umfasst, wobei:
die integrierte Thermomanagementeinheit (100) ferner einen auf der Strömungskanalplatte (101) integrierten Wasser-Wasser-Wärmetauscher (112) umfasst und die Pumpenanordnung ferner eine Motorwasserpumpe (109) umfasst;
ein Einlass der Motorwasserpumpe (109) über den Strömungskanal mit der Ventilanordnung (110) verbunden ist, ein Auslass der Motorwasserpumpe über den Strömungskanal mit einem Einlass der Elektroantriebskomponente (204) verbunden ist, die Elektroantriebskomponente ferner mit einem Einlass des Kühlers (203) verbunden ist und ein Auslass des Kühlers mit der Ventilanordnung verbunden ist;
die Batteriekühlvorrichtung (113) und der Wasser-Wasser-Wärmetauscher (112) integriert sind und der Kühlmittelausgang (1134) der Batteriekühlvorrichtung ferner mit einem Auslass des Verdampfers (206) verbunden ist;
der Kühlflüssigkeitseingang (1131) der Batteriekühlvorrichtung (113) mit dem Auslass der Traktionsbatterie (205) verbunden ist und mit einem ersten Kühlflüssigkeitseingang (1121) und einem ersten Kühlflüssigkeitsausgang (1122) des Wasser-Wasser-Wärmetauschers (112) kommuniziert, der erste Kühlflüssigkeitsausgang des Wasser-Wasser-Wärmetauschers über den Strömungskanal mit der Ventilanordnung (110) verbunden ist, ein zweiter Kühlflüssigkeitseingang (1123) des Wasser-Wasser-Wärmetauschers über den Strömungskanal mit einem Auslass der Flüssigkeitsheizung (208) verbunden ist und ein zweiter Kühlflüssigkeitsausgang (1124) des Wasser-Wasser-Wärmetauschers über den Strömungskanal mit der Ventilanordnung verbunden ist;
ein erster Anschluss bis zu einem achten Anschluss (1011-1018) auf der Strömungskanalplatte (101) gebildet sind und die Ventilanordnung (110) ein erstes Fünfwegeventil (136) und ein zweites Fünfwegeventil (137) umfasst;
ein erster Anschluss (a1) des ersten Fünfwegeventils über den Strömungskanal mit dem achten Anschluss (1018) verbunden ist und der achte Anschluss mit dem Auslass des Heizkörpers (207) verbunden ist;
ein zweiter Anschluss (a2) des ersten Fünfwegeventils über den Strömungskanal mit dem Einlass der Heizwasserpumpe (107) verbunden ist;
ein dritter Anschluss (a3) des ersten Fünfwegeventils über den Strömungskanal mit dem ersten Anschluss (1011) verbunden ist und der erste Anschluss mit dem Auslass des Kühlers (203) verbunden ist;
ein vierter Anschluss (a4) des ersten Fünfwegeventils über den Strömungskanal mit einem fünften Anschluss (b5) des zweiten Fünfwegeventils verbunden ist;
ein fünfter Anschluss (a5) des ersten Fünfwegeventils über den Strömungskanal mit dem zweiten Kühlflüssigkeitsausgang (1124) des Wasser-Wasser-Wärmetauschers (112) verbunden ist;
ein erster Anschluss (b 1) des zweiten Fünfwegeventils über den Strömungskanal mit dem zweiten Anschluss (1012) und dem dritten Anschluss (1013) verbunden ist, der zweite Anschluss mit dem Einlass des Kühlers (203) verbunden ist, der dritte Anschluss mit dem Auslass der Elektroantriebskomponente (204) des Fahrzeugs verbunden ist und der zweite Anschluss mit dem dritten Anschluss verbunden ist;
ein zweiter Anschluss (b2) des zweiten Fünfwegeventils über den Strömungskanal mit dem Einlass der Motorwasserpumpe (109) verbunden ist, der Auslass der Motorwasserpumpe über den Strömungskanal mit dem vierten Anschluss (1014) verbunden ist und der vierte Anschluss mit dem Einlass der Elektroantriebskomponente (204) verbunden ist;
ein dritter Anschluss (b3) des zweiten Fünfwegeventils über den Strömungskanal mit dem ersten Kühlflüssigkeitsausgang (1122) des Wasser-Wasser-Wärmetauschers (112) verbunden ist;
ein vierter Anschluss (b4) des zweiten Fünfwegeventils über den Strömungskanal mit dem Einlass der Batteriewasserpumpe (108) verbunden ist, die Batteriewasserpumpe über den Strömungskanal mit dem fünften Anschluss (1015) verbunden ist und der fünfte Anschluss mit dem Einlass der Traktionsbatterie (205) verbunden ist;
der fünfte Anschluss (b5) des zweiten Fünfwegeventils mit dem vierten Anschluss (a4) des ersten Fünfwegeventils verbunden ist, der zweite Kühlflüssigkeitseingang (1123) des Wasser-Wasser-Wärmetauschers (112) mit dem sechsten Anschluss (1016) und dem siebten Anschluss (1017) verbunden ist, der sechste Anschluss mit dem Einlass des Heizkörpers (207) verbunden ist, der siebte Anschluss mit dem Auslass der Flüssigkeitsheizung (208) verbunden ist und der sechste Anschluss mit dem siebten Anschluss verbunden ist; und
das Steuern der Ventilanordnung (110) dazu, sich in dem ersten voreingestellten Zustand zu befinden, Folgendes umfasst:
Steuern des ersten Anschlusses (a1) und des zweiten Anschlusses (a2) des ersten Fünfwegeventils dazu, miteinander verbunden zu sein, und Steuern des dritten Anschlusses (b3) und des vierten Anschlusses (b4) des zweiten Fünfwegeventils dazu, miteinander verbunden zu sein.

12. Steuerverfahren für das Thermomanagementsystem (200) nach Anspruch 10, wobei das Thermomanagementsystem ferner eine Elektroantriebskomponente (204), einen Kühler (203) und einen Verdampfer (206) umfasst, wobei:
die integrierte Thermomanagementeinheit (100) ferner einen auf der Strömungskanalplatte (101) integrierten Wasser-Wasser-Wärmetauscher (112) umfasst und die Pumpenanordnung ferner eine Motorwasserpumpe (109) umfasst;
ein Einlass der Motorwasserpumpe (109) über den Strömungskanal mit der Ventilanordnung (110) verbunden ist, ein Auslass der Motorwasserpumpe über den Strömungskanal mit einem Einlass der Elektroantriebskomponente (204) verbunden ist, die Elektroantriebskomponente ferner mit einem Einlass des Kühlers (203) verbunden ist und ein Auslass des Kühlers mit der Ventilanordnung verbunden ist;
die Batteriekühlvorrichtung (113) und der Wasser-Wasser-Wärmetauscher (112) integriert sind und der Kühlmittelausgang (1134) der Batteriekühlvorrichtung ferner mit einem Auslass des Verdampfers (206) verbunden ist;
der Kühlflüssigkeitseingang (1131) der Batteriekühlvorrichtung (113) mit dem Auslass der Traktionsbatterie (205) verbunden ist und mit einem ersten Kühlflüssigkeitseingang (1121) und einem ersten Kühlflüssigkeitsausgang (1122) des Wasser-Wasser-Wärmetauschers (112) kommuniziert, der erste Kühlflüssigkeitsausgang des Wasser-Wasser-Wärmetauschers über den Strömungskanal mit der Ventilanordnung (110) verbunden ist, ein zweiter Kühlflüssigkeitseingang (1123) des Wasser-Wasser-Wärmetauschers über den Strömungskanal mit einem Auslass der Flüssigkeitsheizung (208) verbunden ist und ein zweiter Kühlflüssigkeitsausgang (1124) des Wasser-Wasser-Wärmetauschers über den Strömungskanal mit der Ventilanordnung verbunden ist;
ein erster Anschluss bis zu einem achten Anschluss (1011-1018) auf der Strömungskanalplatte (101) gebildet sind und die Ventilanordnung (110) ein erstes Vierwegeventil (138), ein zweites Vierwegeventil (139), ein erstes Dreiwegeventil (140) und ein zweites Dreiwegeventil (141) umfasst;
ein erster Anschluss (c1) des ersten Vierwegeventils mit einem dritten Anschluss (d3) des ersten Dreiwegeventils verbunden ist, ein erster Anschluss (d1) des ersten Dreiwegeventils über den Strömungskanal mit dem achten Anschluss (1018) verbunden ist und ein zweiter Anschluss (d2) des ersten Dreiwegeventils über den Strömungskanal mit dem zweiten Kühlflüssigkeitsausgang (1124) des Wasser-Wasser-Wärmetauschers (112) verbunden ist;
ein zweiter Anschluss (c2) des ersten Vierwegeventils über den Strömungskanal mit dem Einlass der Heizwasserpumpe (107) verbunden ist;
ein dritter Anschluss (c3) des ersten Vierwegeventils über den Strömungskanal mit dem ersten Anschluss (1011) verbunden ist und der erste Anschluss mit dem Auslass des Kühlers (203) verbunden ist;
ein vierter Anschluss (c4) des ersten Vierwegeventils über den Strömungskanal mit einem zweiten Anschluss (e2) des zweiten Dreiwegeventils verbunden ist;
ein erster Anschluss (e1) des zweiten Dreiwegeventils über den Strömungskanal mit dem zweiten Anschluss (1012) und dem dritten Anschluss (1013) verbunden ist, der zweite Anschluss mit dem Einlass des Kühlers (203) verbunden ist, der dritte Anschluss mit dem Auslass der Elektroantriebskomponente (204) verbunden ist und der zweite Anschluss mit dem dritten Anschluss verbunden ist;
ein dritter Anschluss (e3) des zweiten Dreiwegeventils mit einem ersten Anschluss (f1) des zweiten Vierwegeventils verbunden ist;
ein zweiter Anschluss (f2) des zweiten Vierwegeventils über den Strömungskanal mit dem Einlass der Motorwasserpumpe (109) verbunden ist, der Auslass der Motorwasserpumpe über den Strömungskanal mit dem vierten Anschluss (1014) verbunden ist und der vierte Anschluss mit dem Einlass der Elektroantriebskomponente (204) verbunden ist;
ein dritter Anschluss (f3) des zweiten Vierwegeventils über den Strömungskanal mit dem ersten Kühlflüssigkeitsausgang (1122) des Wasser-Wasser-Wärmetauschers (112) verbunden ist;
ein vierter Anschluss (f3) des zweiten Vierwegeventils über den Strömungskanal mit dem Einlass der Batteriewasserpumpe (108) verbunden ist, die Batteriewasserpumpe über den Strömungskanal mit dem fünften Anschluss (1015) verbunden ist und der fünfte Anschluss mit dem Einlass der Traktionsbatterie (205) verbunden ist;
der zweite Kühlflüssigkeitseingang (1123) des Wasser-Wasser-Wärmetauschers (112) mit dem sechsten Anschluss (1016) und dem siebten Anschluss (1017) verbunden ist, der sechste Anschluss mit dem Einlass des Heizkörpers (207) verbunden ist, der siebte Anschluss mit dem Auslass der Flüssigkeitsheizung (208) verbunden ist und der sechste Anschluss mit dem siebten Anschluss verbunden ist; und
das Steuern der Ventilanordnung (110) dazu, sich in dem ersten voreingestellten Zustand zu befinden, Folgendes umfasst:
Steuern des ersten Anschlusses (c1) und des zweiten Anschlusses (c2) des ersten Vierwegeventils dazu, miteinander verbunden zu sein, Steuern des ersten Anschlusses (d1) und des dritten Anschlusses (d3) des ersten Dreiwegeventils dazu, miteinander verbunden zu sein, und Steuern des dritten Anschlusses (f3) und des vierten Anschlusses (f4) des zweiten Vierwegeventils dazu, miteinander verbunden zu sein.

13. Steuerverfahren für das Thermomanagementsystem (200) nach Anspruch 10, wobei das Thermomanagementsystem ferner eine Elektroantriebskomponente (204), einen Kühler (203) und einen Verdampfer (206) umfasst, wobei:
die integrierte Thermomanagementeinheit (100) ferner einen auf der Strömungskanalplatte (101) integrierten Wasser-Wasser-Wärmetauscher (112) umfasst und die Pumpenanordnung ferner eine Motorwasserpumpe (109) umfasst;
ein Einlass der Motorwasserpumpe (109) über den Strömungskanal mit der Ventilanordnung (110) verbunden ist, ein Auslass der Motorwasserpumpe über den Strömungskanal mit einem Einlass der Elektroantriebskomponente (204) verbunden ist, die Elektroantriebskomponente ferner mit einem Einlass des Kühlers (203) verbunden ist und ein Auslass des Kühlers mit der Ventilanordnung verbunden ist;
die Batteriekühlvorrichtung (113) und der Wasser-Wasser-Wärmetauscher (112) integriert sind und der Kühlmittelausgang (1134) der Batteriekühlvorrichtung ferner mit einem Auslass des Verdampfers (206) verbunden ist;
der Kühlflüssigkeitseingang (1131) der Batteriekühlvorrichtung (113) mit dem Auslass der Traktionsbatterie (205) verbunden ist und mit einem ersten Kühlflüssigkeitseingang (1121) und einem ersten Kühlflüssigkeitsausgang (1122) des Wasser-Wasser-Wärmetauschers (112) kommuniziert, der erste Kühlflüssigkeitsausgang des Wasser-Wasser-Wärmetauschers über den Strömungskanal mit der Ventilanordnung (110) verbunden ist, ein zweiter Kühlflüssigkeitseingang (1123) des Wasser-Wasser-Wärmetauschers über den Strömungskanal mit einem Auslass der Flüssigkeitsheizung (208) verbunden ist und ein zweiter Kühlflüssigkeitsausgang (1124) des Wasser-Wasser-Wärmetauschers über den Strömungskanal mit der Ventilanordnung verbunden ist;
ein erster Anschluss bis zu einem achten Anschluss (1011-1018) auf der Strömungskanalplatte (101) gebildet sind und die Ventilanordnung (110) ein Achtwegeventil umfasst;
ein erster Anschluss (g1) des Achtwegeventils über den Strömungskanal mit dem achten Anschluss (1018) verbunden ist und der achte Anschluss mit dem Auslass des Heizkörpers (207) verbunden ist;
ein zweiter Anschluss (g2) des Achtwegeventils über den Strömungskanal mit dem Einlass der Heizwasserpumpe (1077) verbunden ist;
ein dritter Anschluss (g3) des Achtwegeventils über den Strömungskanal mit dem ersten Anschluss (1011) verbunden ist und der erste Anschluss mit dem Auslass des Kühlers (203) verbunden ist;
ein vierter Anschluss (g4) des Achtwegeventils über den Strömungskanal mit dem zweiten Anschluss (1012) und dem dritten Anschluss (1013) verbunden ist, der zweite Anschluss mit dem Einlass des Kühlers (203) verbunden ist, der dritte Anschluss mit dem Auslass der Elektroantriebskomponente (204) verbunden ist und der zweite Anschluss mit dem dritten Anschluss verbunden ist;
ein fünfter Anschluss (g5) des Achtwegeventils über den Strömungskanal mit dem Einlass der Motorwasserpumpe (109) verbunden ist, der Auslass der Motorwasserpumpe über den Strömungskanal mit dem vierten Anschluss (1014) verbunden ist und der vierte Anschluss mit dem Einlass der Elektroantriebskomponente (204) verbunden ist;
ein sechster Anschluss (g6) des Achtwegeventils über den Strömungskanal mit dem Einlass der Batteriewasserpumpe (108) verbunden ist, die Batteriewasserpumpe über den Strömungskanal mit dem fünften Anschluss (1015) verbunden ist und der fünfte Anschluss mit dem Einlass der Traktionsbatterie (205) verbunden ist;
ein siebter Anschluss (g7) des Achtwegeventils über den Strömungskanal mit dem ersten Kühlflüssigkeitsausgang (1122) des Wasser-Wasser-Wärmetauschers (112) verbunden ist;
ein achter Anschluss (g8) des Achtwegeventils über den Strömungskanal mit dem zweiten Kühlflüssigkeitsausgang (1124) des Wasser-Wasser-Wärmetauschers (112) verbunden ist, der zweite Kühlflüssigkeitseingang (1123) des Wasser-Wasser-Wärmetauschers mit dem sechsten Anschluss (1016) und dem siebten Anschluss (1017) verbunden ist, der sechste Anschluss mit dem Einlass des Heizkörpers (207) verbunden ist, der siebte Anschluss mit dem Auslass der Flüssigkeitsheizung (208) verbunden ist und der sechste Anschluss mit dem siebten Anschluss verbunden ist; und
das Steuern der Ventilanordnung (110) dazu, sich in dem ersten voreingestellten Zustand zu befinden, Folgendes umfasst:
Steuern des ersten Anschlusses (g1) und des zweiten Anschlusses (g2) des Achtwegeventils dazu, miteinander verbunden zu sein, und Steuern des sechsten Anschlusses (g6) und des siebten Anschlusses (g7) des Achtwegeventils dazu, miteinander verbunden zu sein.

14. Fahrzeug (300), umfassend:
eine Fahrzeugkarosserie (301); und
das Thermomanagementsystem (200) nach einem der Ansprüche 1 bis 9, wobei das Thermomanagementsystem an der Fahrzeugkarosserie (301) angebracht ist.

## Revendications

1. Système de gestion thermique (200) pour un véhicule (300), comportant une batterie de traction (205), un compresseur (201), un échangeur de chaleur extérieur (202), un séparateur de gaz-liquide (209), un faisceau de chaufferette (207), une chaufferette de liquide (208) et une unité de gestion thermique intégrée (100),
dans lequel l'unité de gestion thermique intégrée est raccordée au compresseur (201), à l'échangeur de chaleur extérieur (202), au séparateur de gaz-liquide (209), au faisceau de chaufferette (207) et à la chaufferette de liquide (208), et le séparateur de gaz-liquide est raccordé à une entrée du compresseur, et l'unité de gestion thermique intégrée comporte :
une plaque à canaux d'écoulement (101) ayant une pluralité de canaux d'écoulement formés dans celle-ci ;
un ensemble formant pompe (106) et un ensemble formant soupape (110) intégrés tous les deux sur la plaque à canaux d'écoulement, dans lequel l'ensemble formant pompe comporte une pompe à eau de batterie (108) et une pompe à eau de chauffage (107), une entrée de la pompe à eau de batterie est raccordée à l'ensemble formant soupape par le biais du canal d'écoulement, une sortie de la pompe à eau de batterie est raccordée à une entrée de la batterie de traction par le biais du canal d'écoulement, et une entrée de la pompe à eau de chauffage est raccordée à l'ensemble formant soupape par le biais du canal d'écoulement ; et
un condenseur de refroidissement d'eau (111) et un refroidisseur de batterie (113) intégrés tous les deux sur la plaque à canaux d'écoulement,
dans lequel une entrée de fluide refroidisseur (1111) du condenseur de refroidissement d'eau (111) est raccordée au compresseur, une sortie de fluide refroidisseur (1112) du condenseur de refroidissement d'eau est raccordée à une entrée de l'échangeur de chaleur extérieur (202), une sortie de la pompe à eau de chauffage (107) est raccordée à une entrée de liquide de refroidissement (1113) du condenseur de refroidissement d'eau par le biais du canal d'écoulement, une sortie de liquide de refroidissement (1114) du condenseur de refroidissement d'eau est raccordée à une entrée de la chaufferette de liquide (208) par le biais du canal d'écoulement, une sortie de la chaufferette de liquide est raccordée à une entrée du faisceau de chaufferette (207), et une sortie du faisceau de chaufferette est raccordée à l'ensemble formant soupape (110), et
dans lequel une entrée de fluide refroidisseur (1133) du refroidisseur de batterie (113) est raccordée à une sortie de l'échangeur de chaleur extérieur (202), la sortie de fluide refroidisseur (1134) du refroidisseur de batterie est raccordée à une entrée du séparateur de gaz-liquide (209), l'entrée de liquide de refroidissement (1131) du refroidisseur de batterie est raccordée à une sortie de la batterie de traction (205), et la sortie de liquide de refroidissement (1132) du refroidisseur de batterie est raccordée à l'ensemble formant soupape ; et
dans lequel le système de gestion thermique a un premier mode de fonctionnement, dans lequel le compresseur (201), la pompe à eau de batterie (108), la pompe à eau de chauffage (107) et la chaufferette de liquide (208) sont démarrés, et l'ensemble formant soupape (110) est dans un premier état prédéfini ;
dans lequel, dans le premier état prédéfini, l'ensemble formant soupape (110) raccorde le refroidisseur de batterie (113) et la pompe à eau de batterie (108), et raccorde la sortie du faisceau de chaufferette (207) et l'entrée de la pompe à eau de chauffage (107), la pompe à eau de batterie transporte un liquide de refroidissement qui s'écoule au travers de la batterie de traction (205) jusqu'au refroidisseur de batterie (113), la pompe à eau de chauffage transporte le liquide de refroidissement jusqu'à la chaufferette de liquide (208), et la chaufferette de liquide chauffe le liquide de refroidissement pour transporter le liquide de refroidissement jusqu'au faisceau de chaufferette, un fluide refroidisseur est entraîné par le compresseur (201) à des fins d'écoulement au travers du condenseur de refroidissement d'eau (111) jusque dans l'échangeur de chaleur extérieur (202), où le fluide refroidisseur est refroidi pour dégivrer l'échangeur de chaleur extérieur, le fluide refroidisseur refroidi entre dans le refroidisseur de batterie et échange de la chaleur avec le liquide de refroidissement qui s'écoule au travers du refroidisseur de batterie pour absorber la chaleur et s'évaporer, et le fluide refroidisseur évaporé s'écoule jusque dans le séparateur de gaz-liquide (209) en provenance de la sortie de fluide refroidisseur du refroidisseur de batterie, dans lequel une température du liquide de refroidissement qui s'écoule au travers du condenseur de refroidissement d'eau est supérieure à une température du fluide refroidisseur qui s'écoule au travers du condenseur de refroidissement d'eau.

2. Système de gestion thermique (200) selon la revendication 1, dans lequel l'unité de gestion thermique intégrée (100) comporte par ailleurs une base de montage (115) et un premier papillon des gaz (119), la base de montage est montée d'une seule pièce sur le condenseur de refroidissement d'eau (111), une première interface de fluide refroidisseur (116) est formée sur la base de montage, la première interface de fluide refroidisseur est raccordée à la sortie de fluide refroidisseur (1112) du condenseur de refroidissement d'eau, le premier papillon des gaz est monté sur la base de montage et est raccordé en série à la première interface de fluide refroidisseur, la première interface de fluide refroidisseur est raccordée à l'entrée de l'échangeur de chaleur extérieur (202) du véhicule, et dans le premier mode de fonctionnement, le premier papillon des gaz est dans un état entièrement ouvert.

3. Système de gestion thermique (200) selon la revendication 2, comportant par ailleurs un évaporateur (206), dans lequel l'unité de gestion thermique intégrée (100) comporte par ailleurs une soupape d'arrêt (121), la soupape d'arrêt est montée sur la base de montage (115), une deuxième interface de fluide refroidisseur (117) est par ailleurs formée sur la base de montage, la deuxième interface de fluide refroidisseur est raccordée à la sortie de fluide refroidisseur (1112) du condenseur de refroidissement d'eau (111) et est raccordée en parallèle à la première interface de fluide refroidisseur (116), la soupape d'arrêt est raccordée en série à la deuxième interface de fluide refroidisseur, la soupape d'arrêt est configurée pour raccorder ou séparer la deuxième interface de fluide refroidisseur et la sortie de fluide refroidisseur du condenseur de refroidissement d'eau, la deuxième interface de fluide refroidisseur est raccordée à une entrée de l'évaporateur (206), une sortie de l'évaporateur est raccordée au séparateur de gaz-liquide (209), et dans le premier mode de fonctionnement, la soupape d'arrêt est dans un état fermé.

4. Système de gestion thermique (200) selon la revendication 3, dans lequel une troisième interface de fluide refroidisseur (118) est par ailleurs formée sur la base de montage (115) et est raccordée à la deuxième interface de fluide refroidisseur (117), une soupape de retenue (122) est montée au niveau de la troisième interface de fluide refroidisseur, une soupape d'arrêt externe (211) est agencée entre la sortie de l'échangeur de chaleur extérieur (202) et le séparateur de gaz-liquide (209), la troisième interface de fluide refroidisseur est raccordée entre la sortie de l'échangeur de chaleur extérieur et la soupape d'arrêt externe, et dans le premier mode de fonctionnement, la soupape d'arrêt externe est dans un état fermé.

5. Système de gestion thermique (200) selon la revendication 1, comportant par ailleurs un composant d'entraînement électrique (204), un radiateur (203) et un évaporateur (206), dans lequel :
l'unité de gestion thermique intégrée (100) comporte par ailleurs un échangeur de chaleur eau-eau (112) intégré sur la plaque à canaux d'écoulement (101), et l'ensemble formant pompe comporte par ailleurs une pompe à eau de moteur (109) ;
une entrée de la pompe à eau de moteur (109) est raccordée à l'ensemble formant soupape (110) par le biais du canal d'écoulement, une sortie de la pompe à eau de moteur est raccordée à une entrée du composant d'entraînement électrique (204) par le biais du canal d'écoulement, le composant d'entraînement électrique est par ailleurs raccordé à une entrée du radiateur (203), et une sortie du radiateur est raccordée à l'ensemble formant soupape ;
le refroidisseur de batterie (113) et l'échangeur de chaleur eau-eau (112) sont intégrés, et la sortie de fluide refroidisseur (1134) du refroidisseur de batterie est par ailleurs raccordée à une sortie de l'évaporateur (206) ;
l'entrée de liquide de refroidissement (1131) du refroidisseur de batterie (113) est raccordée à la sortie de la batterie de traction (205) et communique avec une première entrée de liquide de refroidissement (1121) et une première sortie de liquide de refroidissement (1122) de l'échangeur de chaleur eau-eau (112), la première sortie de liquide de refroidissement de l'échangeur de chaleur eau-eau est raccordée à l'ensemble formant soupape (110) par le biais du canal d'écoulement, une deuxième entrée de liquide de refroidissement (1123) de l'échangeur de chaleur eau-eau est raccordée à une sortie de la chaufferette de liquide (208) par le biais du canal d'écoulement, et une deuxième sortie de liquide de refroidissement (1124) de l'échangeur de chaleur eau-eau est raccordée à l'ensemble formant soupape par le biais du canal d'écoulement ;
un premier orifice jusqu'à un huitième orifice (1011-1018) sont formés sur la plaque à canaux d'écoulement (101), et l'ensemble formant soupape (110) comporte une première soupape à cinq voies (136) et une deuxième soupape à cinq voies (137) ;
un premier orifice (a1) de la première soupape à cinq voies est raccordé au huitième orifice (1018) par le biais du canal d'écoulement, et le huitième orifice est raccordé à la sortie du faisceau de chaufferette (207) ;
un deuxième orifice (a2) de la première soupape à cinq voies est raccordé à l'entrée de la pompe à eau de chauffage (107) par le biais du canal d'écoulement ;
un troisième orifice (a3) de la première soupape à cinq voies est raccordé au premier orifice (1011) par le biais du canal d'écoulement, et le premier orifice est raccordé à la sortie du radiateur (203) ;
un quatrième orifice (a4) de la première soupape à cinq voies est raccordé à un cinquième orifice (b5) de la deuxième soupape à cinq voies par le biais du canal d'écoulement ;
un cinquième orifice (a5) de la première soupape à cinq voies est raccordé à la deuxième sortie de liquide de refroidissement (1124) de l'échangeur de chaleur eau-eau (112) par le biais du canal d'écoulement ;
un premier orifice (b 1) de la deuxième soupape à cinq voies est raccordé au deuxième orifice (1012) et au troisième orifice (1013) par le biais du canal d'écoulement, le deuxième orifice est raccordé à l'entrée du radiateur (203), le troisième orifice est raccordé à la sortie du composant d'entraînement électrique (204) du véhicule, et le deuxième orifice est raccordé au troisième orifice ;
un deuxième orifice (b2) de la deuxième soupape à cinq voies est raccordé à l'entrée de la pompe à eau de moteur (109) par le biais du canal d'écoulement, la sortie de la pompe à eau de moteur est raccordée au quatrième orifice (1014) par le biais du canal d'écoulement, et le quatrième orifice est raccordé à l'entrée du composant d'entraînement électrique (204) ;
un troisième orifice (b3) de la deuxième soupape à cinq voies est raccordé à la première sortie de liquide de refroidissement (1122) de l'échangeur de chaleur eau-eau (112) par le biais du canal d'écoulement;
un quatrième orifice (b4) de la deuxième soupape à cinq voies est raccordé à l'entrée de la pompe à eau de batterie (108) par le biais du canal d'écoulement, la pompe à eau de batterie est raccordée au cinquième orifice (1015) par le biais du canal d'écoulement, et le cinquième orifice est raccordé à l'entrée de la batterie de traction (205) ;
le cinquième orifice (b5) de la deuxième soupape à cinq voies est raccordé au quatrième orifice (a4) de la première soupape à cinq voies, la deuxième entrée de liquide de refroidissement (1123) de l'échangeur de chaleur eau-eau (112) est raccordée au sixième orifice (1016) et au septième orifice (1017), le sixième orifice est raccordé à l'entrée du faisceau de chaufferette (207), le septième orifice est raccordé à la sortie de la chaufferette de liquide (208), et le sixième orifice est raccordé au septième orifice ; et
quand l'ensemble formant soupape (110) est dans le premier état prédéfini, le premier orifice (a1) et le deuxième orifice (a2) de la première soupape à cinq voies sont raccordés l'un par rapport à l'autre, et le troisième orifice (b3) et le quatrième orifice (b4) de la deuxième soupape à cinq voies sont raccordés l'un par rapport à l'autre.

6. Système de gestion thermique (200) selon la revendication 1, comportant par ailleurs un composant d'entraînement électrique (204), un radiateur (203) et un évaporateur (206), dans lequel :
l'unité de gestion thermique intégrée (100) comporte par ailleurs un échangeur de chaleur eau-eau (112) intégré sur la plaque à canaux d'écoulement (101), et l'ensemble formant pompe comporte par ailleurs une pompe à eau de moteur (109) ;
une entrée de la pompe à eau de moteur (109) est raccordée à l'ensemble formant soupape (110) par le biais du canal d'écoulement, une sortie de la pompe à eau de moteur est raccordée à une entrée du composant d'entraînement électrique (204) par le biais du canal d'écoulement, le composant d'entraînement électrique est par ailleurs raccordé à une entrée du radiateur (203), et une sortie du radiateur est raccordée à l'ensemble formant soupape ;
le refroidisseur de batterie (113) et l'échangeur de chaleur eau-eau (112) sont intégrés, et la sortie de fluide refroidisseur (1134) du refroidisseur de batterie est par ailleurs raccordée à une sortie de l'évaporateur (206) ;
l'entrée de liquide de refroidissement (1131) du refroidisseur de batterie (113) est raccordée à la sortie de la batterie de traction (205) et communique avec une première entrée de liquide de refroidissement (1121) et une première sortie de liquide de refroidissement (1122) de l'échangeur de chaleur eau-eau (112), la première sortie de liquide de refroidissement de l'échangeur de chaleur eau-eau est raccordée à l'ensemble formant soupape (110) par le biais du canal d'écoulement, une deuxième entrée de liquide de refroidissement (1123) de l'échangeur de chaleur eau-eau est raccordée à une sortie de la chaufferette de liquide (208) par le biais du canal d'écoulement, et une deuxième sortie de liquide de refroidissement (1124) de l'échangeur de chaleur eau-eau est raccordée à l'ensemble formant soupape par le biais du canal d'écoulement ;
un premier orifice jusqu'à un huitième orifice (1011-1018) sont formés sur la plaque à canaux d'écoulement (101), et l'ensemble formant soupape (110) comporte une première soupape à quatre voies (138), une deuxième soupape à quatre voies (139), une première soupape à trois voies (140) et une deuxième soupape à trois voies (141) ;
un premier orifice (c1) de la première soupape à quatre voies est raccordé à un troisième orifice (d3) de la première soupape à trois voies, un premier orifice (d1) de la première soupape à trois voies est raccordé au huitième orifice (1018) par le biais du canal d'écoulement, et un deuxième orifice (d2) de la première soupape à trois voies est raccordé à la deuxième sortie de liquide de refroidissement (1124) de l'échangeur de chaleur eau-eau (112) par le biais du canal d'écoulement ;
un deuxième orifice (c2) de la première soupape à quatre voies est raccordé à l'entrée de la pompe à eau de chauffage (107) par le biais du canal d'écoulement ;
un troisième orifice (c3) de la première soupape à quatre voies est raccordé au premier orifice (1011) par le biais du canal d'écoulement, et le premier orifice est raccordé à la sortie du radiateur (203) ;
un quatrième orifice (c4) de la première soupape à quatre voies est raccordé à un deuxième orifice (e2) de la deuxième soupape à trois voies par le biais du canal d'écoulement ;
un premier orifice (e1) de la deuxième soupape à trois voies est raccordé au deuxième orifice (1012) et au troisième orifice (1013) par le biais du canal d'écoulement, le deuxième orifice est raccordé à l'entrée du radiateur (203), le troisième orifice est raccordé à la sortie du composant d'entraînement électrique (204), et le deuxième orifice est raccordé au troisième orifice ;
un troisième orifice (e3) de la deuxième soupape à trois voies est raccordé à un premier orifice (f1) de la deuxième soupape à quatre voies,
un deuxième orifice (f2) de la deuxième soupape à quatre voies est raccordé à l'entrée de la pompe à eau de moteur (109) par le biais du canal d'écoulement, la sortie de la pompe à eau de moteur est raccordée au quatrième orifice (1014) par le biais du canal d'écoulement, et le quatrième orifice est raccordé à l'entrée du composant d'entraînement électrique (204) ;
un troisième orifice (f3) de la deuxième soupape à quatre voies est raccordé à la première sortie de liquide de refroidissement (1122) de l'échangeur de chaleur eau-eau (112) par le biais du canal d'écoulement ;
un quatrième orifice (f4) de la deuxième soupape à quatre voies est raccordé à l'entrée de la pompe à eau de batterie (108) par le biais du canal d'écoulement, la pompe à eau de batterie est raccordée au cinquième orifice (1015) par le biais du canal d'écoulement, et le cinquième orifice est raccordé à l'entrée de la batterie de traction (205) ;
la deuxième entrée de liquide de refroidissement (1123) de l'échangeur de chaleur eau-eau (112) est raccordée au sixième orifice (1016) et au septième orifice (1017), le sixième orifice est raccordé à l'entrée du faisceau de chaufferette (207), le septième orifice est raccordé à la sortie de la chaufferette de liquide (208), et le sixième orifice est raccordé au septième orifice ; et
quand l'ensemble formant soupape (110) est dans le premier état prédéfini, le premier orifice (c1) et le deuxième orifice (c2) de la première soupape à quatre voies sont raccordés l'un par rapport à l'autre, le premier orifice (d1) et le troisième orifice (d3) de la première soupape à trois voies sont raccordés l'un par rapport à l'autre, et le troisième orifice (f3) et le quatrième orifice (f4) de la deuxième soupape à quatre voies sont raccordés l'un par rapport à l'autre.

7. Système de gestion thermique (200) selon la revendication 1, comportant par ailleurs un composant d'entraînement électrique (204), un radiateur (203) et un évaporateur (206), dans lequel :
l'unité de gestion thermique intégrée (100) comporte par ailleurs un échangeur de chaleur eau-eau (112) intégré sur la plaque à canaux d'écoulement (101), et l'ensemble formant pompe comporte par ailleurs une pompe à eau de moteur (109) ;
une entrée de la pompe à eau de moteur (109) est raccordée à l'ensemble formant soupape (110) par le biais du canal d'écoulement, une sortie de la pompe à eau de moteur est raccordée à une entrée du composant d'entraînement électrique (204) par le biais du canal d'écoulement, le composant d'entraînement électrique est par ailleurs raccordé à une entrée du radiateur (203), et une sortie du radiateur est raccordée à l'ensemble formant soupape ;
le refroidisseur de batterie (113) et l'échangeur de chaleur eau-eau (112) sont intégrés, et la sortie de fluide refroidisseur (1134) du refroidisseur de batterie est par ailleurs raccordée à une sortie de l'évaporateur (206) ;
l'entrée de liquide de refroidissement (1131) du refroidisseur de batterie (113) est raccordée à la sortie de la batterie de traction (205) et communique avec une première entrée de liquide de refroidissement (1121) et une première sortie de liquide de refroidissement (1122) de l'échangeur de chaleur eau-eau (112), la première sortie de liquide de refroidissement de l'échangeur de chaleur eau-eau est raccordée à l'ensemble formant soupape (110) par le biais du canal d'écoulement, une deuxième entrée de liquide de refroidissement (1123) de l'échangeur de chaleur eau-eau est raccordée à une sortie de la chaufferette de liquide (208) par le biais du canal d'écoulement, et une deuxième sortie de liquide de refroidissement (1124) de l'échangeur de chaleur eau-eau est raccordée à l'ensemble formant soupape par le biais du canal d'écoulement ;
un premier orifice jusqu'à un huitième orifice (1011-1018) sont formés sur la plaque à canaux d'écoulement (101), et l'ensemble formant soupape (110) comporte une soupape à huit voies (142) ;
un premier orifice (g1) de la soupape à huit voies est raccordé au huitième orifice (1018) par le biais du canal d'écoulement, et le huitième orifice est raccordé à la sortie du faisceau de chaufferette (207) ;
un deuxième orifice (g2) de la soupape à huit voies est raccordé à l'entrée de la pompe à eau de chauffage (107) par le biais du canal d'écoulement ;
un troisième orifice (g3) de la soupape à huit voies est raccordé au premier orifice (1011) par le biais du canal d'écoulement, et le premier orifice est raccordé à la sortie du radiateur (203) ;
un quatrième orifice (g4) de la soupape à huit voies est raccordé au deuxième orifice (1012) et au troisième orifice (1013) par le biais du canal d'écoulement, le deuxième orifice est raccordé à l'entrée du radiateur (203), le troisième orifice est raccordé à la sortie du composant d'entraînement électrique (204), et le deuxième orifice est raccordé au troisième orifice ;
un cinquième orifice (g5) de la soupape à huit voies est raccordé à l'entrée de la pompe à eau de moteur (109) par le biais du canal d'écoulement, la sortie de la pompe à eau de moteur est raccordée au quatrième orifice (1014) par le biais du canal d'écoulement, et le quatrième orifice est raccordé à l'entrée du composant d'entraînement électrique (204) ;
un sixième orifice (g6) de la soupape à huit voies est raccordé à l'entrée de la pompe à eau de batterie (108) par le biais du canal d'écoulement, la pompe à eau de batterie est raccordée au cinquième orifice (1015) par le biais du canal d'écoulement, et le cinquième orifice est raccordé à l'entrée de la batterie de traction (205) ;
un septième orifice (g7) de la soupape à huit voies est raccordé à la première sortie de liquide de refroidissement (1122) de l'échangeur de chaleur eau-eau (112) par le biais du canal d'écoulement ;
un huitième orifice (g8) de la soupape à huit voies est raccordé à la deuxième sortie de liquide de refroidissement (1124) de l'échangeur de chaleur eau-eau (112) par le biais du canal d'écoulement, la deuxième entrée de liquide de refroidissement (1123) de l'échangeur de chaleur eau-eau est raccordée au sixième orifice (1016) et au septième orifice (1017), le sixième orifice est raccordé à l'entrée du faisceau de chaufferette (207), le septième orifice est raccordé à la sortie de la chaufferette de liquide (208), et le sixième orifice est raccordé au septième orifice ; et
quand l'ensemble formant soupape (110) est dans le premier état prédéfini, le premier orifice (g1) et le deuxième orifice (g2) de la soupape à huit voies sont raccordés l'un par rapport à l'autre, et le sixième orifice (g6) et le septième orifice (g7) de la soupape à huit voies sont raccordés l'un par rapport à l'autre.

8. Système de gestion thermique (200) selon la revendication 1, dans lequel l'unité de gestion thermique intégrée (100) comporte par ailleurs un deuxième papillon des gaz (120) et une sonde de température (124), le deuxième papillon des gaz et la sonde de température sont intégrés tous les deux sur le refroidisseur de batterie (113), le deuxième papillon des gaz est situé au niveau de l'entrée de fluide refroidisseur (1133) du refroidisseur de batterie, la sonde de température est située au niveau de la sortie de fluide refroidisseur (1134, 1135) du refroidisseur de batterie, et dans le premier mode de fonctionnement, le deuxième papillon des gaz est dans un état étranglé.

9. Système de gestion thermique (200) selon la revendication 1, dans lequel le système de gestion thermique a par ailleurs un deuxième mode de fonctionnement ; dans le deuxième mode de fonctionnement, le compresseur (201) et la pompe à eau de batterie (108) sont éteints, la pompe à eau de chauffage (107) et la chaufferette de liquide (208) fonctionnent, l'ensemble formant soupape (110) est dans un deuxième état prédéfini, la pompe à eau de chauffage transporte le liquide de refroidissement jusqu'à la chaufferette de liquide, et la chaufferette de liquide chauffe le liquide de refroidissement pour transporter le liquide de refroidissement jusqu'au faisceau de chaufferette (207) pour chauffer un habitacle de passagers du véhicule (300).

10. Procédé de commande pour le système de gestion thermique (200) selon la revendication 1, dans lequel :
le procédé de commande pour le système de gestion thermique comporte les étapes consistant à :
déterminer (S 10) si l'échangeur de chaleur extérieur (202) est gelé ; et
quand l'échangeur de chaleur extérieur est gelé, commander le démarrage (S20) du compresseur (201), de la pompe à eau de batterie (108), de la pompe à eau de chauffage (107) et de la chaufferette de liquide (208) et amener l'ensemble formant soupape (110) à se mettre dans le premier état prédéfini, pour amener le système de gestion thermique (200) à passer dans le premier mode de fonctionnement, de manière à dégivrer l'échangeur de chaleur extérieur (202).

11. Procédé de commande pour le système de gestion thermique (200) selon la revendication 10, dans lequel le système de gestion thermique comporte par ailleurs un composant d'entraînement électrique (204), un radiateur (203) et un évaporateur (206), dans lequel :
l'unité de gestion thermique intégrée (100) comporte par ailleurs un échangeur de chaleur eau-eau (112) intégré sur la plaque à canaux d'écoulement (101), et l'ensemble formant pompe comporte par ailleurs une pompe à eau de moteur (109) ;
une entrée de la pompe à eau de moteur (109) est raccordée à l'ensemble formant soupape (110) par le biais du canal d'écoulement, une sortie de la pompe à eau de moteur est raccordée à une entrée du composant d'entraînement électrique (204) par le biais du canal d'écoulement, le composant d'entraînement électrique est par ailleurs raccordé à une entrée du radiateur (203), et une sortie du radiateur est raccordée à l'ensemble formant soupape ;
le refroidisseur de batterie (113) et l'échangeur de chaleur eau-eau (112) sont intégrés, et la sortie de fluide refroidisseur (1134) du refroidisseur de batterie est par ailleurs raccordée à une sortie de l'évaporateur (206) ;
l'entrée de liquide de refroidissement (1131) du refroidisseur de batterie (113) est raccordée à la sortie de la batterie de traction (205) et communique avec une première entrée de liquide de refroidissement (1121) et une première sortie de liquide de refroidissement (1122) de l'échangeur de chaleur eau-eau (112), la première sortie de liquide de refroidissement de l'échangeur de chaleur eau-eau est raccordée à l'ensemble formant soupape (110) par le biais du canal d'écoulement, une deuxième entrée de liquide de refroidissement (1123) de l'échangeur de chaleur eau-eau est raccordée à une sortie de la chaufferette de liquide (208) par le biais du canal d'écoulement, et une deuxième sortie de liquide de refroidissement (1124) de l'échangeur de chaleur eau-eau est raccordée à l'ensemble formant soupape par le biais du canal d'écoulement ;
un premier orifice jusqu'à un huitième orifice (1011-1018) sont formés sur la plaque à canaux d'écoulement (101), et l'ensemble formant soupape (110) comporte une première soupape à cinq voies (136) et une deuxième soupape à cinq voies (137) ;
un premier orifice (a1) de la première soupape à cinq voies est raccordé au huitième orifice (1018) par le biais du canal d'écoulement, et le huitième orifice est raccordé à la sortie du faisceau de chaufferette (207) ;
un deuxième orifice (a2) de la première soupape à cinq voies est raccordé à l'entrée de la pompe à eau de chauffage (107) par le biais du canal d'écoulement ;
un troisième orifice (a3) de la première soupape à cinq voies est raccordé au premier orifice (1011) par le biais du canal d'écoulement, et le premier orifice est raccordé à la sortie du radiateur (203) ;
un quatrième orifice (a4) de la première soupape à cinq voies est raccordé à un cinquième orifice (b5) de la deuxième soupape à cinq voies par le biais du canal d'écoulement ;
un cinquième orifice (a5) de la première soupape à cinq voies est raccordé à la deuxième sortie de liquide de refroidissement (1124) de l'échangeur de chaleur eau-eau (112) par le biais du canal d'écoulement ;
un premier orifice (b1) de la deuxième soupape à cinq voies est raccordé au deuxième orifice (1012) et au troisième orifice (1013) par le biais du canal d'écoulement, le deuxième orifice est raccordé à l'entrée du radiateur (203), le troisième orifice est raccordé à la sortie du composant d'entraînement électrique (204) du véhicule, et le deuxième orifice est raccordé au troisième orifice ;
un deuxième orifice (b2) de la deuxième soupape à cinq voies est raccordé à l'entrée de la pompe à eau de moteur (109) par le biais du canal d'écoulement, la sortie de la pompe à eau de moteur est raccordée au quatrième orifice (1014) par le biais du canal d'écoulement, et le quatrième orifice est raccordé à l'entrée du composant d'entraînement électrique (204) ;
un troisième orifice (b3) de la deuxième soupape à cinq voies est raccordé à la première sortie de liquide de refroidissement (1122) de l'échangeur de chaleur eau-eau (112) par le biais du canal d'écoulement;
un quatrième orifice (b4) de la deuxième soupape à cinq voies est raccordé à l'entrée de la pompe à eau de batterie (108) par le biais du canal d'écoulement, la pompe à eau de batterie est raccordée au cinquième orifice (1015) par le biais du canal d'écoulement, et le cinquième orifice est raccordé à l'entrée de la batterie de traction (205) ;
le cinquième orifice (b5) de la deuxième soupape à cinq voies est raccordé au quatrième orifice (a4) de la première soupape à cinq voies, la deuxième entrée de liquide de refroidissement (1123) de l'échangeur de chaleur eau-eau (112) est raccordée au sixième orifice (1016) et au septième orifice (1017), le sixième orifice est raccordé à l'entrée du faisceau de chaufferette (207), le septième orifice est raccordé à la sortie de la chaufferette de liquide (208), et le sixième orifice est raccordé au septième orifice ; et
l'étape consistant à commander l'ensemble formant soupape (110) pour l'amener à se mettre dans le premier état prédéfini comporte les étapes consistant à :
commander le premier orifice (a1) et le deuxième orifice (a2) de la première soupape à cinq voies pour les amener à se raccorder l'un par rapport à l'autre, et commander le troisième orifice (b3) et le quatrième orifice (b4) de la deuxième soupape à cinq voies pour les amener à se raccorder l'un par rapport à l'autre.

12. Procédé de commande pour le système de gestion thermique (200) selon la revendication 10, dans lequel le système de gestion thermique comporte par ailleurs un composant d'entraînement électrique (204), un radiateur (203) et un évaporateur (206), dans lequel :
l'unité de gestion thermique intégrée (100) comporte par ailleurs un échangeur de chaleur eau-eau (112) intégré sur la plaque à canaux d'écoulement (101), et l'ensemble formant pompe comporte par ailleurs une pompe à eau de moteur (109) ;
une entrée de la pompe à eau de moteur (109) est raccordée à l'ensemble formant soupape (110) par le biais du canal d'écoulement, une sortie de la pompe à eau de moteur est raccordée à une entrée du composant d'entraînement électrique (204) par le biais du canal d'écoulement, le composant d'entraînement électrique est par ailleurs raccordé à une entrée du radiateur (203), et une sortie du radiateur est raccordée à l'ensemble formant soupape ;
le refroidisseur de batterie (113) et l'échangeur de chaleur eau-eau (112) sont intégrés, et la sortie de fluide refroidisseur (1134) du refroidisseur de batterie est par ailleurs raccordée à une sortie de l'évaporateur (206) ;
l'entrée de liquide de refroidissement (1131) du refroidisseur de batterie (113) est raccordée à la sortie de la batterie de traction (205) et communique avec une première entrée de liquide de refroidissement (1121) et une première sortie de liquide de refroidissement (1122) de l'échangeur de chaleur eau-eau (112), la première sortie de liquide de refroidissement de l'échangeur de chaleur eau-eau est raccordée à l'ensemble formant soupape (110) par le biais du canal d'écoulement, une deuxième entrée de liquide de refroidissement (1123) de l'échangeur de chaleur eau-eau est raccordée à une sortie de la chaufferette de liquide (208) par le biais du canal d'écoulement, et une deuxième sortie de liquide de refroidissement (1124) de l'échangeur de chaleur eau-eau est raccordée à l'ensemble formant soupape par le biais du canal d'écoulement ;
un premier orifice jusqu'à un huitième orifice (1011-1018) sont formés sur la plaque à canaux d'écoulement (101), et l'ensemble formant soupape (110) comporte une première soupape à quatre voies (138), une deuxième soupape à quatre voies (139), une première soupape à trois voies (140) et une deuxième soupape à trois voies (141) ;
un premier orifice (c1) de la première soupape à quatre voies est raccordé à un troisième orifice (d3) de la première soupape à trois voies, un premier orifice (d1) de la première soupape à trois voies est raccordé au huitième orifice (1018) par le biais du canal d'écoulement, et un deuxième orifice (d2) de la première soupape à trois voies est raccordé à la deuxième sortie de liquide de refroidissement (1124) de l'échangeur de chaleur eau-eau (112) par le biais du canal d'écoulement ;
un deuxième orifice (c2) de la première soupape à quatre voies est raccordé à l'entrée de la pompe à eau de chauffage (107) par le biais du canal d'écoulement ;
un troisième orifice (c3) de la première soupape à quatre voies est raccordé au premier orifice (1011) par le biais du canal d'écoulement, et le premier orifice est raccordé à la sortie du radiateur (203) ;
un quatrième orifice (c4) de la première soupape à quatre voies est raccordé à un deuxième orifice (e2) de la deuxième soupape à trois voies par le biais du canal d'écoulement ;
un premier orifice (e1) de la deuxième soupape à trois voies est raccordé au deuxième orifice (1012) et au troisième orifice (1013) par le biais du canal d'écoulement, le deuxième orifice est raccordé à l'entrée du radiateur (203), le troisième orifice est raccordé à la sortie du composant d'entraînement électrique (204), et le deuxième orifice est raccordé au troisième orifice ;
un troisième orifice (e3) de la deuxième soupape à trois voies est raccordé à un premier orifice (f1) de la deuxième soupape à quatre voies,
un deuxième orifice (f2) de la deuxième soupape à quatre voies est raccordé à l'entrée de la pompe à eau de moteur (109) par le biais du canal d'écoulement, la sortie de la pompe à eau de moteur est raccordée au quatrième orifice (1014) par le biais du canal d'écoulement, et le quatrième orifice est raccordé à l'entrée du composant d'entraînement électrique (204) ;
un troisième orifice (f3) de la deuxième soupape à quatre voies est raccordé à la première sortie de liquide de refroidissement (1122) de l'échangeur de chaleur eau-eau (112) par le biais du canal d'écoulement ;
un quatrième orifice (f3) de la deuxième soupape à quatre voies est raccordé à l'entrée de la pompe à eau de batterie (108) par le biais du canal d'écoulement, la pompe à eau de batterie est raccordée au cinquième orifice (1015) par le biais du canal d'écoulement, et le cinquième orifice est raccordé à l'entrée de la batterie de traction (205) ;
la deuxième entrée de liquide de refroidissement (1123) de l'échangeur de chaleur eau-eau (112) est raccordée au sixième orifice (1016) et au septième orifice (1017), le sixième orifice est raccordé à l'entrée du faisceau de chaufferette (207), le septième orifice est raccordé à la sortie de la chaufferette de liquide (208), et le sixième orifice est raccordé au septième orifice ; et
l'étape consistant à commander l'ensemble formant soupape (110) pour l'amener à se mettre dans le premier état prédéfini comporte les étapes consistant à :
commander le premier orifice (c1) et le deuxième orifice (c2) de la première soupape à quatre voies pour les amener à se raccorder l'un par rapport à l'autre, commander le premier orifice (d1) et le troisième orifice (d3) de la première soupape à trois voies pour les amener à se raccorder l'un par rapport à l'autre, et commander le troisième orifice (f3) et le quatrième orifice (f4) de la deuxième soupape à quatre voies pour les amener à se raccorder l'un par rapport à l'autre.

13. Procédé de commande pour le système de gestion thermique (200) selon la revendication 10, dans lequel le système de gestion thermique comporte par ailleurs un composant d'entraînement électrique (204), un radiateur (203) et un évaporateur (206), dans lequel :
l'unité de gestion thermique intégrée (100) comporte par ailleurs un échangeur de chaleur eau-eau (112) intégré sur la plaque à canaux d'écoulement (101), et l'ensemble formant pompe comporte par ailleurs une pompe à eau de moteur (109) ;
une entrée de la pompe à eau de moteur (109) est raccordée à l'ensemble formant soupape (110) par le biais du canal d'écoulement, une sortie de la pompe à eau de moteur est raccordée à une entrée du composant d'entraînement électrique (204) par le biais du canal d'écoulement, le composant d'entraînement électrique est par ailleurs raccordé à une entrée du radiateur (203), et une sortie du radiateur est raccordée à l'ensemble formant soupape ;
le refroidisseur de batterie (113) et l'échangeur de chaleur eau-eau (112) sont intégrés, et la sortie de fluide refroidisseur (1134) du refroidisseur de batterie est par ailleurs raccordée à une sortie de l'évaporateur (206) ;
l'entrée de liquide de refroidissement (1131) du refroidisseur de batterie (113) est raccordée à la sortie de la batterie de traction (205) et communique avec une première entrée de liquide de refroidissement (1121) et une première sortie de liquide de refroidissement (1122) de l'échangeur de chaleur eau-eau (112), la première sortie de liquide de refroidissement de l'échangeur de chaleur eau-eau est raccordée à l'ensemble formant soupape (110) par le biais du canal d'écoulement, une deuxième entrée de liquide de refroidissement (1123) de l'échangeur de chaleur eau-eau est raccordée à une sortie de la chaufferette de liquide (208) par le biais du canal d'écoulement, et une deuxième sortie de liquide de refroidissement (1124) de l'échangeur de chaleur eau-eau est raccordée à l'ensemble formant soupape par le biais du canal d'écoulement ;
un premier orifice jusqu'à un huitième orifice (1011-1018) sont formés sur la plaque à canaux d'écoulement (101), et l'ensemble formant soupape (110) comporte une soupape à huit voies ;
un premier orifice (g1) de la soupape à huit voies est raccordé au huitième orifice (1018) par le biais du canal d'écoulement, et le huitième orifice est raccordé à la sortie du faisceau de chaufferette (207) ;
un deuxième orifice (g2) de la soupape à huit voies est raccordé à l'entrée de la pompe à eau de chauffage (1077) par le biais du canal d'écoulement ;
un troisième orifice (g3) de la soupape à huit voies est raccordé au premier orifice (1011) par le biais du canal d'écoulement, et le premier orifice est raccordé à la sortie du radiateur (203) ;
un quatrième orifice (g4) de la soupape à huit voies est raccordé au deuxième orifice (1012) et au troisième orifice (1013) par le biais du canal d'écoulement, le deuxième orifice est raccordé à l'entrée du radiateur (203), le troisième orifice est raccordé à la sortie du composant d'entraînement électrique (204), et le deuxième orifice est raccordé au troisième orifice ;
un cinquième orifice (g5) de la soupape à huit voies est raccordé à l'entrée de la pompe à eau de moteur (109) par le biais du canal d'écoulement, la sortie de la pompe à eau de moteur est raccordée au quatrième orifice (1014) par le biais du canal d'écoulement, et le quatrième orifice est raccordé à l'entrée du composant d'entraînement électrique (204) ;
un sixième orifice (g6) de la soupape à huit voies est raccordé à l'entrée de la pompe à eau de batterie (108) par le biais du canal d'écoulement, la pompe à eau de batterie est raccordée au cinquième orifice (1015) par le biais du canal d'écoulement, et le cinquième orifice est raccordé à l'entrée de la batterie de traction (205) ;
un septième orifice (g7) de la soupape à huit voies est raccordé à la première sortie de liquide de refroidissement (1122) de l'échangeur de chaleur eau-eau (112) par le biais du canal d'écoulement ;
un huitième orifice (g8) de la soupape à huit voies est raccordé à la deuxième sortie de liquide de refroidissement (1124) de l'échangeur de chaleur eau-eau (112) par le biais du canal d'écoulement, la deuxième entrée de liquide de refroidissement (1123) de l'échangeur de chaleur eau-eau est raccordée au sixième orifice (1016) et au septième orifice (1017), le sixième orifice est raccordé à l'entrée du faisceau de chaufferette (207), le septième orifice est raccordé à la sortie de la chaufferette de liquide (208), et le sixième orifice est raccordé au septième orifice ; et
l'étape consistant à commander l'ensemble formant soupape (110) pour l'amener à se mettre dans le premier état prédéfini comporte les étapes consistant à :
commander le premier orifice (g1) et le deuxième orifice (g2) de la soupape à huit voies pour les amener à se raccorder l'un par rapport à l'autre, et commander le sixième orifice (g6) et le septième orifice (g7) de la soupape à huit voies pour les amener à se raccorder l'un par rapport à l'autre.

14. Véhicule (300), comportant :
une carrosserie de véhicule (301) ; et
le système de gestion thermique (200) selon l'une quelconque des revendications 1 à 9, dans lequel le système de gestion thermique est monté sur la carrosserie de véhicule (301).
